# EUROPEAN PATENT APPLICATION

(11) **EP 4 682 119 A1**
(43) Date of publication of application: **21.01.2026**
(21) Application number: 24770688.0
(22) Date of filing: 07.03.2024
(51) Int. Cl.: C03B 33/03, B26F 3/00, B28D 5/00, C03B 33/033, C03B 33/04

(54) **SNAPPING DEVICE**

(30) Priority: 13.03.2023 JP 2023038480
(71) Applicant: BANDO KIKO CO., LTD., Tokushima 770-0871 (JP)
(72) Inventor: BANDO Kazuaki, Tokushima-shi, Tokushima 770-0871 (JP)
(74) Representative: Ashton, Gareth Mark
(86) International application number: PCT/JP2024/008667
(87) International publication number: WO 2024/190582

(57) **Abstract**

There is provided a bend-breaking device capable of transmitting bend-breaking of a glass plate from an outline cutting-out line toward an end cutting line in bend-breaking processing and capable of smoothly and reliably bend-breaking an entire circumferential edge area outside of the outline cutting-out line of the glass plate.

The bend-breaking device moves a bend-breaking jig from an end cutting line formation start point 135a on an outer circumferential edge of an outer circumferential area 56b of a glass plate 11 or in the vicinity thereof toward an end cutting line formation end point 135c in the vicinity outside of an outline cutting-out line K1, and forms, at an end cutting line formation position in the circumferential edge area 56b of the glass plate 11, an end cutting line K2 extending from the end cutting line formation start point 135a toward the end cutting line formation end point 135c. The end cutting line formation start point 135a is a point on the outer circumferential edge of the outer circumferential area 56b of the glass plate 11, a position at a very short distance inward from the outer circumferential edge of the outer circumferential area 56b, or a position at a very short distance outward from the outer circumferential edge of the outer circumferential area 56b, and the end cutting line formation end point 135c is a position at a very short distance outward from the outline cutting-out line K1.

## Description

### Technical Field

The present invention relates to a bend-breaking device that forms an end cutting line in a circumferential edge area of a glass plate which is a processing target, such as a motor vehicle window glass plate or an LCD glass plate, and bend-breaks the circumferential edge area of the glass plate on which the end cutting line is formed.

### Background Art

A glass plate processing system including a loading conveyor that loads a glass plate, a cutting-in processing area positioned in front of the loading conveyor, a bend-breaking processing area positioned in front of the cutting-in processing area, a grinding processing area positioned in front of the bend-breaking processing area, an unloading conveyor positioned in front of the grinding processing area, and a conveyance mechanism that conveys the glass plate from the loading conveyor to each of the processing areas has been disclosed (see Patent Literature 1).

The cutting-in processing area of the glass plate processing system includes a cutting-in processing table having a first moving mechanism that moves in a width direction thereof in a state in which the positioned glass plate is placed thereon, and a cutting-in device that is movable in a front-rear direction. In the cutting-in processing area, after the cutting-in device moves rearward in the front-rear direction toward radially outside of a circumferential edge area of the glass plate placed on the cutting-in processing table, the first moving mechanism moves the cutting-in processing table in the width direction toward the cutting-in device, and an outline cutting-out line is formed on the glass plate placed on the cutting-in processing table by using the cutting-in device. The bend-breaking processing area includes a bend-breaking processing table on which the glass plate subjected to cutting-in processing is placed, and a bend-breaking device that is movable in the front-rear direction and the width direction. In the bend-breaking processing area, after the bend-breaking device moves rearward in the front-rear direction toward the bend-breaking processing table, an end cutting line (scribe) is formed at an end cutting line formation position of the circumferential edge area of the glass plate placed on the bend-breaking processing table, and the circumferential edge area outside of the outline cutting-out line of the glass plate is bend-broken by using the bend-breaking device.

The grinding processing area includes a grinding processing table having a second moving mechanism that moves in the width direction in a state in which the positioned glass plate main body subjected to the bend-breaking processing is placed thereon, and a grinding device that is movable in the front-rear direction. In the grinding processing area, after the grinding device moves rearward in a front-rear direction toward radially outside of a circumferential edge of the glass plate main body placed on the grinding processing table, the second moving mechanism moves the grinding processing table in the width direction toward the grinding device, and the circumferential edge of the glass plate main body placed on the grinding processing table is ground using the grinding device. Note that the cutting-in processing and grinding processing are performed synchronously.

### Citation List

### Patent Literature

Patent Literature 1: JP 2020-040877 A

### Summary of Invention

### Technical Problem

The bend-breaking device of the glass plate processing system disclosed in Patent Literature 1 includes a bend-breaking jig, a first lifting/lowering mechanism (air cylinder), a pressing roller, and a second lifting/lowering mechanism (air cylinder). The bend-breaking jig includes a bend-breaking cutter wheel that forms an end cutting line at a predetermined end cutting line formation position in the circumferential edge area of a glass plate, and a bend-breaking cutter holder that is positioned above the bend-breaking cutter wheel and supports the bend-breaking cutter wheel. The bend-breaking cutter holder includes a holder main body having a coupling portion, and a holder head attached to a distal end of the holder main body. The bend-breaking cutter holder is rotated in a direction around a cutter holder center axis line (around an axis) extending in an up-down direction by rotation of a θ-axis servomotor.

The holder head is coupled to the holder main body via a bearing, and is rotatable in the direction (θ direction) around the cutter holder center axis line of the bend-breaking cutter holder. A rotation angle restricting pin that restricts rotation of the holder head in the direction around the cutter holder center axis line is inserted into the holder main body. The rotation angle restricting pin restricts the rotation of the holder head in the direction around the cutter holder center axis line to 5° to 10°. The bend-breaking cutter wheel is rotatably attached to a distal end of the holder head via a rolling shaft. The bend-breaking cutter wheel has a cutter wheel axis line which extends in the up-down direction and is eccentric outward in a radial direction with respect to a cutter holder center axis line of the holder main body.

The bend-breaking processing in the glass plate processing system disclosed in Patent Literature 1 is as follows. The bend-breaking jig and the pressing roller of the bend-breaking device are moved in the front-rear direction (X direction) and the width direction (Y direction) by an X-axis actuator and a Y-axis actuator, the bend-breaking cutter wheel of the bend-breaking jig is positioned in the vicinity of the outer side of the outline cutting-out line of the glass plate, and the pressing roller is positioned in the circumferential edge area outside of the outline cutting-out line of the glass plate. Next, the rotation of the θ-axis servomotor causes the bend-breaking cutter holder to rotate in the direction (θ-direction) around the cutter holder center axis line, and a rolling direction of the bend-breaking cutter wheel is changed to an extending direction of an imaginary end cutting line in the circumferential edge area of the glass plate (a moving direction of the bend-breaking jig).

After the rolling direction of the bend-breaking cutter wheel becomes the same as the extending direction of the imaginary end cutting line (the moving direction of the bend-breaking jig), the first lifting/lowering mechanism lowers the bend-breaking jig toward an upper surface of the glass plate and the vicinity of the outer side of the outline cutting-out line, and the bend-breaking cutter wheel comes into contact with the upper surface of the glass plate and the vicinity of the outer side of the outline cutting-out line. Next, the bend-breaking device linearly moves from an end cutting line formation start point in the vicinity of the outer side of the outline cutting-out line of the glass plate toward an end cutting line formation end point of a circumferential edge of the glass plate, and forms an end cutting line at an end cutting line formation position of the circumferential edge area of the glass plate by the bend-breaking cutter wheel. After the end cutting line is formed at the end cutting line formation position of the circumferential edge area of the glass plate, the bend-breaking jig of the bend-breaking device moves to a predetermined position in the circumferential edge area of the glass plate. Next, the second lifting/lowering mechanism lowers the pressing roller toward the upper surface of the glass plate, and the pressing roller in contact with the upper surface of the glass plate presses the circumferential edge area of the glass plate downward, thereby bend-breaking the circumferential edge area extending from the main body of the glass plate to the outer side of the outline cutting-out line of the glass plate.

In the bend-breaking processing in the glass plate processing system disclosed in Patent Literature 1, the end cutting line is formed from the end cutting line formation start point in the vicinity of the outer side of the outline cutting-out line of the glass plate toward the circumferential edge of the glass plate, but the end cutting line has a shallow depth at the end cutting line formation start point, and when the circumferential edge area is bend-broken by the pressing roller, bend-breaking of the glass plate may be transmitted from the circumferential edge of the glass plate which is the end cutting line formation end point of the end cutting line toward the end cutting line formation start point and to the outline cutting-out line, so that the circumferential edge area of the glass plate may be insufficiently bend-broken, and a raised edge (burr) which is not bend-broken may be produced in the vicinity of the outer side of the outline cutting-out line in the circumferential edge area of the glass plate.

In addition, the rotation of the θ-axis servomotor causes the rolling direction of the bend-breaking cutter wheel to be changed to the direction (moving direction of the bend-breaking jig) in which the imaginary end cutting line extends from the end cutting line formation start point toward the end cutting line formation end point in the circumferential edge area of the glass plate. However, it is necessary to install the θ-axis servomotor and a transmission member (a pulley, a belt, or the like) that transmits a rotational force of the θ-axis servomotor to the bend-breaking cutter holder in the glass plate processing system, and it is not possible to reduce the size, energy consumption, or costs of the system. Further, in the bend-breaking processing, it is necessary to rotate the θ-axis servomotor to cause the rolling direction of the bend-breaking cutter wheel to become the same as the extending direction of the imaginary end cutting line of the circumferential edge area of the glass plate (the moving direction of the bend-breaking jig), and it is necessary to change the rolling direction of the bend-breaking cutter wheel by using the θ-axis servomotor whenever the end cutting line is formed. Hence, it is not possible to shorten the time for the bend-breaking processing and improve the efficiency thereof.

An object of the present invention is to provide a bend-breaking device capable of transmitting bend-breaking of a glass plate from an outline cutting-out line toward an end cutting line in bend-breaking processing and capable of smoothly and reliably bend-breaking an entire circumferential edge area outside of the outline cutting-out line of the glass plate. Another object of the present invention is to provide a bend-breaking device capable of neatly bend-breaking a glass plate along an outline cutting-out line and capable of preventing a raised edge (burr) in the vicinity outside of the outline cutting-out line. Still another object of the present invention is to provide a bend-breaking device capable of easily changing a rolling direction of a bend-breaking cutter wheel to a direction (moving direction of a bend-breaking jig) in which an imaginary end cutting line extends in a circumferential edge area of a glass plate in bend-breaking processing without using a θ-axis servomotor and a transmission member (a pulley, a belt, or the like), and capable of achieving size reduction, energy saving, and cost reduction. Still another object of the present invention is to provide a bend-breaking device capable of shortening the time for bend-breaking processing and improving the efficiency thereof.

### Solution to Problem

A premise of the present invention to solve the problems is to provide a bend-breaking device that uses a bend-breaking jig including a bend-breaking cutter wheel that forms an end cutting line on a glass plate which is a processing target and a bend-breaking cutter holder that supports the bend-breaking cutter wheel, forms an outline cutting-out line on the glass plate, then forms, by the bend-breaking jig, an end cutting line in a circumferential edge area of the glass plate which extends outward from the outline cutting-out line, and bend-breaks the circumferential edge area of the glass plate on which the end cutting line is formed.

Characteristics of the present invention in the premise are that the bend-breaking device moves the bend-breaking jig from an end cutting line formation start point on an outer circumferential edge of the glass plate or in a vicinity thereof toward an end cutting line formation end point in a vicinity outside of the outline cutting-out line, and forms the end cutting line extending from the end cutting line formation start point toward the end cutting line formation end point at an end cutting line formation position of the circumferential edge area of the glass plate.

### Summary of Invention

According to the bend-breaking device of the present invention, since the bend-breaking jig is moved from an end cutting line formation start point on an outer circumferential edge of the glass plate or a vicinity thereof toward an end cutting line formation end point in a vicinity outside of the outline cutting-out line, and the end cutting line extending from the end cutting line formation start point toward the end cutting line formation end point is formed at an end cutting line formation position of the circumferential edge area of the glass plate, the end cutting line formed in the vicinity of the outer side of the outline cutting-out line which is the end cutting line formation end point does not have a shallow depth, but the end cutting line having a sufficient depth can be formed at the end cutting line formation end point or in a vicinity thereof, and when the circumferential edge area of the glass plate extending outward from the outline cutting-out line is bend-broken, bend-breaking of the glass plate is transmitted from the outline cutting-out line to the end cutting line formation end point of the end cutting line in the vicinity of the outer side of the outline cutting-out line and from the end cutting line formation end point to the end cutting line formation start point of the end cutting line, so that the bend-breaking of the glass plate in the bend-breaking processing can be transmitted from the outline cutting-out line toward the end cutting line, and the entire circumferential edge area outside of the outline cutting-out line of the glass plate can be smoothly and reliably bend-broken. The bend-breaking device is capable of reliably breaking the circumferential edge area of the glass plate at the outline cutting-out line and the end cutting line, neatly bend-breaking the glass plate along the outline cutting-out line, and preventing a raised edge (burr) from being produced in the vicinity of the outer side of the outline cutting-out line.

Since the end cutting line formation start point is a point on the outer circumferential edge of the glass plate, a position at a very short distance inward from the outer circumferential edge, or a position at a very short distance outward from the outer circumferential edge, and the end cutting line formation end point is a position at a very short distance outward from the outline cutting-out line, the bend-breaking device can form the end cutting line having a sufficient depth at the end cutting line formation end point or in the vicinity thereof which is the position at a very short distance outward from the outline cutting-out line, and when the circumferential edge area of the glass plate extending outward from the outline cutting-out line is bend-broken, the bend-breaking of the glass plate is transmitted from the outline cutting-out line to the end cutting line formation end point which is the position at a very short distance outward from the outline cutting-out line and from the end cutting line formation end point to the end cutting line formation start point of the end cutting line which is the point on the outer circumferential edge of the glass plate, the position at a very short distance inward from the outer circumferential edge, or the position at a very short distance outward from the outer circumferential edge, so that the bend-breaking of the glass plate in the bend-breaking processing can be transmitted from the outline cutting-out line toward the end cutting line, and the entire circumferential edge area outside of the outline cutting-out line of the glass plate can be smoothly and reliably bend-broken.

The bend-breaking cutter wheel has a cutter wheel axis line which extends in an up-down direction and is eccentric outward in a radial direction with respect to a cutter holder center axis line of the bend-breaking cutter holder which extends in the up-down direction, the bend-breaking cutter wheel is rotatable by 360° in a direction around the cutter holder center axis line with respect to the bend-breaking cutter holder, and the bend-breaking device causes the bend-breaking jig to be parallel to an upper surface of the circumferential edge area of the glass plate and travel slightly along the upper surface from the end cutting line formation start point toward the end cutting line formation end point, or causes the bend-breaking jig to be parallel to the upper surface of the circumferential edge area of the glass plate and travel slightly along the upper surface from a vicinity of the end cutting line formation start point toward the end cutting line formation start point, rotates, in the direction around the cutter holder center axis line, the bend-breaking cutter wheel which is brought into contact with the upper surface of the circumferential edge area of the glass plate, changes a rolling direction of the bend-breaking cutter wheel to a traveling direction of the bend-breaking jig, and causes the bend-breaking cutter wheel to form the end cutting line at the end cutting line formation position of the circumferential edge area of the glass plate in the traveling direction of the bend-breaking jig by causing the bend-breaking jig to travel toward the end cutting line formation end point after the rolling direction of the bend-breaking cutter wheel is changed to the traveling direction of the bend-breaking jig. Hence, since the cutter wheel axis line of the bend-breaking cutter wheel is eccentric outward in the radial direction with respect to the cutter holder center axis line of the bend-breaking cutter holder, the bend-breaking cutter wheel rotates in the direction around the cutter holder center axis line (around an axis) by causing the bend-breaking jig to slightly travel (move) from the end cutting line formation start point toward the end cutting line formation end point of the upper surface of the circumferential edge area of the glass plate or causing the bend-breaking jig to slightly travel (move) from the vicinity of the end cutting line formation start point toward the end cutting line formation start point of the upper surface of the circumferential edge area of the glass plate, so that it is possible to quickly and easily change the rolling direction of the bend-breaking cutter wheel, and it is possible to make the rolling direction of the bend-breaking cutter wheel become the same as the traveling (moving) direction of the bend-breaking jig. Since the bend-breaking device causes the bend-breaking jig to be parallel to the upper surface of the circumferential edge area of the glass plate and slightly travel along the upper surface from the end cutting line formation start point toward the end cutting line formation end point, or causes the bend-breaking jig to be parallel to the upper surface of the circumferential edge area of the glass plate and slightly travel along the upper surface from the vicinity of the end cutting line formation start point toward the end cutting line formation start point, thereby rotating, in the direction around the cutter holder center axis line, the bend-breaking cutter wheel which is brought into contact with the upper surface of the circumferential edge area of the glass plate, and making the rolling direction of the bend-breaking cutter wheel become the same as the traveling (moving) direction of the bend-breaking jig, it is possible to make the rolling direction of the bend-breaking cutter wheel become parallel to the traveling direction of the bend-breaking jig (an extending direction of an imaginary end cutting line of an edge portion of the glass plate), and it is possible to make, in first operation of a series of operations for forming the end cutting line in the edge portion of the glass plate, the rolling direction of the bend-breaking cutter wheel become the same as the traveling direction of the bend-breaking jig. According to the bend-breaking device, there is no need to install a θ-axis servomotor and a transmission member (a pulley, a belt, or the like) that transmits a rotational force of the θ-axis servomotor to a bend-breaking cutter holder in a system, and it is possible to achieve size reduction, energy saving, and cost reduction of a glass plate processing system, compared with the bend-breaking device of the glass plate processing system disclosed in Patent Literature 1. Further, since, in the bend-breaking processing, there is no need to rotate the θ-axis servomotor to make the rolling direction of the bend-breaking cutter wheel become the same as the extending direction of the imaginary end cutting line of the circumferential edge area of the glass plate (the traveling direction of the bend-breaking jig), and there is no need to change the rolling direction of the bend-breaking cutter wheel by using the θ-axis servomotor whenever the end cutting line is formed, it is possible to shorten the time for the bend-breaking processing and improve the efficiency thereof in the glass plate processing system. The bend-breaking device can form the end cutting line having a sufficient depth at the end cutting line formation end point or in the vicinity thereof, can transmit the bend-breaking of the glass plate from the outline cutting-out line toward the end cutting line in the bend-breaking processing, can reliably break the circumferential edge area of the glass plate at the outline cutting-out line and the end cutting line, and can smoothly and reliably bend-break the entire circumferential edge area outside of the outline cutting-out line of the glass plate.

Since the bend-breaking device includes a first lifting/lowering mechanism that lifts and lowers the bend-breaking cutter holder in an up-down direction, and the bend-breaking device lowers the bend-breaking cutter holder toward the upper surface of the circumferential edge area of the glass plate and toward the end cutting line formation start point or the vicinity thereof by the first lifting/lowering mechanism when the end cutting line is formed in the circumferential edge area of the glass plate, brings the bend-breaking cutter wheel into contact with the upper surface of the circumferential edge area of the glass plate, causes the bend-breaking jig to slightly travel from the end cutting line formation start point toward the end cutting line formation end point or causes the bend-breaking jig to slightly travel from the vicinity of the end cutting line formation start point toward the end cutting line formation start point, and makes the rolling direction of the bend-breaking cutter wheel become the same as the traveling direction of the bend-breaking jig, and then causes the bend-breaking jig to linearly travel toward the end cutting line formation end point, thereby causing the bend-breaking cutter wheel to form, in the traveling direction of the bend-breaking jig, the straight end cutting line at the end cutting line formation position of the circumferential edge area of the glass plate, it is possible to make the rolling direction of the bend-breaking cutter wheel become the same as the traveling direction of the bend-breaking jig, and it is possible to make the rolling direction of the bend-breaking cutter wheel become parallel to the traveling direction of the bend-breaking jig (the extending direction of the imaginary end cutting line of the circumferential edge area of the glass plate) by causing the first lifting/lowering mechanism to lower the bend-breaking cutter holder to the upper surface of the edge portion of the glass plate, then causing the bend-breaking jig to slightly travel from the end cutting line formation start point toward the end cutting line formation end point, or causing the bend-breaking jig to slightly travel from the vicinity of the end cutting line formation start point toward the end cutting line formation start point. The bend-breaking device can form the end cutting line having a sufficient depth at the end cutting line formation end point or in the vicinity thereof, can transmit the bend-breaking of the glass plate from the outline cutting-out line toward the end cutting line in the bend-breaking processing, can reliably break the circumferential edge area of the glass plate at the outline cutting-out line and the end cutting line, and can smoothly and reliably bend-break the entire circumferential edge area outside of the outline cutting-out line of the glass plate.

The bend-breaking device lifts, at the end cutting line formation end point, the bend-breaking cutter holder from the upper surface of the glass plate by the first lifting/lowering mechanism after the end cutting line is formed at the end cutting line formation position of the circumferential edge area of the glass plate, moves the bend-breaking jig to a next end cutting line formation position of the circumferential edge area of the glass plate after the bend-breaking cutter holder is lifted, lowers, at the next end cutting line formation position, the bend-breaking cutter holder toward the upper surface of the circumferential edge area of the glass plate and toward the end cutting line formation start point or the vicinity thereof by the first lifting/lowering mechanism after the bend-breaking jig is moved to the next end cutting line formation position, lowers the bend-breaking cutter holder toward the upper surface of the circumferential edge area of the glass plate to come into contact with the upper surface of the circumferential edge area, causes, at the next end cutting line formation position, the bend-breaking jig to slightly travel from the end cutting line formation start point toward the end cutting line formation end point on the upper surface of the circumferential edge area of the glass plate or causes, at the next end cutting line formation position, the bend-breaking jig to slightly travel from the vicinity of the end cutting line formation start point toward the end cutting line formation start point on the upper surface of the circumferential edge area of the glass plate, and changes the rolling direction of the bend-breaking cutter wheel to the traveling direction of the bend-breaking jig, and causes the bend-breaking cutter wheel to form the straight end cutting line at the next end cutting line formation position by making the rolling direction of the bend-breaking cutter wheel become the same as the traveling direction of the bend-breaking jig and then causing the bend-breaking jig to linearly travel toward the end cutting line formation end point at the next end cutting line formation position. Hence, while the bend-breaking device makes the rolling direction of the bend-breaking cutter wheel become parallel to the traveling direction of the bend-breaking jig (the extending direction of the imaginary end cutting line of the circumferential edge area of the glass plate) at each of end cutting line formation positions in the circumferential edge area of the glass plate which is a processing target, the bend-breaking device can form the end cutting line at those end cutting line formation positions and can efficiently form a plurality of end cutting lines in the circumferential edge area of the glass plate in a short time.

The bend-breaking device changes the rolling direction of the bend-breaking cutter wheel to the traveling direction of the bend-breaking jig by causing the bend-breaking jig to draw, at the end cutting line formation start point, a circular track toward the end cutting line formation end point or causing the bend-breaking jig to draw a circular track from the vicinity of the end cutting line formation start point toward the end cutting line formation start point. Hence, the bend-breaking device can reliably rotate the bend-breaking cutter wheel in the direction around the cutter holder center axis line (around the axis) and can reliably make the rolling direction of the bend-breaking cutter wheel become parallel to the traveling direction of the bend-breaking jig (the extending direction of the imaginary end cutting line of the circumferential edge area of the glass plate) by causing the bend-breaking jig to draw, at the end cutting line formation start point in the circumferential edge area of the glass plate, the circular track toward the end cutting line formation end point or causing the bend-breaking jig to draw the circular track from the vicinity of the end cutting line formation start point toward the end cutting line formation start point in the circumferential edge area of the glass plate. In the bend-breaking device, the bend-breaking cutter wheel itself can perform a rotational motion around a rotation center of the bend-breaking cutter holder, a rotation control shaft around which the bend-breaking cutter wheel itself performs the rotational motion can be set as a cutter holder center axis line of the bend-breaking cutter holder, and an error due to eccentricity can be minimized by adjusting an angle of the rotation control shaft to the rolling direction of the bend-breaking cutter wheel (the traveling direction of the bend-breaking jig).

The bend-breaking device causes, at the end cutting line formation position, the bend-breaking jig to linearly travel from the vicinity of the end cutting line formation start point toward the end cutting line formation start point on the upper surface of the circumferential edge area of the glass plate so that an angle formed by the extending direction of the imaginary end cutting line and the traveling direction of the bend-breaking jig toward the end cutting line formation start point in the circumferential edge area of the glass plate is 90° or smaller, changes the rolling direction of the bend-breaking cutter wheel to the traveling direction of the bend-breaking jig, then performs, at the end cutting line formation start point, a direction change of the traveling direction of the bend-breaking jig to the extending direction of the imaginary end cutting line by an angle of 90° or smaller, and causes the bend-breaking jig to travel in the extending direction of the imaginary end cutting line. Hence, the bend-breaking device can reliably rotate the bend-breaking cutter wheel in the direction around the cutter holder center axis line (around the axis) and can reliably make the rolling direction of the bend-breaking cutter wheel become parallel to the traveling direction of the bend-breaking jig (the extending direction of the imaginary end cutting line of the circumferential edge area of the glass plate). In the bend-breaking device, the bend-breaking cutter wheel itself can perform the rotational motion around the rotation center of the bend-breaking cutter holder, the rotation control shaft around which the bend-breaking cutter wheel itself performs the rotational motion can be set as the cutter holder center axis line of the bend-breaking cutter holder, and an error due to eccentricity can be minimized by adjusting the angle of the rotation control shaft to the rolling direction of the bend-breaking cutter wheel (the traveling direction of the bend-breaking jig).

The bend-breaking device causes the bend-breaking jig to travel along the imaginary end cutting line in the circumferential edge area of the glass plate at the end cutting line formation position from the vicinity of the end cutting line formation start point toward the end cutting line formation start point or causes the bend-breaking jig to travel on the imaginary end cutting line in the circumferential edge area of the glass plate from the vicinity of the end cutting line formation start point toward the end cutting line formation start point, changes the rolling direction of the bend-breaking cutter wheel to the traveling direction of the bend-breaking jig, then reverses the bend-breaking jig at the end cutting line formation start point to perform a direction change of the traveling direction of the bend-breaking jig to the extending direction of the imaginary end cutting line, and causes the bend-breaking jig to travel in the extending direction of the imaginary end cutting line from the end cutting line formation start point toward the end cutting line formation end point. Hence, the bend-breaking device can reliably rotate the bend-breaking cutter wheel in the direction around the cutter holder center axis line (around the axis) and can reliably make the rolling direction of the bend-breaking cutter wheel become parallel to the traveling direction of the bend-breaking jig (the extending direction of the imaginary end cutting line of the circumferential edge area of the glass plate). In the bend-breaking device, the bend-breaking cutter wheel itself can perform a rotational motion around a rotation center of the bend-breaking cutter holder, a rotation control shaft around which the bend-breaking cutter wheel itself performs the rotational motion can be set as a cutter holder center axis line of the bend-breaking cutter holder, and an error due to eccentricity can be minimized by adjusting an angle of the rotation control shaft to the rolling direction of the bend-breaking cutter wheel (the traveling direction of the bend-breaking jig).

The bend-breaking device includes a pressing member that presses the circumferential edge area of the glass plate in which the end cutting line is formed, and a second lifting/lowering mechanism that lifts and lowers the pressing member, and the bend-breaking device bend-breaks the circumferential edge area of the glass plate from a main body of the glass plate by lowering the pressing member toward the circumferential edge area of the glass plate by the second lifting/lowering mechanism and pressing the circumferential edge area of the glass plate downward by the pressing member, after the bend-breaking cutter wheel forms the end cutting line at the end cutting line formation position of the circumferential edge area of the glass plate. Hence, the bend-breaking device is capable of reliably breaking the circumferential edge area of the glass plate at the outline cutting-out line and the end cutting line, reliably bend-breaking the circumferential edge area outside of the outline cutting-out line of the glass plate, and efficiently performing the bend-breaking processing in a short time by pressing the circumferential edge area of the glass plate downward by the pressing member that has been brought into contact with the upper surface of the circumferential edge area outside of the outline cutting-out line of the glass plate by the second lifting/lowering mechanism, and pressing the edge portion of the glass plate downward by the pressing member that has been brought into contact with the upper surface of the edge portion of the glass plate.

### Brief Description of Drawings

Fig. 1 is a side view of a glass plate processing system including a bend-breaking device.
Fig. 2 is a top view of the glass plate processing system in Fig. 1.
Fig. 3 is a top view illustrating an example of a glass plate which is a processing target to be processed by the glass plate processing system.
Fig. 4 is a side view of a loading area.
Fig. 5 is a top view of the loading area.
Fig. 6 is a front view of the loading area.
Fig. 7 is a top view of a cutting-in processing table and a grinding processing table.
Fig. 8 is a side view of the cutting-in processing table and the grinding processing table.
Fig. 9 is a view illustrating movement of the cutting-in processing table and the grinding processing table.
Fig. 10 is a side view of a cutting-in device illustrated as an example installed in the cutting-in processing area.
Fig. 11 is a front view of the cutting-in device.
Fig. 12 is a top view of a bend-breaking processing table.
Fig. 13 is a side view of the bend-breaking processing table.
Fig. 14 is a side view of the bend-breaking device.
Fig. 15 is a front view of the bend-breaking device.
Fig. 16 is a top view of the bend-breaking device.
Fig. 17 is an enlarged front view of the bend-breaking device.
Fig. 18 is an enlarged front view of the bend-breaking device.
Fig. 19 is a partially cross-sectional side view of a first or second bend-breaking jig.
Fig. 20 is a front view of the first or second bend-breaking jig.
Fig. 21 is a top view of the bend-breaking processing table from which a support device is exposed.
Fig. 22 is a front view of the bend-breaking processing table when the support device is viewed from the front.
Fig. 23 is a front view of a grinding device.
Fig. 24 is a side view of the grinding device.
Fig. 25 is a view illustrating an example of a change in rolling direction of a bend-breaking cutter wheel.
Fig. 26 is a view illustrating another example of the change in rolling direction of the bend-breaking cutter wheel.
Fig. 27 is a view illustrating still another example of the change in rolling direction of the bend-breaking cutter wheel.
Fig. 28 is a view illustrating still another example of the change in rolling direction of the bend-breaking cutter wheel.
Fig. 29 is a view illustrating still another example of the change in rolling direction of the bend-breaking cutter wheel.
Fig. 30 is a view illustrating still another example of the change in rolling direction of the bend-breaking cutter wheel.
Fig. 31 is a view illustrating an example of a bend-breaking procedure in the bend-breaking processing.

### Description of Embodiments

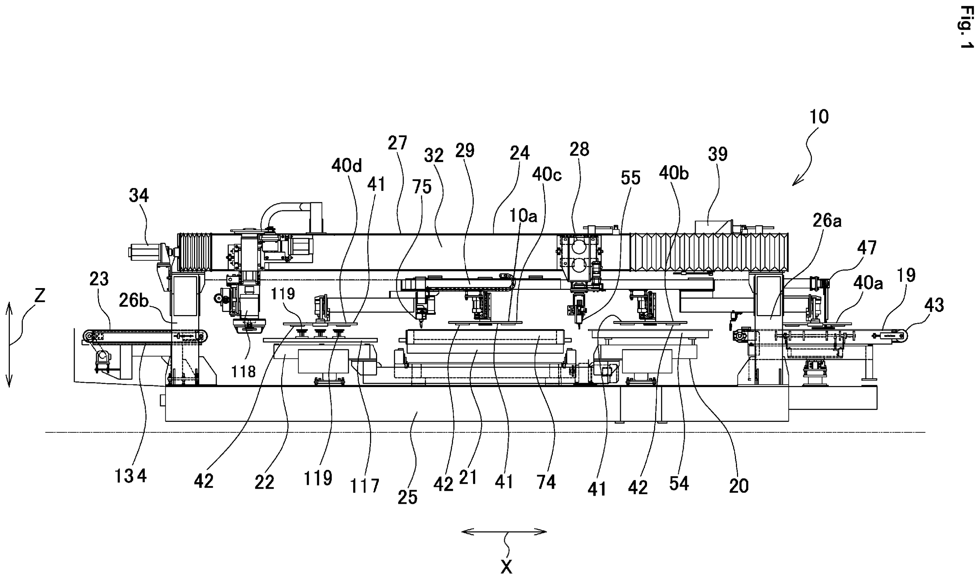

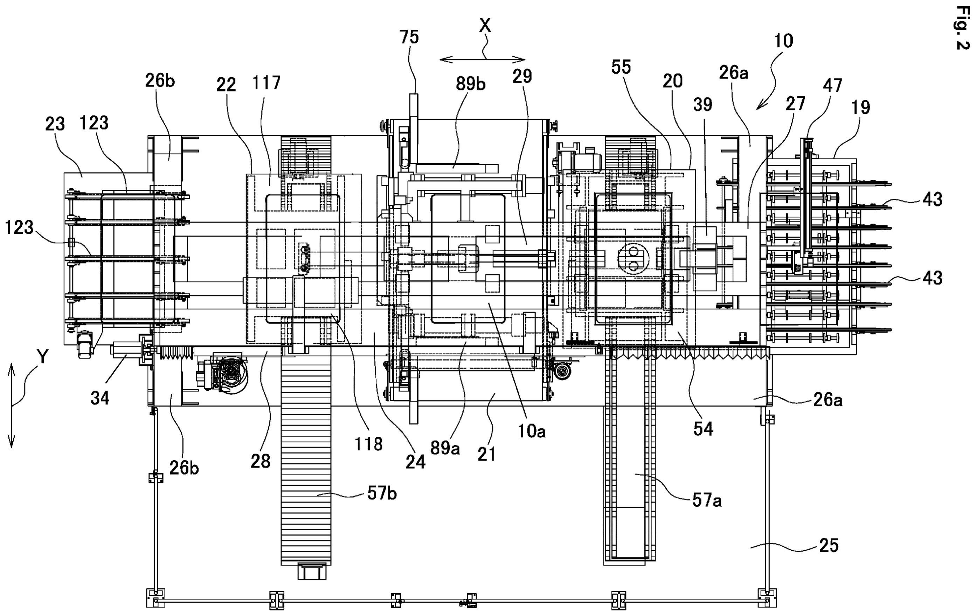

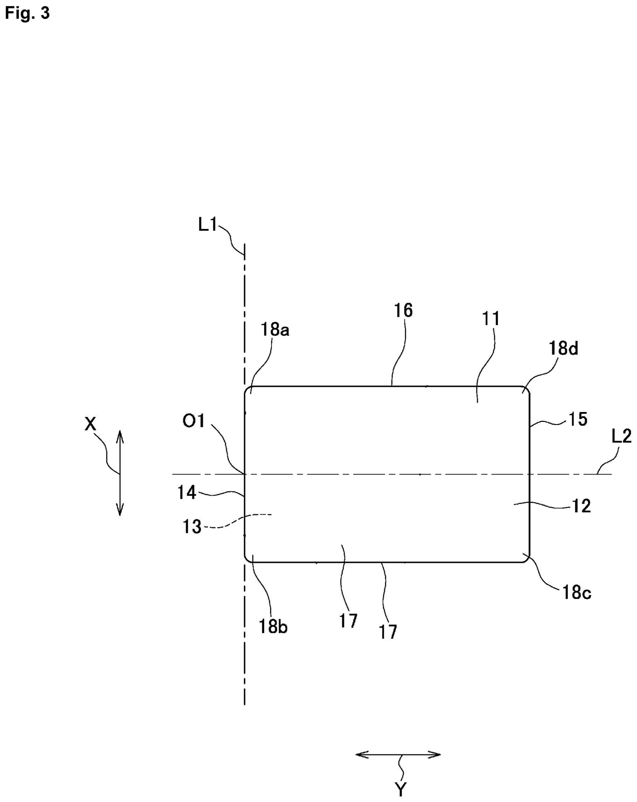

A bend-breaking device according to the present invention will be described below in detail with reference to the accompanying drawings. Fig. 1 is a side view of a glass plate processing system 10 including a bend-breaking device 75, and Fig. 2 is a top view of the glass plate processing system 10 in Fig. 1. Fig. 3 is a top view illustrating an example of a glass plate 11 which is a processing target to be processed by the glass plate processing system 10. Fig. 3 illustrates a state in which the glass plate 11 is positioned in a loading area 19. In Figs. 1 to 3, a front-rear direction (X-axis direction) is represented by an arrow X, a width direction (Y-axis direction) is represented by an arrow Y, and an up-down direction (Z-axis direction) is represented by an arrow Z.

As illustrated in Fig. 3, the glass plate 11 (glass plate 11 before processing) which is a processing target to be processed in the glass plate processing system 10 has an upper surface 12 and a lower surface 13 which have a predetermined area, has a predetermined thickness, and is formed into a rectangle (quadrangle) having a planar shape elongated in the width direction. The glass plate 11 has a first side edge 14 (one side edge) and a second side edge 15 (the other side edge) that are spaced apart from each other to be opposite in the width direction and extend in the front-rear direction, a front end edge 16 and a rear end edge 17 that are spaced apart from each other to be opposite in the front-rear direction and extend in the width direction, and first to fourth corner portions 18a to 18d. Note that the glass plate which is a processing target may be formed into a polygon planar shape other than a rectangle (quadrangle) planar shape and may be formed so that each edge of the glass plate describes a curve, and shapes of the glass plate include any shapes.

The glass plate processing system 10 performs cutting-in processing, bend-breaking processing, and grinding processing on the glass plate 11 (plate-shaped glass) which is a processing target. The glass plate processing system 10 is controlled by a controller (not illustrated). The controller is a computer that includes a central processing unit (a CPU or an MPU) and a memory (a main memory and a cache memory) and is operated by an independent operating system, and the controller has a built-in large-capacity hard disk (mass storage area).

In the large-capacity hard disk (mass storage area) of the controller, a name and a product number of each glass plate 11 which is a processing target, a plurality of items of coordinate data (coordinates of both side edges of the glass plates 11, coordinates of front and rear end edges, coordinates of the first to fourth corner portions 18a to 18d, coordinates of a center of the glass plate 11, and the like) of the glass plate 11 which vary depending on a size (area) or a shape of each glass plate 11 which is a processing target, or image data (a planar image (six-sided image) or a stereoscopic image (3D image)) of the glass plate 11 are stored (saved) in association with glass plate specific information (glass plate specific identifier) that is specific for the glass plate 11. As the glass plate specific information, a manufacturing number, a serial number, or the like of the glass plate 11 is used, and the controller can also generate a unique identifier which is specific for the glass plate 11 and can use the generated identifier as the glass plate specific information.

In the cutting-in (cutting) processing in a cutting-in (cutting) processing area 20, the bend-breaking processing in a bend-breaking area 21, and the grinding processing in a grinding processing area 22, the controller performs NC control on the loading area 19 and the bend-breaking device 75 by using the coordinate data of the glass plate 11 stored in the large-capacity hard disk. In the NC control, the controller quantifies a position at which processing is started (XY plane coordinates) and a change position of a processing direction by coordinates, and quantifies an operation direction, a distance, and a speed in two axes of an X-axis (front-rear direction) and a Y-axis (width direction). Signals obtained by quantifying command coordinates and axes are transmitted (input) to a cutting-in device 55, the bend-breaking device 75, and a grinding device 118. In the NC control, a shape desired to be obtained by processing is accurately indicated by repeating "coordinates → axis → command".

The glass plate processing system 10 includes the loading area 19 into which the glass plate 11 before processing is loaded, an unloading area 23 from which the glass plate 11 after processing is unloaded, the processing areas 20 to 22 which are disposed between the loading area 19 and the unloading area 23 and in which the glass plate 11 is processed, and a conveyance mechanism 24 which conveys the glass plate 11 to the processing areas 20 to 22 and the unloading area 23 sequentially from a rear side (upstream) toward a front side (downstream) in the front-rear direction.

The processing areas 20 to 22 include the cutting-in processing area 20 positioned in front (downstream) of the loading area 19 in the front-rear direction, a bend-breaking processing area 21 positioned in front (downstream) of the cutting-in processing area 20 in the front-rear direction, and a grinding processing area 22 positioned in front (downstream) of the bend-breaking processing area 21 in the front-rear direction. The cutting-in processing area 20, the bend-breaking processing area 21, and the grinding processing area 22 are provided on a machine base 25 formed in a quadrangular shape elongated in the front-rear direction.

The conveyance mechanism 24 includes a pair of first pillars 26a positioned at a rear portion of the machine base 25 and extending in the up-down direction, a pair of second pillars 26b positioned at a front portion of the machine base 25 and extending in the up-down direction, a fixed frame 27 positioned between the first and second pillars 26a and 26b and extending in the front-rear direction, a first moving unit 28 (first moving means) installed at one side portion of the fixed frame 27, and a second moving unit 29 (second moving means) installed below another fixed frame 27 different from the fixed frame 27.

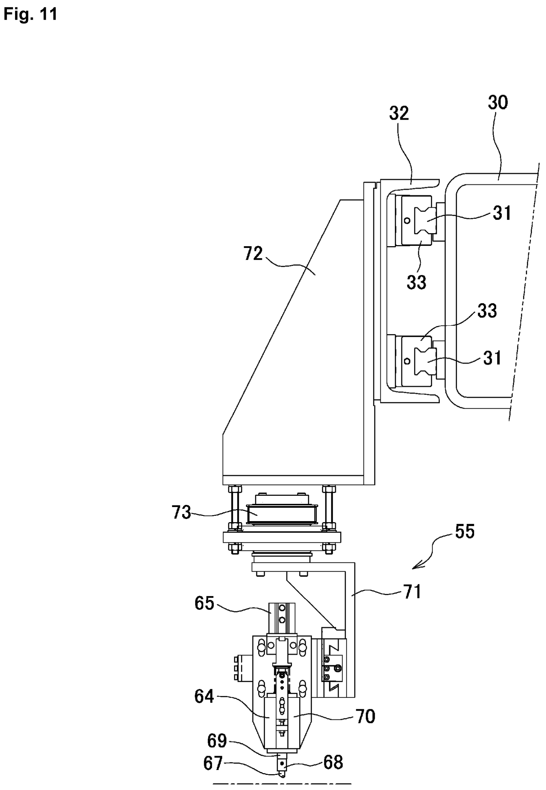

The first moving unit 28 moves the cutting-in device 55 and the grinding device 118 forward and rearward (linearly) in the front-rear direction (X-axis direction). The first moving unit 28 includes a first guide frame 30, a pair of first guide rails 31, a first feed screw (a ball screw) (not illustrated), a first travel frame 32, a plurality of first slide blocks (housing nuts) (not illustrated), a pair of first guide shoes 33, and a first servomotor 34 (see Fig. 11).

The fixed frame 27 and the first guide frame 30 are coupled between the first and second pillars 26a and 26b and extend in the front-rear direction. The first guide rails 31 are spaced apart from each other to be opposite in the up-down direction, are fixed to one side portion of the first guide frame 30 by predetermined fixing means, and extend in the front-rear direction. The first feed screw (a ball screw) is positioned between the first guide rails 31, is rotatably supported by a plurality of bearings (not illustrated) fixed to the one side portion of the first guide frame 30, and extends in the front-rear direction.

The first travel frame 32 is spaced apart from the one side portion of the first guide frame 30 at a predetermined interval and extends in the front-rear direction. The first slide blocks (ball screw nuts) are arranged side by side by being spaced apart at predetermined intervals in the front-rear direction and are fixed to an opposite surface of the first travel frame 32 which is opposite to the first guide frame 30 by predetermined fixing means. The first guide shoes 33 are spaced apart from each other to be opposite in the up-down direction, are fixed to the opposite surface of the first travel frame 32 which is opposite to the first guide frame 30 by predetermined fixing means, and extend in the front-rear direction. The first servomotor 34 is positioned at a front end portion of the first guide frame 30 and is coupled to the second pillars 26b via respective brackets. The first servomotor 34 has a shaft that is coupled and fixed to the other end portion of the first feed screw.

When the shaft of the first servomotor 34 rotates in the counterclockwise direction, the first feed screw rotates in the counterclockwise direction, thereby causing the first slide blocks to move from a front side to a rear side of the first guide frame 30 in the front-rear direction, and the movement of the first slide blocks causes the first travel frame 32 to linearly move from the front side to the rear side of the first guide frame 30 in the front-rear direction. Conversely, when the shaft of the first servomotor 34 rotates in the clockwise direction, the first feed screw rotates in the clockwise direction, thereby causing the first slide blocks to move from the rear side toward the front side of the first guide frame 30 in the front-rear direction, and the movement of the first slide blocks causes the first travel frame 32 to linearly move from the rear side toward the front side of the first guide frame 30 in the front-rear direction.

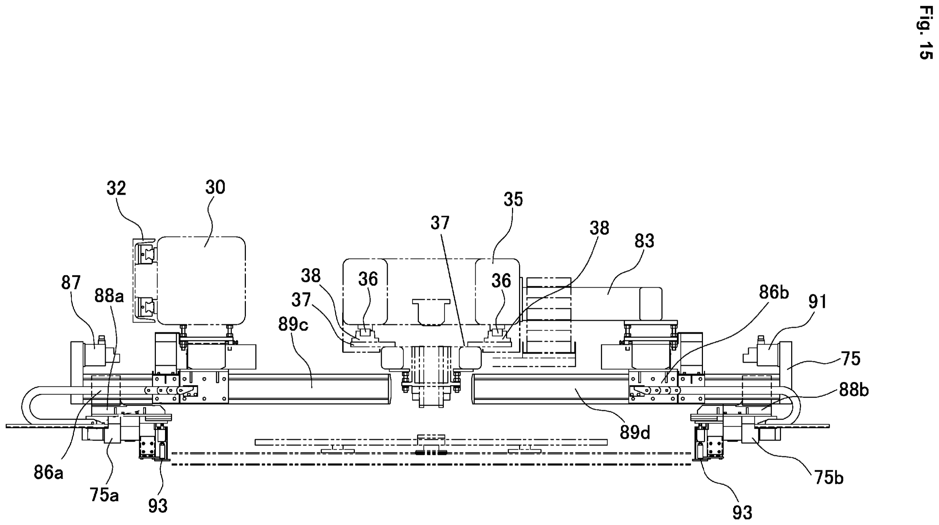

The second moving unit 29 moves first to fourth glass plate holders 40a to 40d forward and rearward (linearly) in the front-rear direction (X-axis direction). The second moving unit 29 includes a second guide frame 35, a pair of second guide rails 36, a second feed screw (a ball screw) (not illustrated), a second travel frame 37, a plurality of second slide blocks (housing nuts) (not illustrated), a pair of guide shoes 38, a second servomotor 39, and the first to fourth glass plate holders 40a to 40d (first to fourth glass plate lifters) (see Fig. 15).

The fixed frame 27 and the second guide frame 35 are coupled between the first and second pillars 26a and 26b and extend in the front-rear direction. The second guide rails 36 are spaced apart from each other to be opposite in the width direction, are fixed to a lower portion of the second guide frame 35 by predetermined fixing means, and extend in the front-rear direction. The second feed screw (a ball screw) is positioned between the second guide rails 36, is rotatably supported by a plurality of bearings (not illustrated) fixed to the lower portion of the second guide frame 35, and extends in the front-rear direction.

The second travel frame 37 is positioned at the lower portion of the second guide frame 35 and extends in the front-rear direction. The second slide blocks (ball screw nuts) are arranged side by side by being spaced apart at predetermined intervals in the width direction and are fixed to an opposite surface of the second travel frame 37 which is opposite to the second guide frame 35 by predetermined fixing means. The guide shoes 38 are spaced apart from each other to be opposite in the width direction, are fixed to the opposite surface of the second travel frame 37 which is opposite to the second guide frame 35 by predetermined fixing means, and extend in the front-rear direction. The second servomotor 39 is positioned at a rear end portion of the second guide frame 35 and is connected to the second guide frame 35. The second servomotor 39 has a shaft that is coupled and fixed to one end portion of the second feed screw via a timing belt (and/or a gear).

When the shaft of the second servomotor 39 rotates in the clockwise direction, the second feed screw rotates in the clockwise direction, thereby causing the second slide blocks to move from a rear side toward a front side of the second guide frame 35 in the front-rear direction, and the movement of the second slide blocks causes the second travel frame 37 (the first to fourth glass plate holders 40a to 40d) to linearly move from the rear side toward the front side of the second guide frame 35 in the front-rear direction. Conversely, when the shaft of the second servomotor 39 rotates in the counterclockwise direction, the second feed screw rotates in the counterclockwise direction, thereby causing the second slide blocks to move from the front side to the rear side of the second guide frame 35 in the front-rear direction, and the movement of the second slide blocks causes the second travel frame 37 (the first to fourth glass plate holders 40a to 40d) to linearly move from the front side to the rear side of the second guide frame 35 in the front-rear direction. A control unit that controls start/stop, revolutions per minute, or rotation speed of the first and second servomotors 34 and 39 is connected to the controller via a signal line (wired or wireless).

The first to fourth glass plate holders 40a to 40d are attached to a lower portion of the second travel frame 37, extend downward from the travel frame 37, and are arranged side by side by being spaced apart at equal intervals in the front-rear direction. Each of the first to fourth glass plate holders 40a to 40d includes a pad mounting plate 41 extending in the front-rear direction, a suction pad 42 that is mounted on the pad mounting plate 41 and suctions and holds the glass plate 11, a vacuum mechanism (air sucking device) (not illustrated) including an air vacuum pump, and a pad lifting/lowering mechanism (not illustrated). An air cylinder is used for the pad lifting/lowering mechanism. A control unit that controls start/stop of the vacuum mechanism and the pad lifting/lowering mechanism (air cylinder) is connected to the controller via a signal line.

The first glass plate holder 40a moves forward from the loading area 19 toward the cutting-in processing area 20 and moves rearward from the cutting-in processing area 20 toward the loading area 19. The second glass plate holder 40b moves forward from the cutting-in processing area 20 toward the bend-breaking processing area 21 and moves rearward from the bend-breaking processing area 21 toward the cutting-in processing area 20. The third glass plate holder 40c moves forward from the bend-breaking processing area 21 toward the grinding processing area 22 and moves rearward from the grinding processing area 22 toward the bend-breaking processing area 21. The fourth glass plate holder 40d moves forward from the grinding processing area 22 toward the unloading area 23 and moves rearward from the unloading area 23 toward the grinding processing area 22.

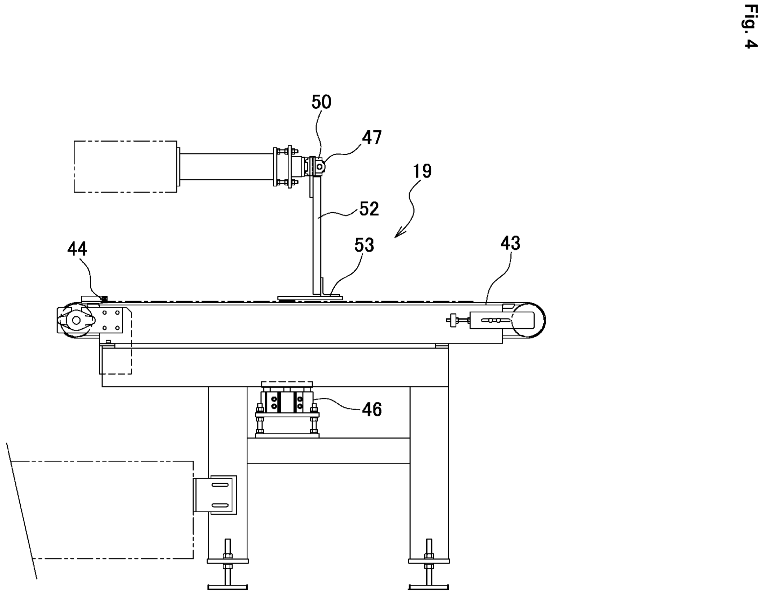

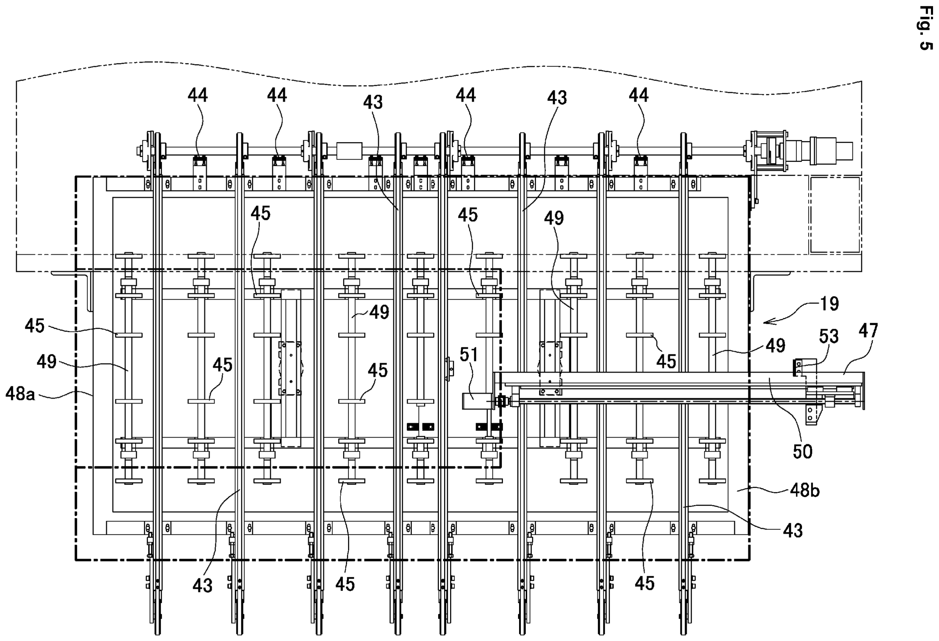

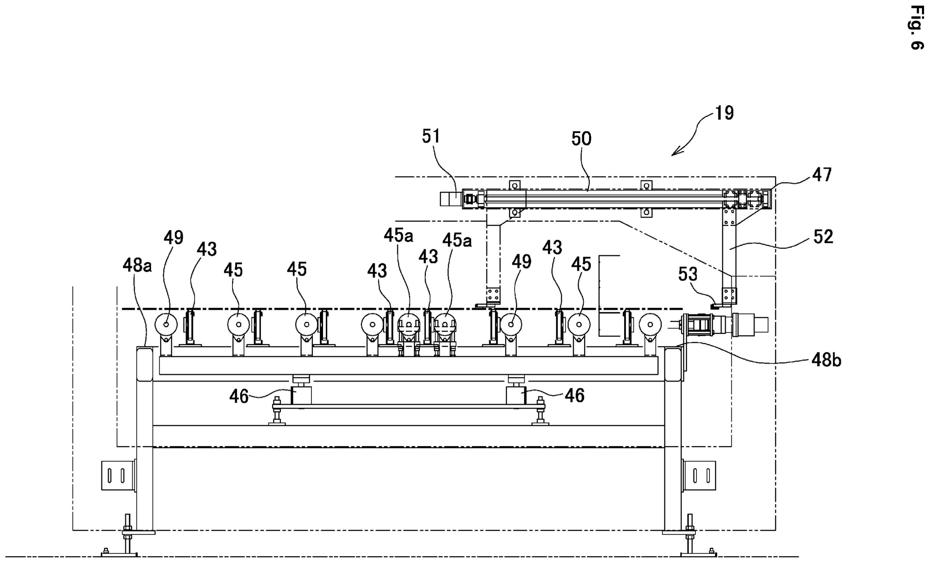

Fig. 4 is a side view of the loading area 19, and Fig. 5 is a top view of the loading area 19. Fig. 6 is a front view of the loading area 19. The loading area 19 includes loading conveyors 43, stoppers 44, rollers 45, a pair of roller lifting/lowering mechanisms 46, and a moving mechanism 47. The loading area 19 is supported by leg portions extending upward from a floor surface of the machine base 25. In the loading area 19, first positioning means (a first positioning step) and second positioning means (a second positioning step) are performed, and the glass plate 11 is positioned toward each of the processing areas 20 to 22.

At one side edge portion 48a of the loading area 19, a first positioning reference L1 extending in the front-rear direction and a second positioning reference L2 (see Fig. 3) extending in the width direction are set. The first positioning reference L1 is an imaginary line extending straight in the front-rear direction, which is assumed based on the outermost side edge of a first side edge 14 positioned on the outermost side in the width direction, the first side edge 14 extending in the front-rear direction which is on one side of the glass plate 11 in the width direction. For example, in a case where the first side edge 14 (one side edge) of the glass plate 11 describes a curve, the outermost side edge is a vertex of the curve positioned on the outermost side in the width direction. In addition, when the first side edge 14 (one side edge) of the glass plate 11 extends straight in the front-rear direction, the side edge 14 is the outermost side edge.

At the first positioning reference L1, the outermost side edge of the first side edge 14 positioned on the outermost side in the width direction is positioned, the first side edge 14 (one side edge) extending in the front-rear direction which is on one side of the glass plate 11 in the width direction. Here, positioning the outermost side edge at the first positioning reference L1 includes not only a case where the outermost side edge completely matches the first positioning reference L1, but also a case where the outermost side edge is positioned in the vicinity (nearest) of an inner side of the first positioning reference L1 in the width direction, or a case where the outermost side edge is positioned in the vicinity (nearest) of an outer side of the first positioning reference L1 in the width direction.

At the second positioning reference L2, a front-rear direction center O1 (a center line L2 extending in the width direction by dividing, in half, a dimension of the glass plate 11 in the front-rear direction) of the first side edge 14 (one side edge) extending in the front-rear direction on one side of the glass plate 11 in the width direction is positioned. Here, positioning the front-rear direction center O1 (the center line L2) at the second positioning reference L2 includes not only a case where the front-rear direction center O1 completely matches the second positioning reference L2, but also a case where the front-rear direction center O1 is positioned in the vicinity (nearest) of a front side of the second positioning reference L2 in the front-rear direction or a case where the front-rear direction center O1 is positioned in the vicinity (nearest) of a rear side of the second positioning reference L2 in the front-rear direction.

The controller (glass plate processing system 10) calculates a dimension of the glass plate 11 in the width direction using the coordinate data of the glass plate 11 stored in the large-capacity hard disk, determines a first movement dimension (first movement distance) in the width direction for positioning the first side edge 14 (one side edge) of the glass plate 11 at the first positioning reference L1 (first imaginary positioning reference line) according to a difference in the calculated dimension of the glass plate 11 in the width direction (Y-axis direction), and determines the revolutions per minute of a shaft of a third servomotor 51 (the revolutions per minute of the shaft for moving the glass plate 11 by the first movement dimension in the width direction) based on the determined first movement dimension. The controller stores (saves) the determined first movement dimension and the determined revolutions per minute of the shaft of the third servomotor 51 in association with the glass plate specific information of the glass plate 11 in the large-capacity hard disk.

The controller calculates a dimension of the glass plate 11 in the front-rear direction (X-axis direction) using the coordinate data of the glass plate 11 stored in the large-capacity hard disk, and determines a second movement dimension (second movement distance) toward a rear side in the front-rear direction of the loading conveyor 43 for positioning the front-rear direction center O1 of the one side edge 14 of the glass plate 11 at the second positioning reference L2 (second imaginary positioning reference line) according to a difference in the calculated dimension of the glass plate 11 in the front-rear direction. The controller stores (saves) the determined second movement dimension in association with the glass plate specific information (glass plate specific identifier) of the glass plate 11 in the large-capacity hard disk.

The controller calculates movement dimensions (moving distances) of the cutting-in device 55 and the grinding device 118 in the front-rear direction from the coordinate data of processed shapes and determines revolutions per minute of the shaft of the first servomotor 34 (the revolutions per minute of the shaft for moving the cutting-in device 55 and the grinding device 118 by the movement dimension in the front-rear direction) based on the calculated movement dimension. The controller stores (saves) the determined movement dimension and the determined revolutions per minute of the shaft of the first servomotor 34 in association with the glass plate specific information of the glass plate 11 in the large-capacity hard disk.

As illustrated in Figs. 4 to 6, the loading conveyors 43 are a plurality of endless tracks extending in the front-rear direction (X-axis direction) and are arranged side by side by being spaced apart at predetermined intervals in the width direction (Y-axis direction). A control unit that controls start/stop or a conveyance distance of each of the loading conveyors 43 is connected to the controller via a signal line. The loading conveyor 43 conveys the glass plate 11 in the front-rear direction from a rear end portion toward a front end portion of the loading area 19. The stoppers 44 are provided at the front end portion of the loading area 19 and are spaced apart from each other to be arranged side by side in the width direction. The front end edge 16 of the glass plate 11 moving forward from the rear end portion toward the front end portion of the loading area 19 by the loading conveyor 43 comes into contact with the stopper 44. A non-contact sensor (not illustrated) is installed behind the stopper 44. The non-contact sensor is connected to the controller, and when the front end edge 16 of the glass plate 11 is detected, movement of the glass plate 11 is decelerated, and the front end edge 16 of the glass plate 11 comes into contact with the stopper 44 by a set time.

A plurality of rollers 45 are rotatably attached to shafts 49 extending in the front-rear direction and are mounted, together with the shafts 49, between the loading conveyors 43. The rollers 45 are arranged side by side at predetermined dimension intervals in the front-rear direction and are arranged at predetermined dimension intervals in the width direction. The rollers 45 rotate clockwise and counterclockwise in the width direction and come into contact with a lower surface 13 of the glass plate 11 to support the glass plate 11 movably in the width direction. The shafts 49 are attached to a seat positioned below the shafts via respective bearings.

A resistance plate (rubber ring) (not illustrated) that increases the rotational resistance of a roller 45a of the rollers 45 is attached between the roller 45a and the shaft 49. In the roller 45a, the resistance plate increases resistance against the shaft 49, and the roller 45a does not rotate unless a rotational force exceeding the rotational resistance is applied to the roller 45a, and free rotation of the roller 45a is prevented by the resistance plate. In a case where the glass plate 11 is placed on the rollers 45, free movement of the glass plate 11 in the width direction is prevented by the roller 45a having high rotational resistance.

The roller lifting/lowering mechanisms 46 are installed below the seat to which the shafts 49 are attached, and are arranged side by side at predetermined dimension intervals in the width direction. Air cylinders are used for the roller lifting/lowering mechanisms 46, and the shafts 49 and the rollers 45 are lifted and lowered in the up-down direction together with the seat by the roller lifting/lowering mechanisms 46 (air cylinders). A lifting dimension and a lowering dimension of the roller lifting/lowering mechanisms 46 are set in advance. A control unit that controls start/stop of the roller lifting/lowering mechanism 46 is connected to the controller via a signal line.

While the loading conveyor 43 is conveying the glass plate 11, the rollers 45 (the seat and the shafts 49) are lowered below the loading conveyor 43 by the roller lifting/lowering mechanisms 46, and the rollers 45 are not in contact with the lower surface 13 of the glass plate 11. When the rollers 45 are lifted by the roller lifting/lowering mechanisms 46, a part of a circumferential edge portion of each of the rollers 45 is exposed above the loading conveyors 43, and the glass plate 11 is lifted above the loading conveyor 43 by the rollers 45.

The moving mechanism 47 includes a rod 50 positioned above the loading conveyors 43 and the rollers 45, the third servomotor 51 mounted on the rod 50, a feed screw (feed screw mechanism) (not illustrated) mounted on the rod 50 and coupled to the shaft of the third servomotor 51, a moving arm 52 extending downward from the rod 50, and a contact member 53 installed at a lower end portion of the moving arm 52.

The rod 50 is attached to rear surfaces of the first pillars 26a and extends in the width direction. The moving arm 52 is movably installed on the feed screw and linearly moves to one side and the other side in the width direction along the rod 50 depending on rotation of the feed screw due to rotation of the shaft of the third servomotor 51. The contact member 53 linearly moves to the one side and the other side in the width direction together with the moving arm 52 depending on the movement of the moving arm 52 in the width direction. The contact member 53 comes into contact with the second side edge 15 (the other side edge) of the glass plate 11 in a state in which the rollers 45 lifted by the roller lifting/lowering mechanisms 46 are in contact with the lower surface 13 of the glass plate 11, and the contact member 53 presses the glass plate 11 in the width direction so that the glass plate 11 moves in the width direction. A control unit that controls start/stop, revolutions per minute, or rotation speed of the third servomotor 51 is connected to the controller via a signal line.

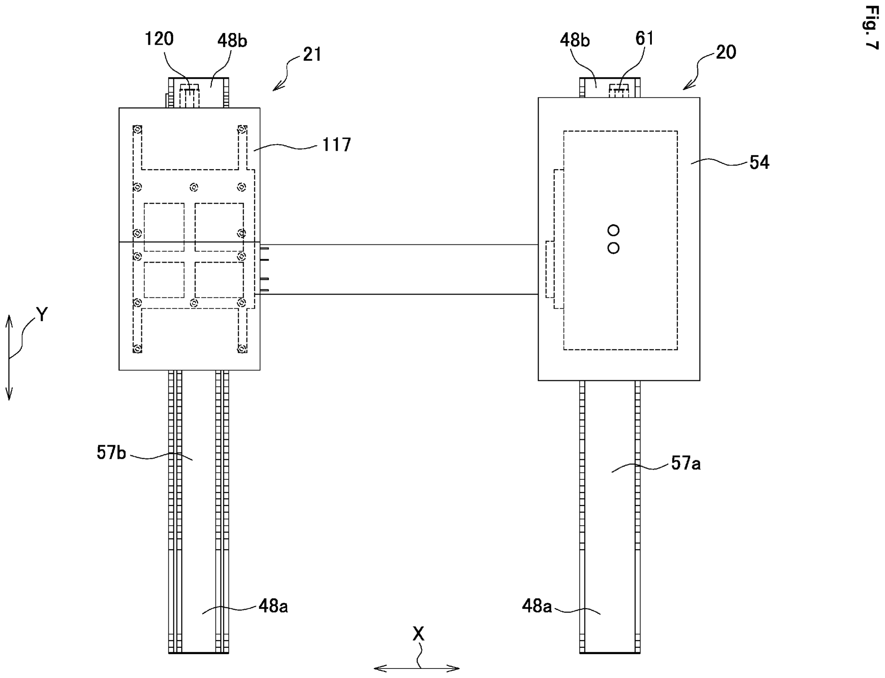

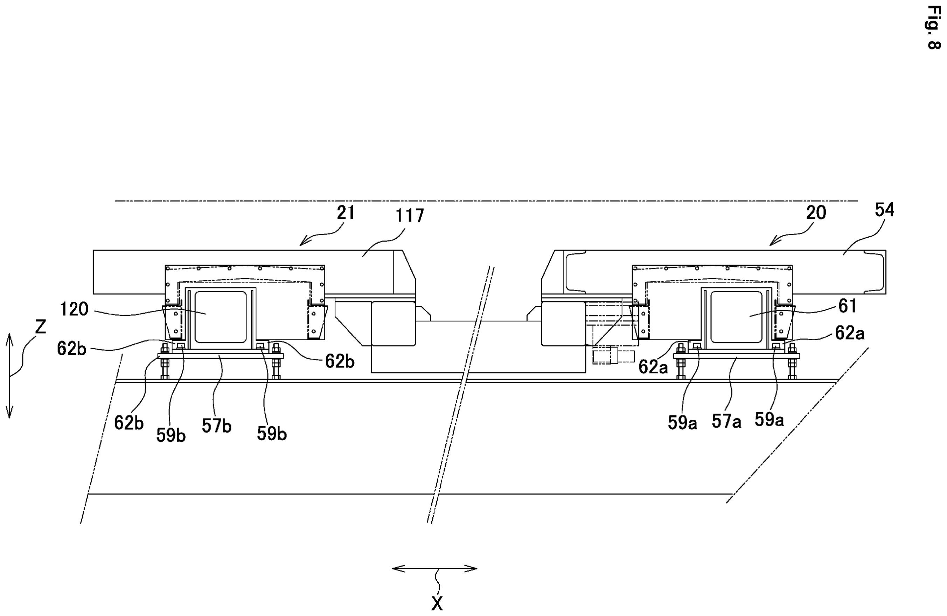

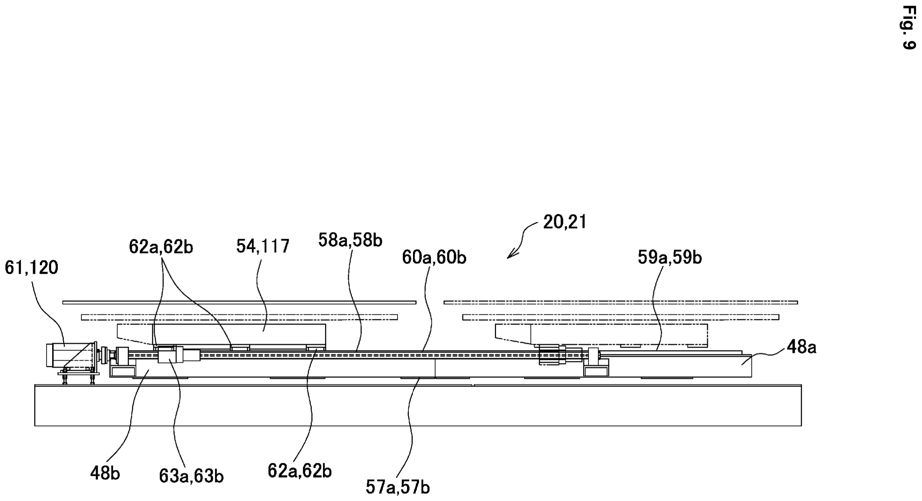

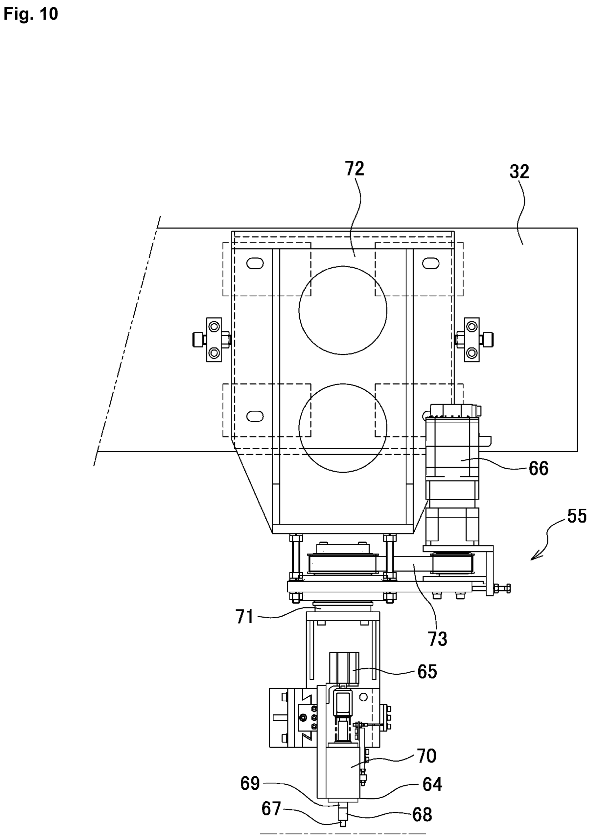

Fig. 7 is a top view of a cutting-in processing table 54 and a grinding processing table 117, and Fig. 8 is a side view of the cutting-in processing table 54 and the grinding processing table 117. Fig. 9 is a view illustrating movement of the cutting-in processing table 54 and the grinding processing table 117, and Fig. 10 is a side view of the cutting-in device 55 illustrated as an example installed in the cutting-in processing area 20. Fig. 11 is a front view of the cutting-in device 55. In Figs. 7 and 8, the front-rear direction (X-axis direction) is represented by an arrow X, the width direction (Y-axis direction) is represented by an arrow Y, and the up-down direction (Z-axis direction) is represented by an arrow Z.

The cutting-in processing area 20 includes a cutting-in processing table 54 (cutting-in processing base) on which the glass plate 11 positioned in the loading area 19 is placed, and the cutting-in device 55 (cutting device) that inserts an outline cutting-out line K1 (cutting-in line) into a circumferential edge area 56b (circumferential edge portion) of the glass plate 11 placed on the cutting-in processing table 54.

The cutting-in processing table 54 is installed on a base lane 57a that is fixed to the floor surface of the machine base 25 and is elongated in the width direction. The cutting-in processing table 54 uses a first moving mechanism 58a to move in the width direction in a state in which the positioned glass plate 11 is placed thereon. The first moving mechanism 58a includes travel guide rails 59a, a feed screw 60a (a ball screw), a fourth servomotor 61, guide shoes 62a, and a slide block 63a (a housing nut).

The travel guide rails 59a are installed on an upper surface of the base lane 57a and extend in the width direction. The feed screw 60a (ball screw) is installed on the upper surface of the base lane 57a, that is, on a side of the travel guide rail 59a, and extends in the width direction. The fourth servomotor 61 is installed behind the machine base 25 and causes the cutting-in processing table 54 to reciprocate in the width direction. An end portion of the feed screw 60a on the other side is coupled to a shaft of the fourth servomotor 61.

The feed screw 60a is rotatably supported by a bearing (not illustrated) fixed to the base lane 57a. The guide shoes 62a are attached to a lower surface of the cutting-in processing table 54 and extend in the width direction. The guide shoes 62a are slidably fitted in the travel guide rails 59a. The slide block 63a (housing nut) is attached to the lower surface of the cutting-in processing table 54 and between the guide shoes 62a. The slide block 63a is rotatably screwed to the feed screw 60a.

When the shaft of the fourth servomotor 61 rotates in the clockwise direction (rotation direction when the fourth servomotor 61 is viewed from the front), the feed screw 60a rotates in the clockwise direction, thereby causing the slide block 63a to move the feed screw 60a in the width direction from a side edge portion 48b (the other side edge portion) toward a side edge portion 48a (one side edge portion) of the cutting-in processing area 20, and the movement of the slide block 63a causes the cutting-in processing table 54 to move in the width direction from the side edge portion 48b toward the side edge portion 48a of the cutting-in processing area 20. Conversely, when the shaft of the fourth servomotor 61 rotates in the counterclockwise direction, the feed screw 60a rotates in the counterclockwise direction, thereby causing the slide block 63a to move the feed screw 60a in the width direction from the side edge portion 48a (the one side edge portion) toward the side edge portion 48b (the other side edge portion) of the cutting-in processing area 20, and the movement of the slide block 63a causes the cutting-in processing table 54 to move in the width direction from the side edge portion 48a toward the side edge portion 48b of the cutting-in processing area 20.

The cutting-in device 55 includes a cutting-in jig 64, an air cylinder 65, and a fifth servomotor 66. The cutting-in jig 64 includes a cutting-in cutter wheel 67, a cutting-in cutter holder 68, a cutter lifting/lowering shaft 69, and a cutter lifting/lowering guide 70. The cutting-in cutter wheel 67 is coupled to the cutting-in cutter holder 68 via a bearing (not illustrated) and freely rotates along a shaft center of the bearing interposed therebetween. The cutting-in cutter wheel 67 forms an outline cutting-out line K1 in the circumferential edge area 56b (a circumferential edge portion) of the glass plate 11.

The cutting-in cutter holder 68 is positioned directly on the cutting-in cutter wheel 67 and coupled to the cutter wheel 67 and supports the cutter wheel 67. The cutter lifting/lowering shaft 69 is positioned directly on the cutting-in cutter holder 68 and coupled to the cutter holder 68 and supports the cutter holder 68. The cutter lifting/lowering guide 70 is positioned directly on the cutter lifting/lowering shaft 69 and coupled to the cutter lifting/lowering shaft 69 and supports the cutter lifting/lowering shaft 69. The cutting-in jig 64 (including the air cylinder 65) is coupled to a support shaft 71 that is positioned directly above the air cylinder 65 and rotatably supports the cutting-in jig 64. The support shaft 71 is attached to a bracket 72 positioned directly above the support shaft. The bracket 72 is coupled to the first moving unit 28 of the conveyance mechanism 24 that moves forward and rearward (linearly moves) in the front-rear direction (X-axis direction).

The air cylinder 65 is installed directly above the cutter lifting/lowering shaft 69. The air cylinder 65 lifts and lowers the cutting-in cutter wheel 67 (the cutting-in cutter holder 68) in the up-down direction (Z-axis direction) and lowers the cutter wheel 67 toward the upper surface 12 of the glass plate 11 to apply a cutting-in pressure (downward pressure) to the cutter wheel 67 when the outline cutting-out line K1 (cutting-in line) is formed in the circumferential edge area 56b of the glass plate 11. A shaft of the fifth servomotor 66 is coupled to the support shaft 71 via a timing belt 73. The fifth servomotor 66 adjusts an orientation (an angle around the shaft orthogonal to an XY plane) of the cutting-in jig 64 (the cutting-in cutter wheel 67) in a cutting-in direction.

In the cutting-in device 55, a control unit of the fifth servomotor 66 rotates the shaft of the motor 66 based on an NC control signal transmitted from the controller and performs NC control on the cutting-in jig 64 (the cutting-in cutter wheel 67), and the cutting-in jig 64 forms the outline cutting-out line K1 according to a shape desired to be processed in the circumferential edge area 56b (the circumferential edge portion) of the glass plate 11 in response to the NC control. A control unit that controls start/stop, revolutions per minute, or rotation speed of each of the fourth and fifth servomotors 61 and 66 is connected to the controller via a signal line.

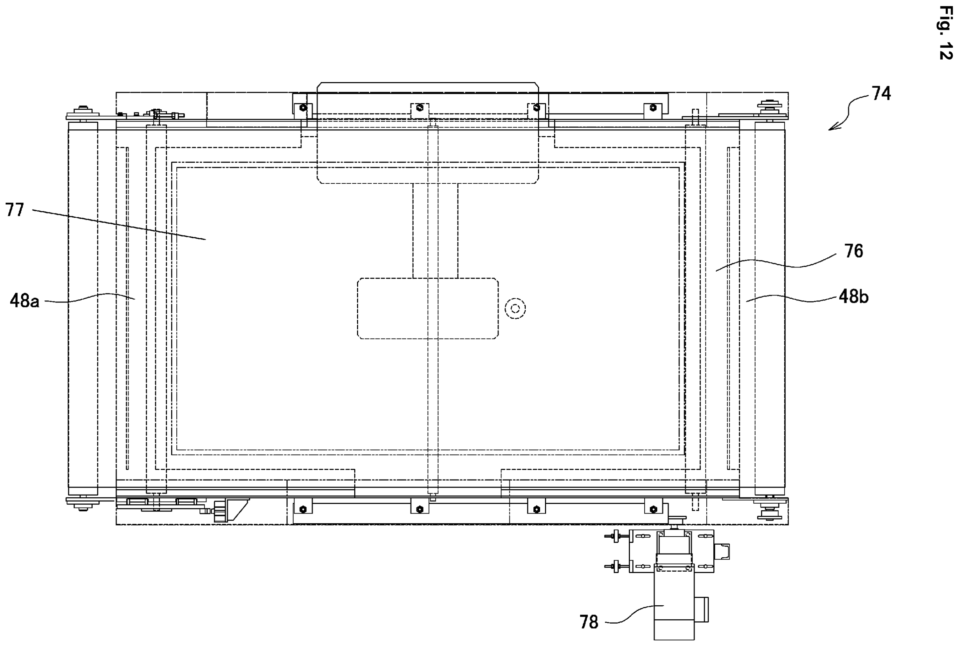

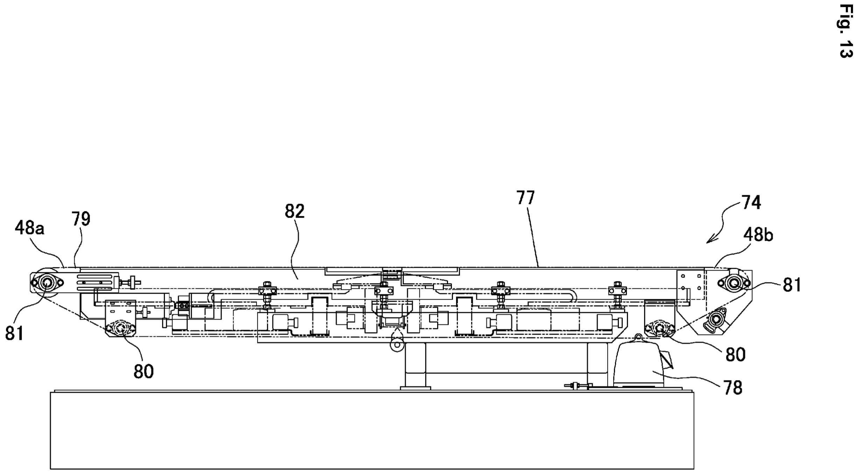

Fig. 12 is a top view of a bend-breaking processing table 74, and Fig. 13 is a side view of the bend-breaking processing table 74. The bend-breaking processing area 21 includes the bend-breaking processing table 74 on which the glass plate 11 positioned in the loading area 19 and subjected to the cutting-in processing in the cutting-in processing area 20 is placed, the bend-breaking device 75 that bend-breaks the circumferential edge area 56b (circumferential edge portion) of the glass plate 11 which is positioned outside of the outline cutting-out line K1 (cutting-in line), the glass plate 11 being placed on the bend-breaking processing table 74, and support devices 76a and 76b that support the glass plate 11.

The bend-breaking processing table 74 includes a belt conveyor 77 that travels in the width direction (Y-axis direction) and a conveyor drive motor 78 that causes the belt conveyor 77 to travel, and is installed on a base panel fixed to a floor surface of the machine base 25. The belt conveyor 77 includes a belt 79 extending in the width direction, a plurality of pulleys 80 and carrier rollers 81 that support the belt 79, and a conveyor frame 82 that supports the belt 79, the pulleys 80, and the carrier rollers 81. The glass plate 11 subjected to the cutting-in processing is placed on the belt conveyor 77. The belt conveyor 77 conveys the circumferential edge area 56b of the glass plate 11 bend-broken by the bend-breaking device 75 to the other side (from the side edge portion 48a to the side edge portion 48b) in the width direction and discards the bend-broken circumferential edge area 56b of the glass plate 11 in a dust box (not illustrated).

A shaft of the conveyor drive motor 78 is coupled to the pulleys 80 by a timing belt. A control unit that controls start/stop of the conveyor drive motor 78 is connected to the controller via a signal line. A rotation speed (travel speed of the belt) of the shaft of the conveyor drive motor 78 is set in advance, and the rotation speed is stored (saved) in association with specific information of the conveyor drive motor 78 in the large-capacity hard disk of the controller. When the shaft of the conveyor drive motor 78 rotates in the clockwise direction, the rotation thereof is transmitted to the pulleys 80 via the timing belt, the pulleys 80 rotate in the clockwise direction, and the rotation of the pulleys 80 causes the belt 79 to travel toward the other side in the width direction.

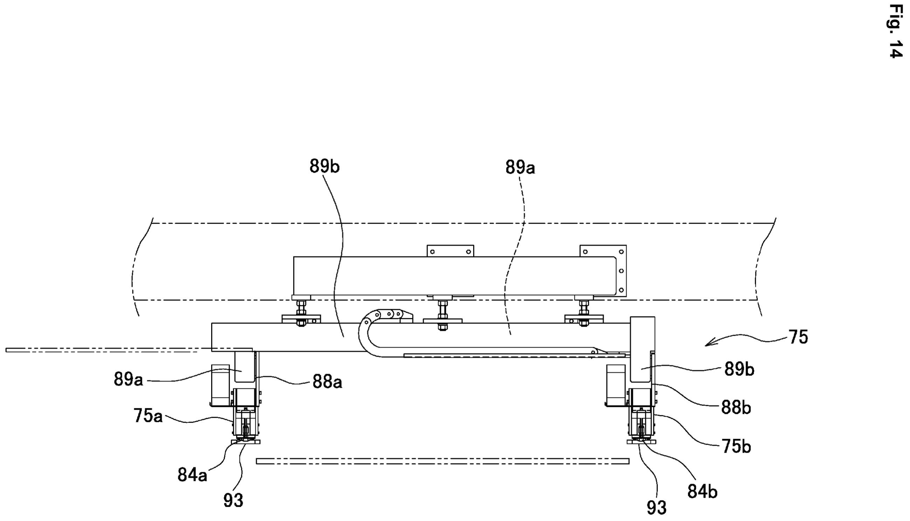

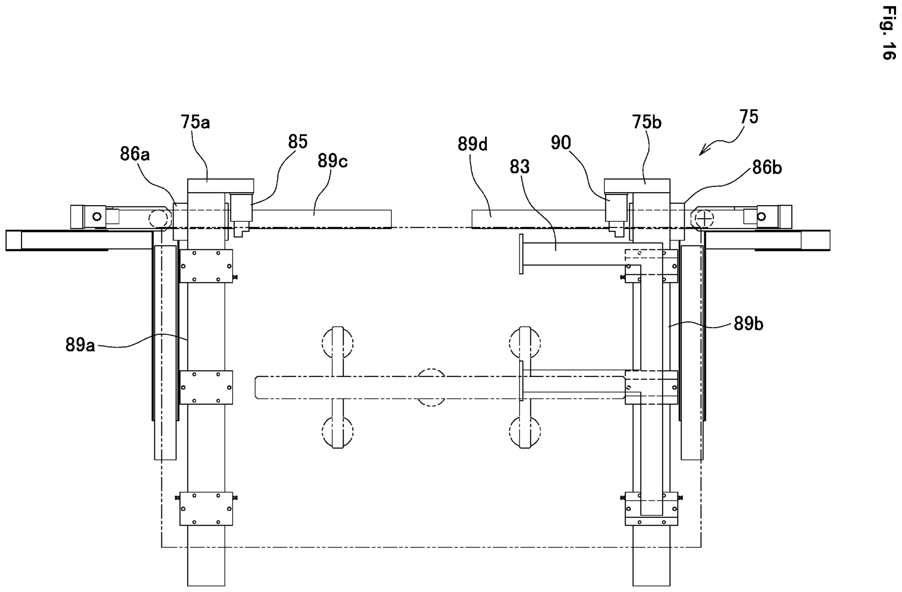

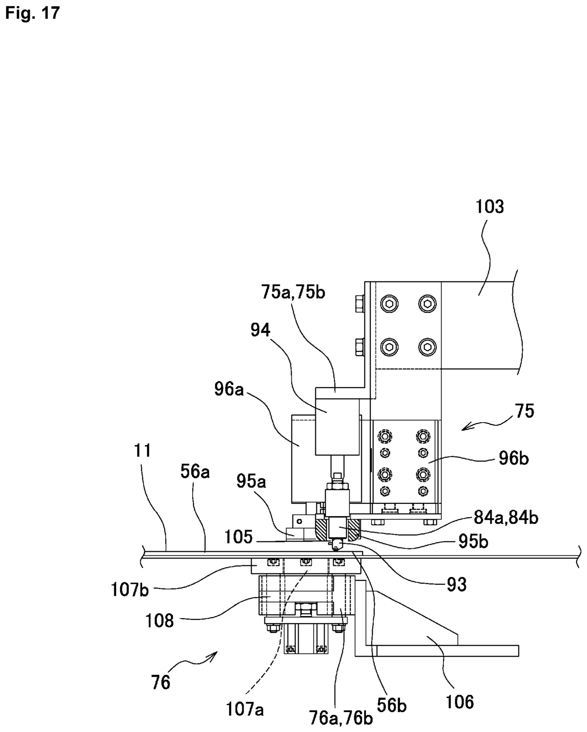

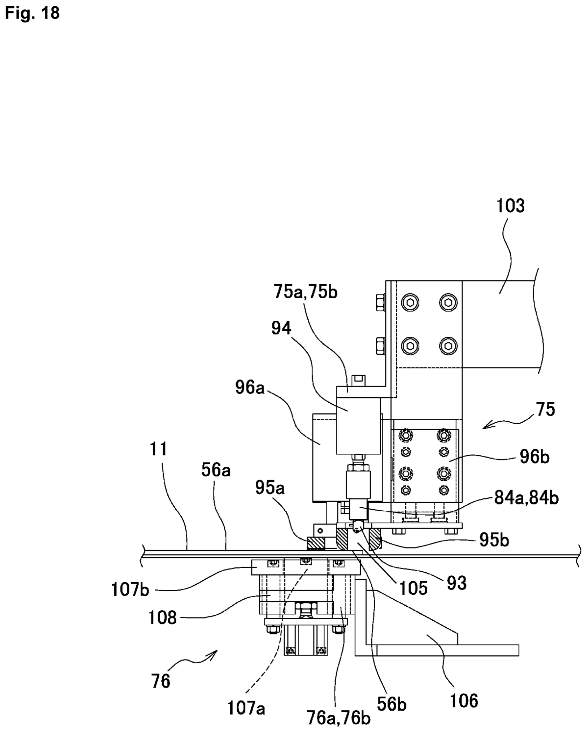

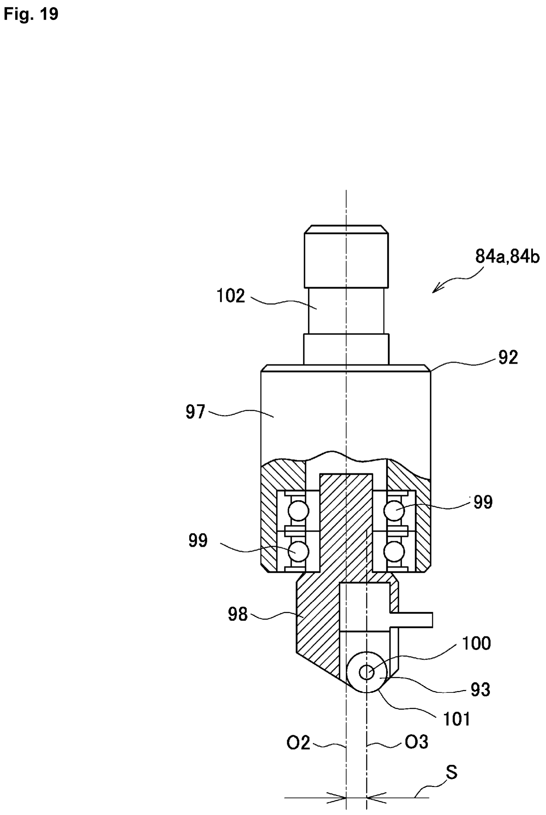

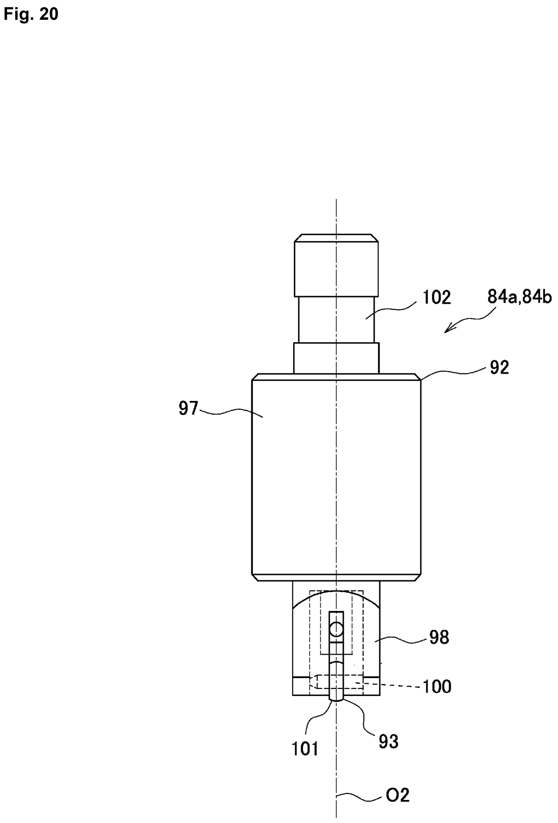

Fig. 14 is a side view of the bend-breaking device 75, and Fig. 15 is a front view of the bend-breaking device 75. Fig. 16 is a top view of the bend-breaking device 75, and Figs. 17 and 18 are enlarged front views of the bend-breaking device 75. Fig. 19 is a partially cross-sectional side view of a first or second bend-breaking jig 84a or 84b, and Fig. 20 is a front view of the first or second bend-breaking jig 84a or 84b. Fig. 17 illustrates a state in which a bend-breaking cutter wheel 93 is lowered and first and second pressing members 95a and 95b are lifted. Fig. 18 illustrates a state in which the bend-breaking cutter wheel 93 is lifted and the first and second pressing members 95a and 95b are lowered.

The bend-breaking devices 75 include two devices of a first bend-breaking device 75a and a second bend-breaking device 75b which are spaced apart in the width direction. The first bend-breaking device 75a is coupled to the first guide frame 30, and the second bend-breaking device 75b is coupled to a suspension frame 83. The suspension frame 83 is coupled to a side portion of the second guide frame 35. The first bend-breaking device 75a includes a first bend-breaking jig 84a (the bend-breaking jig), a sixth servomotor 85 (an X-axis servomotor) and an X-axial first actuator 86a, a seventh servomotor 87 (a Y-axis servomotor) and a Y-axial first actuator 88a, and an X-axial first actuator frame 89a and a Y-axial first actuator frame 89c. The X-axial first actuator frame 89a and the Y-axial first actuator frame 89c are connected to each other in series at one end portion of each of the first actuator frames.

The second bend-breaking device 75b includes a second bend-breaking jig 84b (the bend-breaking jig), an eighth servomotor 90 (an X-axis servomotor) and an X-axial second actuator 86b, a ninth servomotor 91 (a Y-axis servomotor) and a Y-axial second actuator 88b, and an X-axial second actuator frame 89b and a Y-axial second actuator frame 89d. The X-axial second actuator frame 89b and the Y-axial second actuator frame 89d are connected to each other in series at one end portion of each of the second actuator frames.

As illustrated in Figs. 19 and 20, each of the first and second bend-breaking jigs 84a and 84b includes a bend-breaking cutter holder 92, the bend-breaking cutter wheel 93, a holder lifting/lowering mechanism 94 (a first lifting/lowering mechanism), the first pressing member 95a that presses downward a main body portion 56a of the glass plate 11 (the glass plate 11 extending inward from the outline cutting-out line K1) on which the outline cutting-out line K1 (the cutting-in line) and the end cutting line K2 are formed, the second pressing member 95b that presses downward the circumferential edge area 56b of the glass plate 11 (the glass plate 11 extending outward from the outline cutting-out line K1) on which the outline cutting-out line K1 (the cutting-in line) and the end cutting line K2 are formed, a first pressing member lifting/lowering mechanism 96a (a second lifting/lowering mechanism), and a second pressing member lifting/lowering mechanism 96b (a second lifting/lowering mechanism). The bend-breaking cutter holder 92 is positioned above the bend-breaking cutter wheel 93 and supports the bend-breaking cutter wheel 93. The bend-breaking cutter holder 92 includes a holder main body 97 having a coupling portion, and a holder head 98 attached to a distal end of the holder main body 97.

The bend-breaking cutter wheel 93 forms the end cutting line K2 (a scribe) in the circumferential edge area 56b of the glass plate 11 which is a processing target (the circumferential edge portion of the glass plate 11 which extends outward from the outline cutting-out line K1). The bend-breaking cutter wheel 93 is rotatably (rollably) attached to a distal end of the holder head 98 via a rolling shaft 100, and a circumferential edge 101 rolls around the rolling shaft 100. The bend-breaking cutter wheel 93 has a cutter wheel axis line 03 extending in the up-down direction which is eccentric (displaced) outward in the radial direction with respect to a cutter holder center axis line O2 of the bend-breaking cutter holder 92 (the holder main body 97) which extends in the up-down direction. A separation dimension S (an eccentric dimension) of the cutter wheel axis line 03 with respect to the cutter holder center axis line O2 in the width direction falls within a range of 0.5 to 2 mm.

The holder head 98 is coupled to the holder main body 97 via a bearing 99, freely rotates along a shaft center of the bearing 99 interposed therebetween, and is rotatable by 360° in a direction (θ direction) around the cutter holder center axis line O2 of the bend-breaking cutter holder 92. The holder head 98 rotates in the clockwise direction and the counterclockwise direction about the cutter holder center axis line 02. When the holder head 98 rotates, the bend-breaking cutter wheel 93 (bend-breaking cutter wheel 93 having the cutter wheel axis line 03 that is eccentric with respect to the cutter holder center axis line O2) is rotatable by 360° in the direction around the cutter holder center axis line O2 with respect to the bend-breaking cutter holder 92. The bend-breaking cutter wheel 93 rotates in the clockwise direction and the counterclockwise direction around the cutter holder center axis line O2.

Since the cutter wheel axis line 03 of the bend-breaking cutter wheel 93 is eccentric outward in the radial direction with respect to the cutter holder center axis line 02, a caster effect is achieved in which a rolling (moving) direction of the circumferential edge 101 of the bend-breaking cutter wheel 93 is opposite to a traveling (moving) direction of the first and second bend-breaking jigs 84a and 84b (the bend-breaking cutter holders 92) (a direction in which the imaginary end cutting line extends) when the first and second bend-breaking jigs 84a and 84b (the bend-breaking cutter holder 92) travel (move) along the upper surface 12 of the glass plate 11 in a predetermined direction.

The holder lifting/lowering mechanism 94 (the first lifting/lowering mechanism) is installed directly above the holder main body 97 and is coupled to a coupling portion 102 of the bend-breaking cutter holder 92 (the holder main body 97). The holder lifting/lowering mechanism 94 is fixed to a bracket 103 by a fixing member. An air cylinder is used in the holder lifting/lowering mechanism 94 (the first lifting/lowering mechanism). The holder lifting/lowering mechanisms 94 (the air cylinder) lift and lower (move up and down) the bend-breaking cutter holders 92 (the bend-breaking cutter wheels 93) of the first and second bend-breaking jigs 84a and 84b, respectively, in the up-down direction (Z-axis direction). When the bend-breaking processing is performed on the circumferential edge area 56b of the glass plate 11, the holder lifting/lowering mechanism 94 lowers the cutter wheel 93 toward the upper surface 12 of the glass plate 11 and applies (puts) an end cutting pressure (downward pressure) to the cutter wheel 93. A lifting dimension and a lowering dimension of the holder lifting/lowering mechanism are set in advance.

The first pressing member 95a is made of rubber or a synthetic resin having rubber elasticity. The first pressing member 95a is positioned in the vicinity of an outer side of the second pressing member 95b and extends in a direction around the second pressing member 95b. The first pressing member 95a has a first pressing surface 104a having a predetermined area which is brought into contact with the upper surface 12 of the glass plate 11. The first pressing surface 104a is formed in a semi-annular shape surrounding the second pressing member 95b.

The first pressing member lifting/lowering mechanism 96a (the second lifting/lowering mechanism) is positioned on a side of the first pressing member 95a in the width direction and is fixed to the bracket 103 by a fixing member. An air cylinder is used in the first pressing member lifting/lowering mechanism 96a. The first pressing member lifting/lowering mechanisms 96a lift and lower (move up and down) the first pressing members 95a of the first and second bend-breaking jigs 84a and 84b, respectively, in the up-down direction (Z-axis direction).

When the bend-breaking processing is performed on the circumferential edge area 56b of the glass plate 11, the first pressing member lifting/lowering mechanism 96a (the second lifting/lowering mechanism) lowers the first pressing member 95a toward the upper surface 12 of the glass plate 11 and applies a downward pressure to the first pressing member 95a. A lifting dimension and a lowering dimension of the first pressing member 95a are set in advance. One bracket 103 is slidably attached to the X-axial first actuator frame 89a and the Y-axial first actuator frame 89c.

The second pressing member 95b is made of rubber or a synthetic resin having rubber elasticity. The second pressing member 95b is positioned in the vicinity of an outer side of the bend-breaking cutter wheel 93 and extends in a direction around the bend-breaking cutter wheel 93. The second pressing member 95b has a second pressing surface 104b having a predetermined area which is brought into contact with the upper surface 12 of the glass plate 11. The second pressing surface 104b is formed in a semi-annular shape surrounding the bend-breaking cutter wheel 93. A through-hole 105 is punched (formed) to penetrate the second pressing member 95b at the center thereof in the up-down direction.

The second pressing member lifting/lowering mechanism 96b (the third lifting/lowering mechanism) is positioned on a side of the second pressing member 95b in the width direction and is fixed to the bracket 103 by a fixing member. An air cylinder is used in the second pressing member lifting/lowering mechanism 96b. The second pressing member lifting/lowering mechanisms 96b lift and lower (move up and down) the second pressing members 95b of the first and second bend-breaking jigs 84a and 84b, respectively, in the up-down direction (Z-axis direction). When the bend-breaking processing is performed on the circumferential edge area 56b of the glass plate 11, the second pressing member lifting/lowering mechanism 96b (the third lifting/lowering mechanism) lowers the second pressing member 95b toward the upper surface 12 of the glass plate 11 and applies a downward pressure to the second pressing member 95b. A lifting dimension and a lowering dimension of the second pressing member 95b are set in advance. The other bracket 103 is slidably attached to the X-axial second actuator frame 89b and the Y-axial second actuator frame 89d.

A control unit that controls start/stop of the holder lifting/lowering mechanism 94 (the first lifting/lowering mechanism), a control unit that controls start/stop of the first pressing member lifting/lowering mechanism 96a (the second lifting/lowering mechanism), and a control unit that controls start/stop of the second pressing member lifting/lowering mechanism 96b (the third lifting/lowering mechanism) are connected to the controller via respective signal lines. The holder lifting/lowering mechanism 94 lifts and lowers the bend-breaking cutter holders 92 (the bend-breaking cutter wheels 93). The first pressing member lifting/lowering mechanism 96a lifts and lowers the first pressing members 95a. The second pressing member lifting/lowering mechanism 96b lifts and lowers the second pressing members 95b.

The sixth servomotor 85 (an X-axis servomotor) is installed on the X-axial first actuator frame 89a, and a shaft thereof is coupled to the X-axial first actuator 86a. The X-axial first actuator 86a has a screw portion and a guide portion (not illustrated). When the shaft of the sixth servomotor 85 rotates in the clockwise direction, the screw portion of the X-axial first actuator 86a rotates in the clockwise direction. When the screw portion rotates in the counterclockwise direction, the first bend-breaking jig 84a of the first bend-breaking device 75a moves forward in the front-rear direction together with the bracket 103 along the X-axial first actuator frame 89a. When the shaft of the sixth servomotor 85 rotates in the counterclockwise direction, the screw portion of the X-axial first actuator 86a rotates in the counterclockwise direction. When the screw portion rotates in the counterclockwise direction, the first bend-breaking jig 84a of the first bend-breaking device 75a moves rearward in the front-rear direction together with the bracket 103 along the X-axial first actuator frame 89a.

The seventh servomotor 87 (Y-axis servomotor) is installed on the Y-axial first actuator frame 89c, and a shaft thereof is coupled to the Y-axial first actuator 88a. The Y-axial first actuator 88a has a screw portion and a guide portion (not illustrated). When the shaft of the seventh servomotor 87 rotates in the clockwise direction, the screw portion of the Y-axial first actuator 88a rotates in the clockwise direction. When the screw portion rotates in the counterclockwise direction, the first bend-breaking jig 84a of the first bend-breaking device 75a moves toward one side in the width direction together with the bracket 103 along the Y-axial first actuator frame 89c. When the shaft of the seventh servomotor 87 rotates in the counterclockwise direction, the screw portion of the Y-axial first actuator 88a rotates in the counterclockwise direction. When the screw portion rotates in the counterclockwise direction, the first bend-breaking jig 84a of the first bend-breaking device 75a moves toward the other side in the width direction together with the bracket 103 along the Y-axial first actuator frame 89c. A control unit that controls start/stop, revolutions per minute, or rotation speed of each of the sixth and seventh servomotors 85 and 87 is connected to the controller via a signal line.

The eighth servomotor 90 (an X-axis servomotor) is installed on the X-axial second actuator frame 89b, and a shaft thereof is coupled to the X-axial second actuator 86b. The X-axial second actuator 86b has a screw portion and a guide portion (not illustrated). When the shaft of the eighth servomotor 90 rotates in the clockwise direction, the screw portion of the X-axial second actuator 86b rotates in the clockwise direction. When the screw portion rotates in the counterclockwise direction, the second bend-breaking jig 84b of the second bend-breaking device 75b moves forward in the front-rear direction together with the bracket 103 along the X-axial second actuator frame 89b. When the shaft of the eighth servomotor 90 rotates in the counterclockwise direction, the screw portion of the X-axial second actuator 86b rotates in the counterclockwise direction. When the screw portion rotates in the counterclockwise direction, the second bend-breaking jig 84b of the second bend-breaking device 75b moves rearward in the front-rear direction together with the bracket 103 along the X-axial second actuator frame 89b. A control unit that controls start/stop, revolutions per minute, or rotation speed of each of the eighth and ninth servomotors 90 and 91 is connected to the controller via a signal line.

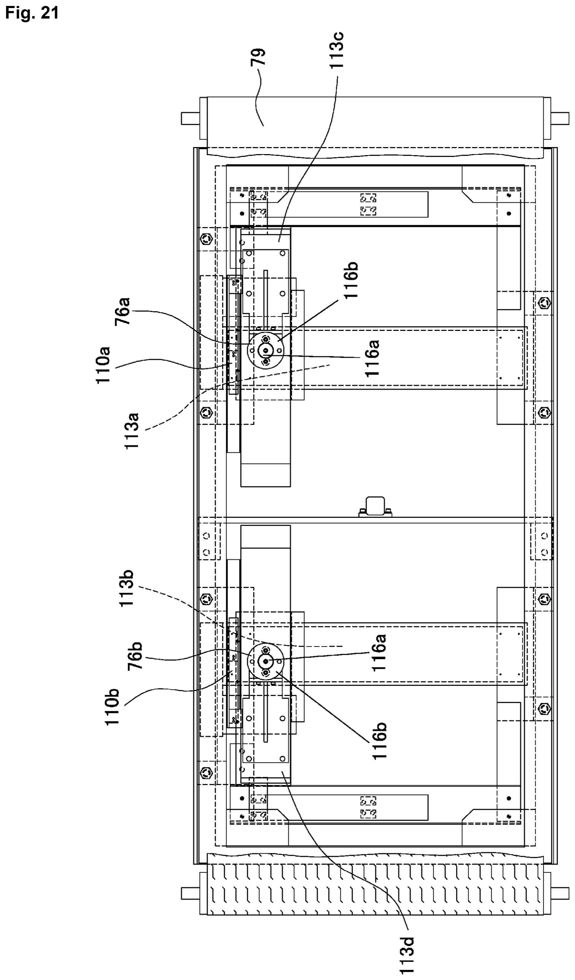

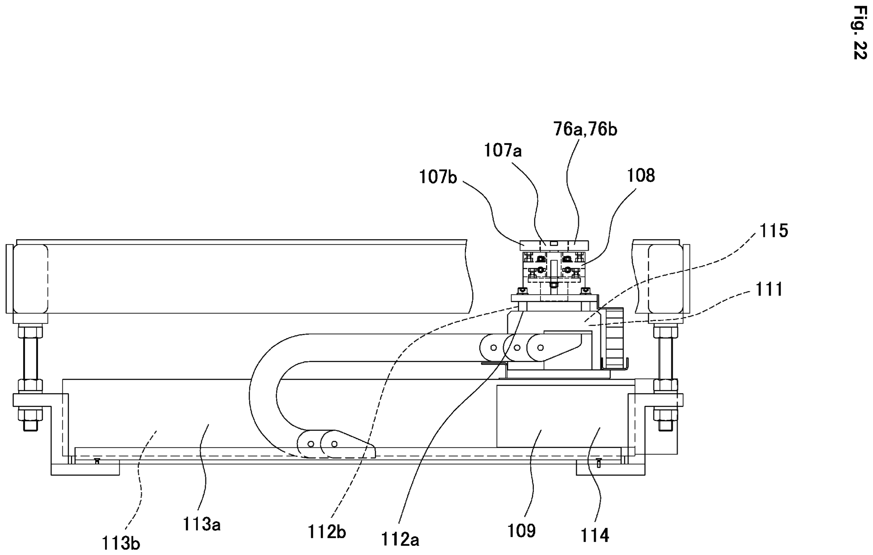

Fig. 21 is a top view of the bend-breaking processing table 74 from which first and second support devices 76a and 76b are exposed, and Fig. 22 is a front view of the bend-breaking processing table 74 when the support devices 76a and 76b are viewed from the front. The support devices 76 include two devices of the first support device 76a and the second support device 76b which are spaced apart in the width direction. The first and second support devices 76a and 76b are coupled to a guide frame 106.

The first support device 76a includes a first support member 107a and a second support member 107b, a second support member lifting/lowering mechanism 108 (a fourth lifting/lowering mechanism) that lifts and lowers the second support member 107b in the up-down direction, a tenth servomotor 109 (an X-axis servomotor) and an X-axial third actuator 110a, an eleventh servomotor 111 (a Y-axis servomotor) and a Y-axial third actuator 112a, and an X-axial third actuator frame 113a and a Y-axial third actuator frame 113c.

The second support device 76b includes a first support member 107a and a second support member 107b, a second support member lifting/lowering mechanism 108 (the fourth lifting/lowering mechanism) that lifts and lowers the second support member 107b in the up-down direction, a twelfth servomotor 114 (an X-axis servomotor) and an X-axial fourth actuator 110b, a thirteenth servomotor 115 (a Y-axis servomotor) and a Y-axial fourth actuator 112b, and an X-axial fourth actuator frame 113b and a Y-axial fourth actuator frame 113d.

The first support member 107a is positioned inward from the second support member 107b in the radial direction and has a first support surface 116a having a predetermined area which supports the lower surface 13 of the glass plate 11. The first support surface 116a is formed in a flat circular shape. The second support member 107b is positioned outward from the first support member 107a in the radial direction and has a second support surface 116b having a predetermined area which supports the lower surface 13 of the glass plate 11. The second support surface 116b is formed in a flat annular shape surrounding the first support member 107a (the first support surface 116a).

The second support member lifting/lowering mechanism 108 (the fourth lifting/lowering mechanism) is positioned directly below the second support member 107b and is fixed to the guide frame 106 by a fixing member. An air cylinder is used in the second support member lifting/lowering mechanism 108. The second support member lifting/lowering mechanism 108 lifts and lowers (moves up and down) the second support member 107b of each of the first and second support devices 76a and 76b in the up-down direction (Z-axis direction). When the bend-breaking processing is performed on the circumferential edge area 56b of the glass plate 11, the second support member lifting/lowering mechanism 108 lowers the second support member 107b from the lower surface 13 of the glass plate 11 and forms a gap (a step between the first support surface 116a and the second support surface 116b) between the lower surface 13 of the glass plate 11 and the second support surface 116b. A lowering dimension of the second support member 107b is set in advance. A control unit that controls start/stop of the second support member lifting/lowering mechanism 108 (the fourth lifting/lowering mechanism) is connected to the controller via a signal line.

The tenth servomotor 109 (the X-axis servomotor) is installed on the X-axial third actuator frame 113a, and a shaft thereof is coupled to the X-axial third actuator 110a. The X-axial third actuator 110a has a screw portion and a guide portion (not illustrated). When the shaft of the tenth servomotor 109 rotates in the clockwise direction, the screw portion of the X-axial third actuator 110a rotates in the clockwise direction. When the screw portion rotates in the counterclockwise direction, the first support device 76a moves forward in the front-rear direction together with the guide frame 106 along the X-axial third actuator frame 113a. When the shaft of the tenth servomotor 109 rotates in the counterclockwise direction, the screw portion of the X-axial third actuator 110a rotates in the counterclockwise direction. When the screw portion rotates in the counterclockwise direction, the first support device 76a moves rearward in the front-rear direction together with the guide frame 106 along the X-axial third actuator frame 113a.

The eleventh servomotor 111 (the Y-axis servomotor) is installed on the Y-axial third actuator frame 113c, and a shaft thereof is coupled to the Y-axial third actuator 112a. The Y-axial third actuator 112a has a screw portion and a guide portion (not illustrated). When the shaft of the eleventh servomotor 111 rotates in the clockwise direction, the screw portion of the Y-axial third actuator 112a rotates in the clockwise direction. When the screw portion rotates in the counterclockwise direction, the first support device 76a moves toward one side in the width direction together with the guide frame 106 along the Y-axial third actuator frame 113c. When the shaft of the eleventh servomotor 111 rotates in the counterclockwise direction, the screw portion of the Y-axial third actuator 112a rotates in the counterclockwise direction. When the screw portion rotates in the counterclockwise direction, the first support device 76a moves toward the other side in the width direction together with the guide frame 106 along the Y-axial third actuator frame 113c. Note that the first support device 76a moves in the front-rear direction and the width direction (horizontal direction) in synchronization with the first bend-breaking device 75a (the first bend-breaking jig 84a). A control unit that controls start/stop, revolutions per minute, or rotation speed of each of the tenth and eleventh servomotors 109 and 111 is connected to the controller via a signal line.

The twelfth servomotor 114 (the X-axis servomotor) is installed on the X-axial fourth actuator frame 113b, and a shaft thereof is coupled to the X-axial fourth actuator 110b. The X-axial fourth actuator 110b has a screw portion and a guide portion (not illustrated). When the shaft of the twelfth servomotor 114 rotates in the clockwise direction, the screw portion of the X-axial fourth actuator 110b rotates in the clockwise direction. When the screw portion rotates in the counterclockwise direction, the second support device 76b moves forward in the front-rear direction together with the guide frame 106 along the X-axial fourth actuator frame 113b. When the shaft of the twelfth servomotor 114 rotates in the counterclockwise direction, the screw portion of the X-axial fourth actuator 110b rotates in the counterclockwise direction. When the screw portion rotates in the counterclockwise direction, the second support device 76b moves rearward in the front-rear direction together with the guide frame 106 along the X-axial fourth actuator frame 113b.

The thirteenth servomotor 115 (the Y-axis servomotor) is installed on the Y-axial fourth actuator frame 113d, and a shaft thereof is coupled to the Y-axial fourth actuator 112b. The Y-axial fourth actuator 112b has a screw portion and a guide portion (not illustrated). When the shaft of the thirteenth servomotor 115 rotates in the clockwise direction, the screw portion of the Y-axial fourth actuator 112b rotates in the clockwise direction. When the screw portion rotates in the counterclockwise direction, the second support device 76b moves toward one side in the width direction together with the guide frame 106 along the Y-axial fourth actuator frame 113d. When the shaft of the thirteenth servomotor 115 rotates in the counterclockwise direction, the screw portion of the Y-axial fourth actuator 112b rotates in the counterclockwise direction. When the screw portion rotates in the counterclockwise direction, the second support device 76b moves toward the other side in the width direction together with the guide frame 106 along the Y-axial fourth actuator frame 113d. Note that the second support device 76b moves in the front-rear direction and the width direction (horizontal direction) in synchronization with the second bend-breaking device 75b (the second bend-breaking jig 84b). A control unit that controls start/stop, revolutions per minute, or rotation speed of each of the twelfth and thirteenth servomotors 114 and 115 is connected to the controller via a signal line.

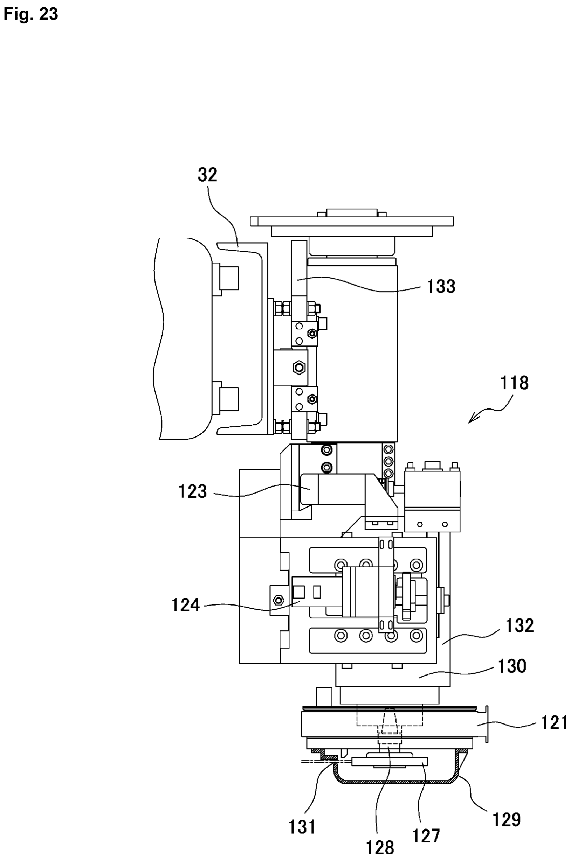

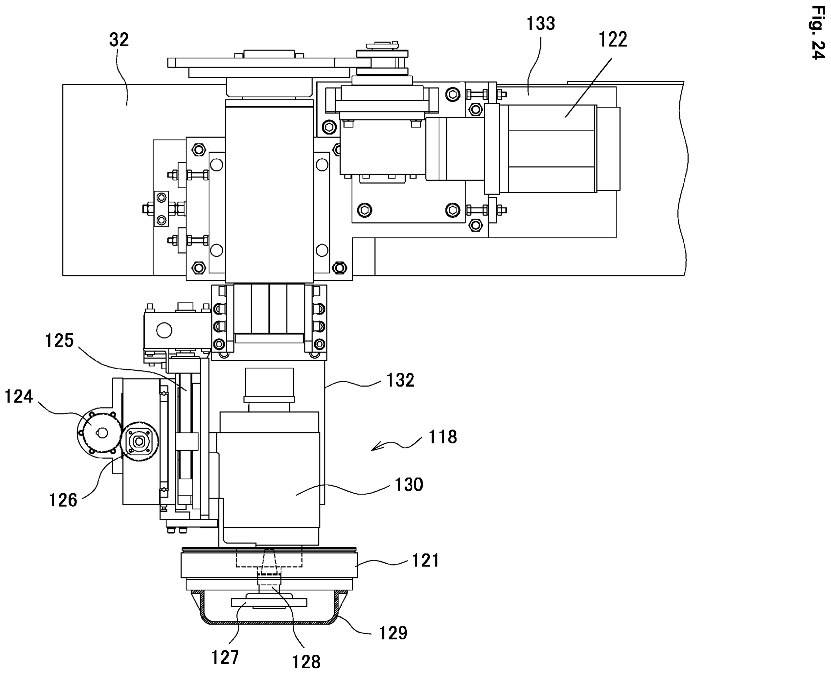

Fig. 23 is a front view of the grinding device 118 illustrated as an example installed in the grinding processing area 22, and Fig. 24 is a side view of the grinding device 118. The grinding processing area 22 includes the grinding processing table 117 (a grinding processing base) on which the glass plate 11 positioned in the loading area 19 and subjected to the cutting-in processing in the cutting-in processing area 20 and the bend-breaking processing in the bend-breaking processing area 21 is placed, and the grinding device 118 that grinds an edge (a circumferential edge) of the main body portion 56a of the glass plate 11 placed on the grinding processing table 117.

The grinding processing table 117 is installed on a base lane 57b that is fixed to the floor surface of the machine base 25 and is elongated in the width direction (see Fig. 7). The grinding processing table 117 includes a plurality of suction pads 119 that suction and hold the glass plate 11, and a vacuum mechanism (air vacuum pump) (not illustrated) that applies a suction force to the suction pads 119 by performing pressure reduction on the suction pad 119. A control unit that controls start/stop of the vacuum mechanism is connected to the controller via a signal line.

The grinding processing table 117 uses a second moving mechanism 58b to move in the width direction in a state in which the positioned glass plate 11 is placed thereon. The second moving mechanism 58b includes travel guide rails 59b, a feed screw 60b (a ball screw), a fourteenth servomotor 120, guide shoes 62b, and a slide block 63b (a housing nut). The travel guide rails 59b are installed on an upper surface of the base lane 57b and extend in the width direction. The feed screw 60b (the ball screw) is installed on the upper surface of the base lane 57b, that is, on a side of the travel guide rail 59b, and extends in the width direction. The fourteenth servomotor 120 is installed on the base lane 57b and causes the grinding processing table 117 to reciprocate in the width direction. An end portion of the feed screw 60b on the other side is coupled to a shaft of the fourteenth servomotor 120. A control unit that controls start/stop, revolutions per minute, or rotation speed of the fourteenth servomotor 120 is connected to the controller via a signal line.

The feed screw 60b is rotatably supported by a bearing (not illustrated) fixed to the base lane 57b. The guide shoes 62b are attached to a lower surface of the grinding processing table 117 and extend in the width direction. The guide shoes 62b are slidably fitted in the travel guide rails 59b. The slide block 63b (the housing nut) is attached to the lower surface of the grinding processing table 117 and between the guide shoes 62b. The slide block 63b is rotatably screwed to the feed screw 60b.

When the shaft of the fourteenth servomotor 120 rotates in the clockwise direction, the feed screw 60b rotates in the clockwise direction, thereby causing the slide block 63b to move in the width direction of the feed screw 60b from the other side edge portion 48b toward one side edge portion 48a of the grinding processing area 22, and the movement of the slide block 63b causes the grinding processing table 117 to move in the width direction from the other side edge portion 48b toward the one side edge portion 48a of the grinding processing area 22. When the shaft of the fourteenth servomotor 120 rotates in the counterclockwise direction, the feed screw 60b rotates in the counterclockwise direction, thereby causing the slide block 63b to move in the width direction of the feed screw 60b from the one side edge portion 48a toward the other side edge portion 48b of the grinding processing area 22, and the movement of the slide block 63b causes the grinding processing table 117 to move in the width direction from the one side edge portion 48a toward the other side edge portion 48b of the grinding processing area 22.

Note that the fourteenth servomotor 120 is driven in synchronization with the fourth servomotor 61 of the cutting-in processing area 20, and the grinding processing table 117 moves from the other side edge portion 48b to the one side edge portion 48a of the grinding processing area 22 in synchronization with the movement of the cutting-in processing table 54 from the other side edge portion 48b to the one side edge portion 48a of the cutting-in processing area 20, or the grinding processing table 117 moves from the one side edge portion 48a to the other side edge portion 48b of the grinding processing area 22 in synchronization with the movement of the cutting-in processing table 54 from the one side edge portion 48a to the other side edge portion 48b of the cutting-in processing area 20.

The grinding device 118 includes a grinding jig 121, a fifteenth servomotor 122 (a grinding Z-axis servomotor), a sixteenth servomotor 123 (a lifting/lowering servomotor), a seventeenth servomotor 124 (a cutting-in servomotor), a grinding wheel lifting/lowering screw 125, and a grinding wheel cutting-in screw 126. The grinding jig 121 includes a grinding wheel 127, a grinding holder 128, a cover 129, and a spindle motor 130. The grinding wheel 127 is formed in a disk shape having a predetermined diameter and grinds the edge (circumferential edge) of the main body portion 56a of the glass plate 11 by an outer circumferential surface of the grinding wheel.

The grinding holder 128 is positioned directly above the grinding wheel 127 and rotatably supports the grinding wheel 127. The cover 129 is positioned directly below the grinding wheel 127 and covers the entire grinding wheel 127. The cover 129 is detachably attached to the grinding jig 121. The cover 129 has a slit 131 into which the edge (circumferential edge) of the main body portion 56a of the glass plate 11 is inserted. The spindle motor 130 is positioned directly above the grinding wheel 127 (the grinding holder 128) and is installed and housed in a motor housing 132. The spindle motor 130 has a shaft that is coupled to a center of the grinding wheel 127. Rotation of the shaft of the spindle motor 130 causes the grinding wheel 127 to rotate. The motor housing 132 is fixed to the first travel frame 32 via a bracket 133. A control unit that controls start/stop, revolutions per minute, or rotation speed of the spindle motor 130 is connected to the controller via a signal line.

The fifteenth servomotor 122 (a grinding Z-axis servomotor) is positioned in the vicinity of a rear side of the grinding jig 121 and is coupled and fixed to the first travel frame 32 via the bracket 133. The fifteenth servomotor 122 has a shaft that is coupled to a support shaft of the motor housing 132. The fifteenth servomotor 122 finely adjusts a posture (an angle around a shaft) of the grinding wheel 127 in an axial direction thereof such that an outer circumferential surface of the grinding wheel 127 is brought into contact with the edge (circumferential edge) of the main body portion 56a of the glass plate 11 in parallel with each other.

The sixteenth servomotor 123 (a lifting/lowering servomotor) is positioned in the vicinity of an outer side of the motor housing 132 (the spindle motor 130) in the width direction and is coupled and fixed to the motor housing 132. The sixteenth servomotor 123 has a shaft that is coupled to the grinding wheel lifting/lowering screw 125, and rotates the grinding wheel lifting/lowering screw 125. The sixteenth servomotor 123 vertically moves the grinding wheel 127 (the motor housing 132) depending on a thickness dimension of the glass plate 11 and finely adjusts a height of the grinding wheel 127 such that the height of the grinding wheel 127 matches a height of the edge of the main body portion 56a of the glass plate 11 and the outer circumferential surface of the grinding wheel 127 is brought into contact with the edge of the main body portion 56a of the glass plate 11.

In an initial setting for starting the processing of the glass plate 11, a distance from an attachment reference surface of the grinding wheel 127 to a center of a groove is input to the controller. The controller calculates revolutions per minute of the shaft of the sixteenth servomotor 123 based on the input distance and transmits the calculated revolutions per minute to a control unit of the sixteenth servomotor 123. A control unit of the sixteenth servomotor 123 rotates the shaft of the sixteenth servomotor 123 at the revolutions per minute received from the controller. When the shaft of the sixteenth servomotor 123 rotates in the clockwise direction at predetermined revolutions per minute, the grinding wheel lifting/lowering screw 125 is lowered while the screw 125 rotates in the clockwise direction, thereby causing the grinding wheel 127 (the motor housing 132) to be lowered. When the shaft of the sixteenth servomotor 123 rotates in the counterclockwise direction at the predetermined revolutions per minute, the grinding wheel lifting/lowering screw 125 is lowered while the screw 125 rotates in the counterclockwise direction, thereby causing the grinding wheel 127 (the motor housing 132) to be lifted. As long as the glass plate 11 to be processed has the same thickness dimension, once fine adjustment of the height of the grinding wheel 127 is set, no further adjustment is performed.

The seventeenth servomotor 124 (the cutting-in servomotor) is positioned directly below the sixteenth servomotor 123 (the lifting/lowering servomotor), that is, in the vicinity of an outer side of the motor housing 132 (the spindle motor 130) in the width direction, and is coupled and fixed to the motor housing 132. The seventeenth servomotor 124 has a shaft that is coupled to the grinding wheel cutting-in screw 126, and rotates the grinding wheel cutting-in screw 126. The seventeenth servomotor 124 moves the grinding wheel 127 (the motor housing 132) in the width direction depending on a diameter of the outer circumferential surface of the grinding wheel 127 and finely adjusts a cutting-in depth of the grinding wheel 127 such that the outer circumferential surface of the grinding wheel 127 is brought into contact with the edge (circumferential edge) of the main body portion 56a of the glass plate 11. A control unit that controls start/stop, revolutions per minute, or rotation speed of each of the fifteenth to seventeenth servomotors 122 to 124 is connected to the controller via a signal line.

In an initial setting for starting the processing of the glass plate 11, a diameter of the grinding wheel 127 is input to the controller. The controller calculates revolutions per minute of the shaft of the seventeenth servomotor 124 based on the input diameter of the grinding wheel 127 and transmits the calculated revolutions per minute to the control unit of the seventeenth servomotor 124. The control unit of the seventeenth servomotor 124 rotates the shaft of the seventeenth servomotor 124 at the revolutions per minute received from the controller. When the shaft of the seventeenth servomotor 124 rotates in the clockwise direction at predetermined revolutions per minute, the grinding wheel cutting-in screw 126 is moved rearward in the front-rear direction while the screw 126 rotates in the clockwise direction, thereby causing the grinding wheel 127 (the motor housing 132) to be moved rearward in the front-rear direction. When the shaft of the seventeenth servomotor 124 rotates in the counterclockwise direction at the predetermined revolutions per minute, the grinding wheel cutting-in screw 126 is moved forward in the front-rear direction while the screw 126 rotates in the counterclockwise direction, thereby causing the grinding wheel 127 (the motor housing 132) to be moved forward in the front-rear direction. As long as the grinding wheel 127 has the same diameter, once fine adjustment of a position of the grinding wheel 127 in the front-rear direction is set, no further adjustment is performed.

In the unloading area 23, unloading conveyors 134 are installed. The unloading area 23 is supported by leg portions extending upward from the floor surface of the machine base 25. The unloading conveyors 134 are a plurality of endless tracks extending in the front-rear direction (X-axis direction) and are arranged side by side by being spaced apart at predetermined intervals in the width direction (Y-axis direction). A control unit that controls start/stop or a conveyance distance of each of the unloading conveyors 134 is connected to the controller via a signal line. The unloading conveyors 134 convey the glass plate 11 in the front-rear direction from a rear end portion toward a front end portion of the unloading area 23.

Hereinafter, an example of the processing (the cutting-in processing, the bend-breaking processing, or the grinding processing) of the glass plate 11 will be described. At the time of start of the processing, the first glass plate holder 40a stands by above the loading area 19, the second glass plate holder 40b stands by above the cutting-in processing area 20, the third glass plate holder 40c stands by above the bend-breaking processing area 21, and the fourth glass plate holder 40d stands by above the grinding processing area 22.

Various types of glass plate images are displayed (output) on a touch panel (output device) connected to the controller. The specific glass plate 11 which is a processing target is clicked (tapped) (selected) from the various types of various glass plate images displayed on the touch panel. When the specific glass plate 11 is selected, the controller selects an NC control program for processing which is to be performed on the glass plate 11. The controller displays an input area of a distance from the attachment reference surface of the grinding wheel 127 to the center of the groove, an input area of a dimension of the glass plate 11 in the front-rear direction, and an input area of a diameter of the grinding wheel 127 on the touch panel.

After a distance is input in the input area of the distance from the attachment reference surface of the grinding wheel 127 to the center of the groove and a diameter is input in the input area of the diameter of the grinding wheel 127, an input button displayed on the touch panel is clicked (tapped). When the distance and the diameter are input, the controller drives the sixteenth servomotor 123 to move the grinding wheel 127 (the motor housing 132) up and down and finely adjust the height of the grinding wheel 127 and drives the seventeenth servomotor 124 to move the grinding wheel 127 (the motor housing 132) in the width direction and finely adjust the position of the grinding wheel 127 in the front-rear direction. After the fine adjustment is completed, the controller outputs (displays) a processing start button on the output device. When the processing start button is clicked (tapped), the processing of the glass plate 11 is started.

The glass plates 11 which are selected processing targets (before processing) are loaded in the loading area 19. Note that, in the loading area 19, first positioning means and second positioning means are performed. The glass plates 11 which are processing targets are automatically supplied to the loading conveyor 43 of the loading area 19 by an automatic supply device (not illustrated). In the automatic supply device, the plurality of glass plates 11 which are processing targets and have the same area (the same size) of the upper surface 12 and the lower surface 13 are stacked in the up-down direction, and the glass plates 11 are supplied one by one from the automatic supply device to the loading conveyor 43.

An example of a positioning procedure of the glass plates 11 in the loading area 19 is as follows. The controller transmits a conveyance signal (ON signal) to a control unit of the loading conveyors 43, and the control unit of the loading conveyors 43 which has received the forward signal drives the loading conveyors 43. The glass plates 11 loaded in the loading area 19 are placed on the loading conveyors 43 in a state in which the lower surfaces 13 thereof are in contact with the loading conveyors 43. The glass plate 11 has a first side edge 14 (one side edge) parallel to the one side edge portion 48a of the loading area 19, and a second side edge 15 (the other side edge) parallel to the other side edge portion 48b of the loading area 19.

The glass plate 11 placed on the loading conveyor 43 is gradually moved from a rear side to a front side of the loading area 19 by the loading conveyor 43. When the noncontact sensor installed behind the stopper 44 detects the front end edge 16 of the glass plate 11, a detection signal is transmitted to the controller, and the controller transmits a deceleration signal to the control unit of the loading conveyor 43. After the control unit of the loading conveyor 43 which has received the deceleration signal decelerates the loading conveyor 43, the front end edge 16 of the glass plate 11 is brought into contact with the stopper 44.

Next, the controller transmits a stop signal (OFF signal) to the control unit of the loading conveyor 43, and the control unit of the loading conveyor 43 which has received the stop signal stops the driving of the loading conveyor 43. The controller transmits, to the control unit of the loading conveyor 43, the second movement dimension of the loading conveyor 43 to the rear side in the front-rear direction for positioning the front-rear direction center 01 of the first side edge 14 of the glass plate 11 at the second positioning reference L2 of the loading area 19, and transmits a rearward movement signal (ON signal) to the control unit of the loading conveyor 43.

The control unit of the loading conveyors 43 which has received the second movement dimension and the rearward movement signal drive the loading conveyors 43 to move the glass plates 11 rearward in the front-rear direction by the second movement dimension by the loading conveyors 43. When the loading conveyors 43 move the glass plates 11 rearward in the front-rear direction by the second movement dimension, the front-rear direction center 01 of one side edge of the glass plate 11 in the width direction is positioned at the second positioning reference L2 in the loading area 19 (the second positioning means).

After the glass plate 11 is moved rearward in the front-rear direction by the second movement dimension, the controller transmits a stop signal (OFF signal) to the control unit of the loading conveyor 43, and the control unit of the loading conveyor 43 which has received the stop signal stops driving of the loading conveyor 43. Next, the controller transmits a lifting signal (ON signal) to a control unit of the roller lifting/lowering mechanisms 46. The control unit of the roller lifting/lowering mechanisms 46 which has received the lifting signal lifts the roller lifting/lowering mechanisms 46. When the rollers 45 are lifted due to the lifting of the roller lifting/lowering mechanisms 46, a part of a circumferential edge portion of each of the rollers 45 is exposed above the loading conveyors 43, and the glass plates 11 are lifted above the loading conveyors 43 by the rollers 45 in a state in which the lifted rollers 45 are in contact with the lower surfaces 13 of the glass plates 11.

After the lifting of the roller lifting/lowering mechanism 46 is completed, the controller transmits, to the control unit of the third servomotor 51, the revolutions per minute of the motor 51 calculated from the first movement dimension (first movement distance) of the moving mechanism 47 in the width direction for positioning the first side edge 14 of the glass plate 11 to the first positioning reference L1, and transmits a positive rotation signal (ON signal) to the control unit of the third servomotor 51. The control unit that has received the revolutions per minute of the third servomotor 51 and the positive rotation signal drives the third servomotor 51 to rotate the shaft of the motor 51 in the clockwise direction by predetermined revolutions per minute.

The rotation of the feed screw due to the rotation of the shaft of the third servomotor 51 in the clockwise direction causes the contact member 53 to be gradually moved together with the moving arm 52 from the movement start point toward one side in the width direction. The contact member 53 that moves toward the one side in the width direction is brought into contact with the second side edge 15 of the glass plate 11, and the contact member 53 presses the second side edge 15 of the glass plate 11 in the width direction to move the glass plate 11 from the other side toward the one side in the width direction. The glass plate 11 pressed by the contact member 53 is moved in the width direction on the rollers 45 from the other side toward the one side in the width direction, and the outermost side edge of the first side edges 14 of the glass plate 11 in the width direction which is positioned on the outermost side in the width direction is positioned at the first positioning reference L1 in the loading area 19 (the first positioning means).

When the movement of the contact member 53 toward the one side in the width direction is finished and the outermost side edge of the first side edge 14 of the glass plate 11 in the width direction which is positioned on the outermost side in the width direction is positioned at the first positioning reference L1 in the loading area 19, the controller transmits a stop signal (OFF signal) to the control unit of the third servomotor 51. The control unit of the third servomotor 51 which has received the stop signal stops driving of the third servomotor 51. After the driving of the third servomotor 51 is stopped, the controller transmits a reverse rotation signal (ON signal) to the control unit of the third servomotor 51. The control unit of the third servomotor 51 which has received the reverse rotation signal drives the third servomotor 51 to rotate the shaft of the third servomotor 51 in the counterclockwise direction by predetermined revolutions per minute.

Rotation of the feed screw due to the rotation of the shaft of the third servomotor 51 in the counterclockwise direction causes the contact member 53 to be gradually moved together with the moving arm 52 toward the other side in the width direction, and the contact member 53 returns to the movement start point. After the contact member 53 returns to the movement start point, the controller transmits a stop signal (OFF signal) to the control unit of the third servomotor 51 and transmits a lowering signal (ON signal) to the control unit of the roller lifting/lowering mechanisms 46. The control unit of the third servomotor 51 which has received the stop signal stops the driving of the third servomotor 51, and the control unit of the roller lifting/lowering mechanisms 46 which has received the lowering signal lowers the roller lifting/lowering mechanisms 46. When the roller lifting/lowering mechanisms 46 are lowered, the lower surface 13 of the glass plate 11 positioned by the first positioning means and the second positioning means is brought into contact with the loading conveyor 43.

After the positioning of the glass plate 11 is completed by the first positioning means and the second positioning means, the controller transmits a lowering signal (ON signal) to a control unit of a lifting/lowering mechanism of the first glass plate holder 40a. The control unit of the lifting/lowering mechanism which has received the lowering signal causes the lifting/lowering mechanism to lower the suction pad 42 toward the upper surface 12 of the glass plate 11. After the suction pad 42 of the first glass plate holder 40a is brought into contact with the upper surface 12 of the glass plate 11, the controller transmits a sucking signal (ON signal) to a control unit of the vacuum mechanism of the first glass plate holder 40a. The control unit of the vacuum mechanism which has received the sucking signal activates the vacuum mechanism.

The activation of the vacuum mechanism causes the suction pad 42 to suck the glass plate 11 positioned in the loading area 19. The controller transmits a lifting signal (ON signal) to a control unit of the pad lifting/lowering mechanism of first glass plate holder 40a. The control unit of the pad lifting/lowering mechanism which has received the lifting signal causes the pad lifting/lowering mechanism to lift the suction pad 42. The glass plate 11 positioned in the loading area 19 by the first positioning means and the second positioning means is lifted together with the suction pad 42 in a state of being sucked by the suction pad 42.

After the suction pad 42 (the glass plate 11) is lifted, the controller transmits a forward movement signal (ON signal) to the control unit of the second servomotor 39. The control unit of the second servomotor 39 which has received the forward movement signal drives the second servomotor 39. The rotation of the shaft of the second servomotor 39 causes the slide block to be moved in the front-rear direction from the rear side toward the front side of the second guide frame 35, thereby causing the first glass plate holder 40a (the glass plate 11 suctioned by the suction pad 42) to be moved from the loading area 19 to the cutting-in processing area 20 (glass plate moving means). Note that the movement of the slide block causes the second to fourth glass plate holders 40b to 40d to move forward in the front-rear direction together with the first glass plate holder 40a.

After the first glass plate holder 40a moves to the cutting-in processing area 20, the controller transmits a lowering signal (ON signal) to the control unit of the pad lifting/lowering mechanism of the first glass plate holder 40a. The control unit of the pad lifting/lowering mechanism which has received the lowering signal causes the pad lifting/lowering mechanism to lower the suction pad 42 (the glass plate 11) onto the cutting-in processing table 54 of the cutting-in processing area 20. After the glass plate 11 suctioned to the suction pad 42 of the first glass plate holder 40a is brought into contact with the cutting-in processing table 54, the controller transmits a stop signal (OFF signal) to the control unit of the vacuum mechanism of the first glass plate holder 40a. The control unit of the vacuum mechanism which has received the stop signal stops the activation of the vacuum mechanism. When the vacuum mechanism is stopped, the glass plate 11 is released from the suction to the suction pad 42, and the positioned glass plate 11 is placed on the cutting-in processing table 54. Note that, when the glass plate 11 is placed on the cutting-in processing table 54, the lower surface 13 of the glass plate 11 is suctioned and held by a suction pad (not illustrated) installed on the cutting-in processing table 54.

Next, the controller transmits a lifting signal (ON signal) to the control unit of the pad lifting/lowering mechanism of the first glass plate holder 40a, and the first glass plate holder 40a (the pad lifting/lowering mechanism) is lifted above the cutting-in processing table 54 in response to the lifting signal. After the first glass plate holder 40a is lifted, a rearward movement signal (ON signal) is transmitted from the controller to the control unit of the second servomotor 39, the rotation of the shaft of the second servomotor 39 causes the first glass plate holder 40a to be moved from the cutting-in processing area 20 to the loading area 19, and the first glass plate holder 40a stands by above the loading area 19. The second to fourth glass plate holders 40b to 40d are also moved rearward in the front-rear direction together with the first glass plate holder 40a, the second glass plate holder 40b stands by above the cutting-in processing area 20, the third glass plate holder 40c stands by above the bend-breaking processing area 21, and the fourth glass plate holder 40d stands by above the grinding processing area 22.

Since a conveyance procedure (glass plate moving means) of the glass plate 11 subjected to the cutting-in processing from the cutting-in processing area 20 to the bend-breaking processing area 21 by the second glass plate holder 40b, a conveyance procedure (glass plate moving means) of the glass plate 11 subjected to the bend-breaking processing from the bend-breaking processing area 21 to the grinding processing area 22 by the third glass plate holder 40c, and a conveyance procedure (glass plate moving means) of the glass plate 11 subjected to the grinding processing from the grinding processing area 22 to the unloading area 23 by the fourth glass plate holder 40d are the same as that of the glass plate 11 from the loading area 19 to the cutting-in processing area 20 by the first glass plate holder 40a, the descriptions of the conveyance procedures by the second to fourth glass plate holders 40b to 40d are omitted.

After the glass plate 11 is placed on the cutting-in processing table 54, the controller transmits a rearward movement signal (ON signal) to the control unit of the first servomotor 34. The control unit of the first servomotor 34 which has received the rearward movement signal drives the first servomotor 34. The rotation of the shaft of the first servomotor 34 causes the first slide block to be moved in the front-rear direction from the front side toward the rear side of the first guide frame 30, thereby causing the cutting-in device 55 together with the first travel frame 32 to be moved rearward in the front-rear direction in the cutting-in processing area 20, and the cutting-in device 55 is positioned outward from the first corner portion 18a (the front end edge 16) of the glass plate 11 in the width direction (at a cutting-in processing start position).

In the cutting-in processing, when the glass plate 11 is placed on the cutting-in processing table 54, although not illustrated, the suction pad installed on the cutting-in processing table 54 is brought into contact with the lower surface 13 of the glass plate 11, the vacuum mechanism is activated so that the suction pad suctions and holds the lower surface 13 of the glass plate 11. The following cutting-in processing is performed on the glass plate 11 in a state in which the glass plate 11 is suctioned and held by the suction pad of the cutting-in processing table 54.

After the cutting-in device 55 is positioned outward from the first corner portion 18a of the glass plate 11 in the width direction, the controller transmits a stop signal (OFF signal) to the control unit of the first servomotor 34 and transmits a drive signal (ON signal) to the control unit of the fourth servomotor 61. The control unit of the first servomotor 34 which has received the stop signal stops the first servomotor 34, and the control unit of the fourth servomotor 61 which has received the drive signal drives the fourth servomotor 61. The rotation of the shaft of the fourth servomotor 61 causes the slide block 63a to move the feed screw 60a in the width direction from the other side edge portion 48b toward the one side edge portion 48a of the cutting-in processing area 20, thereby causing the cutting-in processing table 54 to be moved in the width direction from the other side edge portion 48b toward the one side edge portion 48a of the cutting-in processing area 20, and the cutting-in cutter wheel 67 of the cutting-in device 55 is positioned at the first corner portion 18a of the glass plate 11.

After the cutting-in cutter wheel 67 of the cutting-in device 55 is positioned at the first corner portion 18a of the glass plate 11, the controller transmits a drive signal (ON signal) and an NC control signal to control units of the air cylinder 65 and the fifth servomotor 66 of the cutting-in device 55, transmits a rearward movement signal (ON signal) and an NC control signal to the control unit of the first servomotor 34, and transmits an NC control signal to the control unit of the fourth servomotor 61. The control unit of the air cylinder 65 and the control unit of the fifth servomotor 66 of the cutting-in device 55, the control unit of the first servomotor 34, and the control unit of the fourth servomotor 61 which have received the drive signals (ON signal) and the NC control signals drive the air cylinder 65, the fifth servomotor 66, the first servomotor 34, and the fourth servomotor 61, respectively, to perform a contour control motion by performing the NC control on the vicinity of the first side edge 14 (the first side edge portion) of the glass plate 11, and the cutting-in cutter wheel 67 performs the cutting-in processing on the vicinity of the first side edge 14 (the first side edge portion) of the glass plate 11 (cutting-in processing means).

By driving the air cylinder 65, the fifth servomotor 66, the first servomotor 34, and the fourth servomotor 61, the cutting-in cutter wheel 67 moves in order of the first corner portion 18a, → the second corner portion 18b, → the third corner portion 18c, → the fourth corner portion 18d, → the first corner portion 18a while forming the outline cutting-out line K1 in the glass plate 11 by the contour control motion in response to the NC control. When the cutting-in processing performed by the cutting-in cutter wheel 67 on the glass plate 11 is completed, the cutting-in device 55 moves and stands by outward (the cutting-in processing start position) from the first corner portion 18a (the front end edge 16) of the glass plate 11 in the width direction.

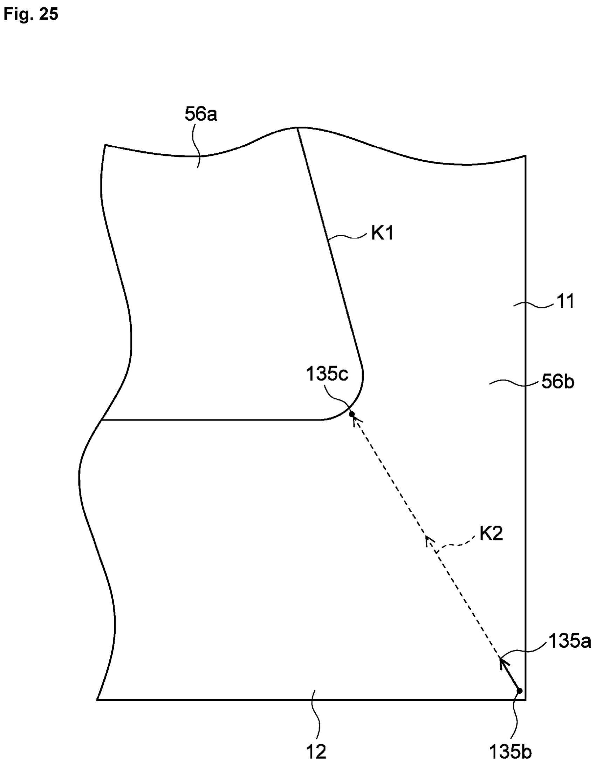

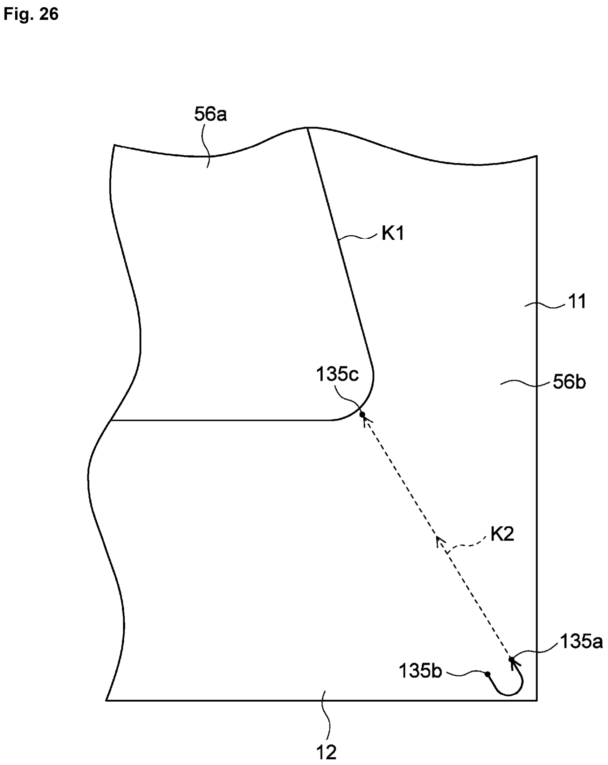

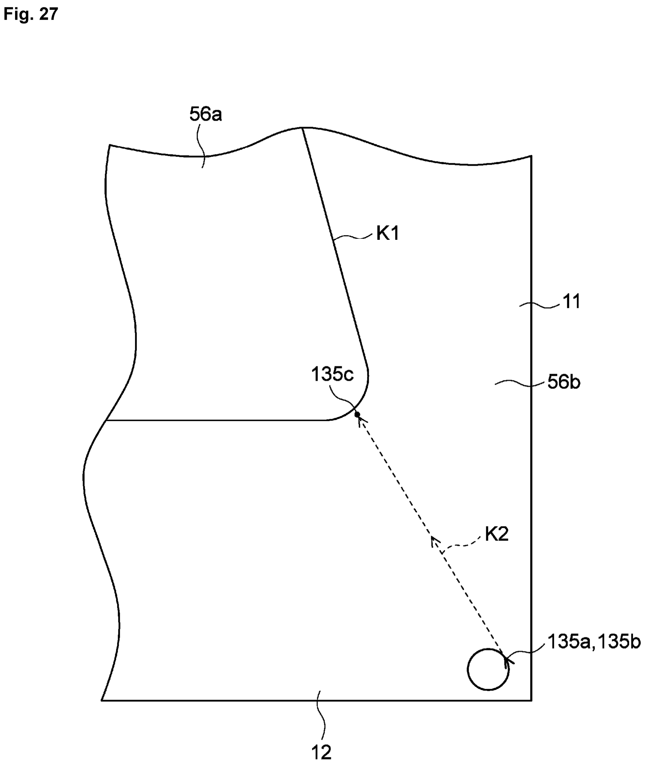

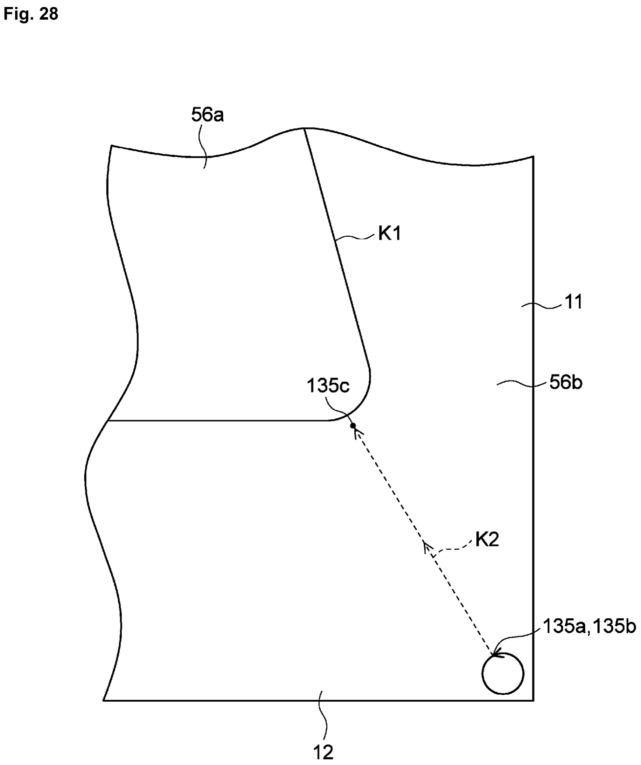

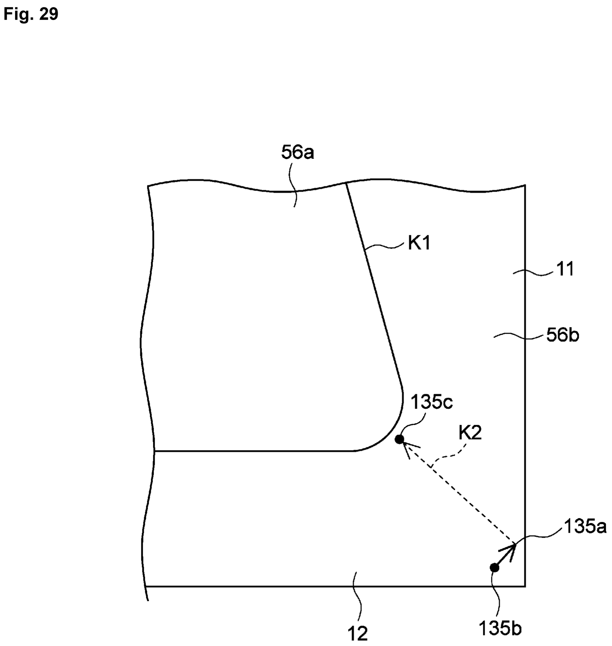

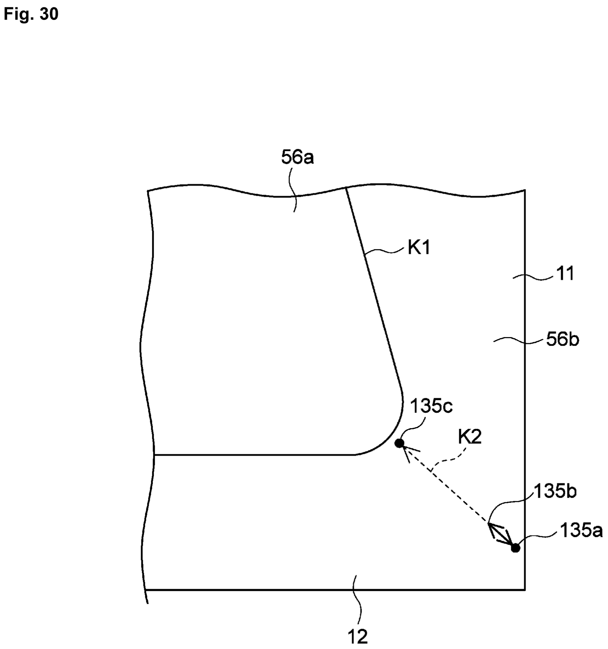

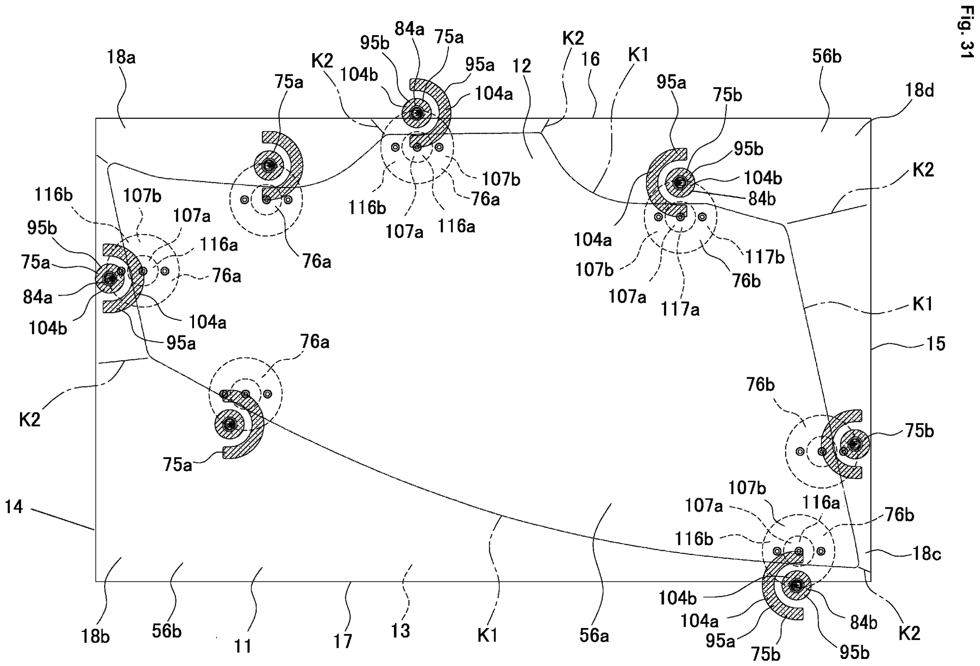

Fig. 25 is a view illustrating an example of a change in rolling direction of the bend-breaking cutter wheel 93, and Fig. 26 is a view illustrating still another example of the change in rolling direction of the bend-breaking cutter wheel 93. Fig. 27 is a view illustrating still another example of the change in rolling direction of the bend-breaking cutter wheel 93, and Fig. 28 is a view illustrating still another example of the change in rolling direction of the bend-breaking cutter wheel 93. Fig. 29 is a view illustrating still another example of the change in rolling direction of the bend-breaking cutter wheel 93, and Fig. 30 is a view illustrating still another example of the change in rolling direction of the bend-breaking cutter wheel 93. Fig. 31 is a view illustrating an example of a bend-breaking procedure in the bend-breaking processing.

After the cutting-in processing on the circumferential edge area 56b of the glass plate 11 is completed, the glass plate 11 subjected to the cutting-in processing is conveyed from the cutting-in processing area 20 to the bend-breaking processing area 21 by the second glass plate holder 40b. In the bend-breaking processing area 21, a plurality of end cutting lines K2 are formed in the circumferential edge area 56b of the glass plate 11 subjected to the cutting-in processing which extends outward from the outline cutting-out line K1, and the circumferential edge area 56b of the glass plate 11 surrounded by the outline cutting-out line K1 and the end cutting lines K2 is bend-broken.

In the bend-breaking processing, although not illustrated, the third glass plate holder 40c moved from the grinding processing area 22 to the bend-breaking processing area 21 is lowered onto the bend-breaking processing table 74 of the bend-breaking processing area 21 by the pad lifting/lowering mechanism, the suction pad 42 of the third glass plate holder 40c is brought into contact with the upper surface 12 of the glass plate 11 placed on the bend-breaking processing table 74, and the suction pad 42 of the third glass plate holder 40c presses the glass plate 11 downward while the vacuum mechanism is activated to cause the suction pad 42 to suction the glass plate 11. During the bend-breaking processing, the glass plate 11 is supported under pressure by the suction pad 42 of the third glass plate holder 40c.

After the glass plate 11 subjected to the cutting-in processing is placed on the bend-breaking processing table 74, the controller transmits drive signals (ON signals) to the respective control units of the holder lifting/lowering mechanism 94 (the first lifting/lowering mechanism), the first pressing member lifting/lowering mechanism 96a (the second lifting/lowering mechanism), the second pressing member lifting/lowering mechanism 96b (the third lifting/lowering mechanism), the sixth servomotor 85 (the X-axis servomotor), the seventh servomotor 87 (the Y-axis servomotor), the eighth servomotor 90 (the X-axis servomotor), and the ninth servomotor 91 (the Y-axis servomotor) of the first bend-breaking device 75a and the second bend-breaking device 75b. The control unit of the holder lifting/lowering mechanism 94, the control units of the first and second pressing member lifting/lowering mechanisms 96a and 96b, and the control units of the sixth to ninth servomotors 85,87,90, and 91 that have received the drive signal drive the holder lifting/lowering mechanism 94, the first and second pressing member lifting/lowering mechanisms 96a and 96b, and the sixth to ninth servomotors 85,87,90, and 91. Note that a travel command (travel signal) is transmitted from the controller to the holder lifting/lowering mechanism 94, the first and second pressing member lifting/lowering mechanisms 96a and 96b, and the sixth to ninth servomotors 85,87,90, and 91 such that the first and second bend-breaking devices 75a and 75b travel on the upper surface 12 of the glass plate 11 along a preset travel track (bend-breaking track).

In the first bend-breaking device 75a driven by the holder lifting/lowering mechanism 94, the first and second pressing member lifting/lowering mechanisms 96a and 96b, and the sixth to ninth servomotors 85,87,90, and 91, the first bend-breaking jig 84a (the bend-breaking jig) is moved in the front-rear direction and the width direction (an oblique direction) by the X-axial first actuator 86a and the Y-axial first actuator 88a, and the first bend-breaking jig 84a is positioned at a bend-breaking start position in the first (first time) end cutting line formation area on the outer side of the first corner portion 18a of the glass plate 11 in the width direction. In the second bend-breaking device 75b driven by the holder lifting/lowering mechanism 94, the first and second pressing member lifting/lowering mechanisms 96a and 96b, and the sixth to ninth servomotors 85,87,90, and 91, the second bend-breaking jig 84b (the bend-breaking jig) is moved in the front-rear direction and the width direction (an oblique direction) by the X-axial second actuator 86b and the Y-axial second actuator 88b, and the second bend-breaking jig 84b is positioned at a bend-breaking start position in the first (first time) end cutting line formation area on the outer side of the fourth corner portion 18d of the glass plate 11 in the width direction.

After the first bend-breaking jig 84a is positioned at the bend-breaking start position (on the outer side in the width direction) of the first corner portion 18a of the glass plate 11, the first bend-breaking jig 84a is moved in the front-rear direction, the width direction, and the oblique direction by the X-axial first actuator 86a and the Y-axial first actuator 88a and is moved to an end cutting line formation start point 135a that is the first (first-time) end cutting line formation position and is a position spaced at a very short distance inward from the outer circumferential edge of the circumferential edge area 56b of the glass plate 11. After the first bend-breaking jig 84a is moved to the end cutting line formation start point, the holder lifting/lowering mechanism 94 (the first lifting/lowering mechanism) operates to lower the bend-breaking cutter holder 92 toward the upper surface 12 of the circumferential edge area 56b of the glass plate 11 (holder lowering means).

After the second bend-breaking jig 84b is positioned at the bend-breaking start position (on the outer side in the width direction) of the fourth corner portion 18d of the glass plate 11, the second bend-breaking jig 84b is moved in the front-rear direction, the width direction, and the oblique direction by the X-axial second actuator 86b and the Y-axial second actuator 88b and is moved to the end cutting line formation start point 135a that is the first (first-time) end cutting line formation position and is a position spaced at a very short distance inward from the outer circumferential edge of the glass plate 11. After the second bend-breaking jig 84b is moved to the end cutting line formation start point 135a, the holder lifting/lowering mechanism 94 (the first lifting/lowering mechanism) operates to lower the bend-breaking cutter holder 92 toward the upper surface 12 of the circumferential edge area 56b of the glass plate 11 (holder lowering means). Note that the end cutting line formation start point 135a may be an outer circumferential edge of the circumferential edge area 56b of the glass plate 11, or may be a position which is above the upper surface 12 of the glass plate 11 and is spaced at a very short distance outward from the outer circumferential edge of the circumferential edge area 56b of the glass plate 11.

When the bend-breaking cutter holder 92 is lowered, the bend-breaking cutter wheel 93 is exposed downward from the through-hole 105 formed at the center of the second pressing member 95b. When the bend-breaking cutter wheel 93 is exposed downward from the through-hole 105, the bend-breaking cutter wheel 93 is brought into contact with the upper surface 12 of the glass plate 11 at the end cutting line formation start point 135a by a predetermined pressing force. At this time, the rolling direction of the bend-breaking cutter wheel 93 is not determined, the circumferential edge 101 of the bend-breaking cutter wheel 93 is directed to any one of four directions, and the rolling direction of the bend-breaking cutter wheel 93 are not parallel to the extending direction of the imaginary end cutting line in the circumferential edge area 56b of the glass plate 11. The extending direction of the imaginary end cutting line is a direction from the end cutting line formation start point 135a toward an end cutting line formation end point 135c. The end cutting line formation end point 135c is a position of the circumferential edge area 56b which is spaced at a very short distance outward from the outline cutting-out line K1.

The controller transmits travel signals (ON signals) to the control units of the sixth and seventh servomotors 85 and 87 to cause the bend-breaking cutter wheel 93 to travel (move) in a predetermined direction. The control units of the sixth and seventh servomotors 85 and 87 which have received the travel signals drive the seventh servomotors 85 and 87. The drive of the sixth and seventh servomotors 85 and 87 activates the X-axial first actuator 86a and the Y-axial first actuator 88a, and the bend-breaking cutter wheel 93 slightly travels (moves) in the predetermined direction, so that the caster effect is achieved by the bend-breaking cutter wheel 93, the bend-breaking cutter wheel 93 rotates in the direction around the cutter holder center axis line O2 (around the axis) (the clockwise direction or the counterclockwise direction), and the rolling (moving) direction of the circumferential edge 101 of the bend-breaking cutter wheel 93 is directed to the traveling (moving) direction of the first bend-breaking jig 84a (the bend-breaking cutter holder 92) (the extending direction of the imaginary end cutting line) (rolling direction changing means).

The controller transmits travel signals (ON signals) to the control units of the eighth and ninth servomotors 90 and 91 to cause the bend-breaking cutter wheel 93 to travel (move) in a predetermined direction. The control units of the eighth and ninth servomotors 90 and 91 which have received the travel signals drive the eighth and ninth servomotors 90 and 91. The drive of the eighth and ninth servomotors 90 and 91 activates the X-axial second actuator 86b and the Y-axial second actuator 88b, and the bend-breaking cutter wheel 93 slightly travels (moves) in the predetermined direction, so that the caster effect is achieved by the bend-breaking cutter wheel 93, the bend-breaking cutter wheel 93 rotates in the direction around the cutter holder center axis line O2 (around the axis) (the clockwise direction or the counterclockwise direction), and the rolling (moving) direction of the circumferential edge 101 of the bend-breaking cutter wheel 93 is directed to the traveling (moving) direction of the second bend-breaking jig 84b (the bend-breaking cutter holder 92) (the extending direction of the imaginary end cutting line) (rolling direction changing means).

Note that a travel dimension (movement dimension) of the bend-breaking cutter wheel 93 (the first and second bend-breaking jigs 84a and 84b) in the predetermined direction is 0.8 to 8 mm, preferably 1 to 5 mm. In addition, a separation dimension between the end cutting line formation start point 135a and the circumferential edge of the circumferential edge area 56b of the glass plate 11 is in a range of 1 to 15 mm, preferably in a range of 3 to 10 mm, and a separation dimension between the end cutting line formation end point 135c and the outline cutting-out line K1 is in a range of 1 to 10 mm, preferably in a range of 1 to 5 mm.

As illustrated in Fig. 25, one example of the change in rolling direction of the bend-breaking cutter wheel 93 is that, when the first bend-breaking jig 84a (the bend-breaking jig) and the second bend-breaking jig 84b (the bend-breaking jig) travel (move) linearly toward the end cutting line formation start point 135a from a rolling direction change start point 135b in the vicinity of an inner side of the outer circumferential edge of the circumferential edge area 56b which is slightly spaced outward from the end cutting line formation start point 135a (a travel dimension: 0.8 to 8 mm, preferably 1 to 5 mm), and the circumferential edge 101 of the bend-breaking cutter wheel 93 is positioned at the end cutting line formation start point 135a, the rolling (moving) direction of the circumferential edge 101 of the bend-breaking cutter wheel 93 is directed to the traveling (moving) direction of the first and second bend-breaking jigs 84a and 84b (the extending direction of the imaginary end cutting line).

In the bend-breaking device 75, the cutter wheel axis line O3 of the bend-breaking cutter wheel 93 is eccentric outward in the radial direction with respect to the cutter holder center axis line O2 of the bend-breaking cutter holder 92 (the holder main body 97), and the bend-breaking cutter wheel 93 has the caster effect. Hence, only slight linear traveling of the first bend-breaking jig 84a and the second bend-breaking jig 84b from the rolling direction change start point 135b in the vicinity of the inner side of the outer edge of the circumferential edge area 56b toward the end cutting line formation start point 135a (only slight traveling (moving) of the bend-breaking jigs 84a and 84b in a predetermined direction from the end cutting line formation start point 135a of the end cutting line K2 and the vicinity thereof) causes the bend-breaking cutter wheel 93 to rotate in the direction around the cutter holder center axis line O2 (around the axis), and the rolling (rotating) direction of the circumferential edge 101 of the bend-breaking cutter wheel 93 is directed to the traveling (moving) direction of the first and second bend-breaking jigs 84a and 84b (the extending direction of the imaginary end cutting line) such that the bend-breaking cutter wheel 93 can be reliably rotated in the direction around the cutter wheel axis line (around the axis), the rolling direction of the circumferential edge 101 of the bend-breaking cutter wheel 93 can be quickly and easily changed, and the rolling direction of the bend-breaking cutter wheel 93 can be made to be accurately parallel to the traveling direction of the bend-breaking jigs 84a and 84b (the extending direction of the imaginary end cutting line).

As illustrated in Fig. 26, another example of the change in rolling direction of the bend-breaking cutter wheel 93 is that, when the first bend-breaking jig 84a (the bend-breaking jig) and the second bend-breaking jig 84b (the bend-breaking jig) circularly (semi-circularly) travel (move) toward the end cutting line formation start point 135a from the rolling direction change start point 135b slightly spaced to a side from the end cutting line formation start point 135a (a travel dimension: 0.8 to 8 mm, preferably 1 to 5 mm), the circumferential edge 101 of the bend-breaking cutter wheel 93 turns by 180° and draws a circular track (semi-circular track), and the circumferential edge 101 of the cutter wheel 93 is positioned at the end cutting line formation start point 135a, the rolling (moving) direction of the circumferential edge 101 of the bend-breaking cutter wheel 93 is directed to the traveling (moving) direction of the first and second bend-breaking jigs 84a and 84b (the extending direction of the imaginary end cutting line).

As illustrated in Figs. 27 and 28, still another example of the change in rolling direction of the bend-breaking cutter wheel 93 is that, when the first bend-breaking jig 84a (the bend-breaking jig) and the second bend-breaking jig 84b (the bend-breaking jig) travel (move) circularly (fully circularly) toward the end cutting line formation start point 135a from the rolling direction change start point 135b in the vicinity of the end cutting line formation start point 135a (a travel dimension: 0.8 to 8 mm, preferably 1 to 5 mm), or the first bend-breaking jig 84a and the second bend-breaking jig 84b travel circularly (fully circularly) toward the end cutting line formation start point 135a from the rolling direction change start point 135b (a travel dimension: 0.8 to 8 mm, preferably 1 to 5 mm), the circumferential edge 101 of the bend-breaking cutter wheel 93 turns by 360° and draws a circular track (fully circular track), and the circumferential edge 101 of the cutter wheel 93 is positioned again at the end cutting line formation start point 135a, the rolling (moving) direction of the circumferential edge 101 of the bend-breaking cutter wheel 93 is directed to the extending direction of the imaginary end cutting line which is the traveling (moving) direction of the first and second bend-breaking jigs 84a and 84b. In Fig. 26, the end cutting line formation start point 135a is positioned at a contact point of circular tracks (fully circular tracks) drawn by the first bend-breaking jig 84a and the second bend-breaking jig 84b, and the end cutting line K2 extends in a tangential direction of the circular tracks (fully circular tracks). In Fig. 27, the end cutting line formation start point 135a is positioned on the circular tracks (fully circular tracks) drawn by the first bend-breaking jig 84a and the second bend-breaking jig 84b, and the end cutting line K2 extends in a radial direction of the circular tracks (fully circular tracks).

In the bend-breaking device 75, the first and second bend-breaking jigs 84a and 84b travel (move) circularly from the end cutting line formation start point 135a of the end cutting line K2 and the vicinity thereof and only draw the circular track (the bend-breaking jigs 84a and 84b only travel (move) slightly in a predetermined direction from the end cutting line formation start point 135a of the end cutting line K2 and the vicinity thereof), thereby causing the bend-breaking cutter wheel 93 to rotate in the direction around the cutter holder center axis line O2 (around the axis), and the rolling (rotating) direction of the circumferential edge 101 of the bend-breaking cutter wheel 93 is directed to the traveling (moving) direction of the first and second bend-breaking jigs 84a and 84b (the extending direction of the imaginary end cutting line) such that the bend-breaking cutter wheel 93 can be reliably rotated in the direction around the cutter wheel axis line (around the axis), the rolling direction of the circumferential edge 101 of the bend-breaking cutter wheel 93 can be quickly and easily changed, and the rolling direction of the bend-breaking cutter wheel 93 can be made to be accurately parallel to the traveling direction of the bend-breaking jigs 84a and 84b (the extending direction of the imaginary end cutting line).

As illustrated in Fig. 29, still another example of the change in rolling direction of the bend-breaking cutter wheel 93 is that the first bend-breaking jig 84a and the second bend-breaking jig 84b are caused to slightly travel linearly (along a linear track) from the rolling direction change start point 135b toward the end cutting line formation start point 135a (travel dimension: 0.8 to 8 mm, preferably 1 to 5 mm) so that an angle formed by a traveling line extending linearly toward the end cutting line formation start point 135a from the rolling direction change start point 135b slightly separated to a side from the end cutting line formation start point 135a and an imaginary end cutting line extending linearly from the end cutting line formation start point 135a toward the end cutting line formation end point 135c becomes 90° (or 90° or smaller), the rolling direction of the bend-breaking cutter wheel 93 is changed to an extending direction of the traveling line, then the traveling direction of the first bend-breaking jig 84a and the second bend-breaking jig 84b at the end cutting line formation start point 135a is changed to the extending direction of the imaginary end cutting line at an angle of 90° (or 90° or smaller), and the first bend-breaking jig 84a and the second bend-breaking jig 84b are caused to travel in the extending direction of the imaginary end cutting line. Note that, in Fig. 28, the case where the angle formed by the straight traveling line and the straight imaginary end cutting line becomes 90° is described, but the angle formed by the traveling line and the imaginary end cutting line may be 90° or smaller, such as 45°, 30°, or 15°.

In the bend-breaking device 75, the first bend-breaking jig 84a and the second bend-breaking jig 84b are caused at the end cutting line formation position to linearly travel from the rolling direction change start point 135b toward the end cutting line formation start point 135a on the upper surface 12 of the circumferential edge area 56b of the glass plate 11 so that an angle formed by the extending direction of the imaginary end cutting line and the traveling direction of the first bend-breaking jig 84a and the second bend-breaking jig 84b toward the end cutting line formation start point 135a in the circumferential edge area 56b of the glass plate 11 is 90° or smaller, the rolling direction of the bend-breaking cutter wheel 93 is changed to the traveling direction of the bend-breaking jig, then only a direction change of the traveling direction of the first and second bend-breaking jigs 84a and 84b at the end cutting line formation start point 135a to the extending direction of the imaginary end cutting line by an angle of 90° or smaller (only slight traveling (moving) of the bend-breaking jigs 84a and 84b in a predetermined direction from the end cutting line formation start point 135a of the end cutting line K2 and the vicinity thereof) causes the bend-breaking cutter wheel 93 to rotate in the direction around the cutter holder center axis line O2 (around the axis), and the rolling (rotating) direction of the circumferential edge 101 of the bend-breaking cutter wheel 93 is directed to the traveling (moving) direction of the first and second bend-breaking jigs 84a and 84b (the extending direction of the imaginary end cutting line) such that the bend-breaking cutter wheel 93 can be reliably rotated in the direction around the cutter wheel axis line (around the axis), the rolling direction of the circumferential edge 101 of the bend-breaking cutter wheel 93 can be quickly and easily changed, and the rolling direction of the bend-breaking cutter wheel 93 can be made to be accurately parallel to the traveling direction of the bend-breaking jigs 84a and 84b (the extending direction of the imaginary end cutting line).

As illustrated in Fig. 30, still another example of the change in rolling direction of the bend-breaking cutter wheel 93 is that slight traveling is performed linearly (along a linear track) along the imaginary end cutting line toward the end cutting line formation start point 135a from the rolling direction change start point 135b slightly separated from the end cutting line formation start point 135a toward the imaginary end cutting line (end cutting line formation end point 135c) (travel dimension: 0.8 to 8 mm, preferably 1 to 5 mm), or slight traveling is performed linearly (along a linear track) on the imaginary end cutting line toward the end cutting line formation start point 135a from the rolling direction change start point 135b slightly separated from the end cutting line formation start point 135a toward the imaginary end cutting line (end cutting line formation end point 135c) (travel dimension: 0.8 to 8 mm, preferably 1 to 5 mm), the rolling direction of the bend-breaking cutter wheel 93 is changed to the extending direction of the imaginary end cutting line, then the first bend-breaking jig 84a and the second bend-breaking jig 84b are reversed (a U-turn by 180°) at the end cutting line formation start point 135a to perform the direction change of the traveling direction of the first bend-breaking jig 84a and the second bend-breaking jig 84b to the extending direction of the imaginary end cutting line, and the first bend-breaking jig 84a and the second bend-breaking jig 84b are caused to travel in the extending direction of the imaginary end cutting line.

In the bend-breaking device 75, the bend-breaking jigs 84a and 84b are caused at the end cutting line formation position to travel from the vicinity of the end cutting line formation start point 135a toward the end cutting line formation start point 135a along the imaginary end cutting line in the circumferential edge area 56b of the glass plate 11, or the bend-breaking jigs 84a and 84b are caused to travel from the vicinity of the end cutting line formation start point 135a toward the end cutting line formation start point 135a on the imaginary end cutting line in the circumferential edge area 56b of the glass plate 11, the rolling direction of the bend-breaking cutter wheel 93 is changed to the traveling direction of the bend-breaking jig, then only a direction change of the traveling direction of the bend-breaking jigs 84a and 84b to the extending direction of the imaginary end cutting line by reversing the bend-breaking jigs 84a and 84b at the end cutting line formation start point 135a (only slight traveling (moving) of the bend-breaking jigs 84a and 84b in a predetermined direction from the end cutting line formation start point 135a of the end cutting line K2 and the vicinity thereof) causes the bend-breaking cutter wheel 93 to rotate in the direction around the cutter holder center axis line O2 (around the axis), and the rolling (rotating) direction of the circumferential edge 101 of the bend-breaking cutter wheel 93 is directed to the traveling (moving) direction of the first and second bend-breaking jigs 84a and 84b (the extending direction of the imaginary end cutting line) such that the bend-breaking cutter wheel 93 can be reliably rotated in the direction around the cutter wheel axis line (around the axis), the rolling direction of the circumferential edge 101 of the bend-breaking cutter wheel 93 can be quickly and easily changed, and the rolling direction of the bend-breaking cutter wheel 93 can be made to be accurately parallel to the traveling direction of the bend-breaking jigs 84a and 84b (the extending direction of the imaginary end cutting line).

In the bend-breaking device 75, since the first and second bend-breaking jigs 84a and 84b of the bend-breaking device 75 are moved from the end cutting line formation start point 135a on the outer circumferential edge of the circumferential edge area 56b of a glass plate 11 or in the vicinity thereof toward the end cutting line formation end point 135c in the vicinity of the outer side of the outline cutting-out line K1, and the end cutting line K2 extending from the end cutting line formation start point 135a toward the end cutting line formation end point 135c is formed at the end cutting line formation position of the circumferential edge area 56b of the glass plate 11, the end cutting line K2 having a sufficient depth can be formed at the end cutting line formation end point 135c or in the vicinity thereof, without forming the end cutting line K2 having a shallow depth at the end cutting line formation end point 135c which is the position at a very short distance outward from the outline cutting-out line K1 or the vicinity of the end cutting line formation end point, and when the circumferential edge area 56b of the glass plate 11 extending outward from the outline cutting-out line K1 is bend-broken, the bend-breaking of the glass plate 11 is transmitted from the outline cutting-out line K1 to the end cutting line formation end point 135c which is the position at a very short distance outward from the outline cutting-out line K1, and transmitted from the end cutting line formation end point 135c to the end cutting line formation start point 135a of the end cutting line K2 which is the point on the outer circumferential edge of the glass plate 11, the position at a very short distance inward from the outer circumferential edge, or the position at a very short distance outward from the outer circumferential edge above the upper surface 12 of the glass plate 11, so that the bend-breaking of the glass plate 11 in the bend-breaking processing can be transmitted from the outline cutting-out line K1 toward the end cutting line K2, and the entire circumferential edge area 56b outside of the outline cutting-out line K1 of the glass plate 11 can be smoothly and reliably bend-broken. The bend-breaking devices 75a and 75b are capable of reliably breaking the circumferential edge area 56b of the glass plate 11 at the outline cutting-out line K1 and the end cutting line K2, neatly bend-breaking the glass plate 11 along the outline cutting-out line K1, and preventing a raised edge (burr) from being produced due to insufficient bend-breaking (breaking) in the vicinity of the outer side of the outline cutting-out line K1.

While the bend-breaking device 75 makes the rolling direction of the circumferential edge 101 of the bend-breaking cutter wheel 93 become parallel to the traveling direction of the first and second bend-breaking jigs 84a and 84b (the extending direction of the imaginary end cutting line of the circumferential edge area 56b of the glass plate 11) at each of end cutting line formation positions in the circumferential edge area 56b of the glass plate 11 which is a processing target, the bend-breaking device 75 can form the end cutting lines K2 at those end cutting line formation positions and can efficiently form a plurality of end cutting lines K2 at the end cutting line formation positions in the circumferential edge area 56b of the glass plate 11 in a short time. In the bend-breaking devices 75a and 75b, the bend-breaking cutter wheel 93 itself can perform a rotational motion in the direction around the cutter holder center axis line O2 of bend-breaking cutter holder 92 (around the axis) (around the rotation center), a rotation control shaft around which the bend-breaking cutter wheel 93 itself performs the rotational motion can be set as the cutter holder center axis line O2 of the bend-breaking cutter holder 92, and an error due to eccentricity can be minimized by adjusting an angle of the rotation control shaft to the rolling direction of the bend-breaking cutter wheel 93 (the moving direction of the bend-breaking jigs 84a and 84b).

In the glass plate processing system 10, the first and second bend-breaking jigs 84a and 84b are caused to slightly travel in a predetermined direction (along the circular track or the linear track) on the upper surface 12 of the glass plate 11 in parallel with the upper surface 12 of the circumferential edge area 56b of the glass plate 11 at the end cutting line formation start point 135a or in the vicinity of the end cutting line formation start point 135a, so that the bend-breaking cutter wheel 93 exerts the caster effect, the rolling direction of the circumferential edge 101 of the bend-breaking cutter wheel 93 is changed to the traveling direction of the first bend-breaking jig 84a (the extending direction of the imaginary end cutting line), and the rolling direction of the circumferential edge 101 of the bend-breaking cutter wheel 93 is changed to the traveling direction of the second bend-breaking jig 84b (the extending direction of the imaginary end cutting line).

The rolling direction changing means changes the rolling direction of the circumferential edge 101 of the bend-breaking cutter wheel 93 to the traveling direction of the first and second bend-breaking jigs 84a and 84b (the extending direction of the imaginary end cutting lines), and after the rolling direction of the bend-breaking cutter wheel 93 becomes the same as the traveling direction of the first and second bend-breaking jigs 84a and 84b, the first bend-breaking jig 84a and the second bend-breaking jig 84b travel linearly from the end cutting line formation start point 135a toward the end cutting line formation end point 135c in the vicinity of the outline cutting-out line K1, and the bend-breaking cutter wheel 93 forms a first (first-time) linear end cutting line K2 (scribe) extending from the end cutting line formation start point 135a toward the end cutting line formation end point 135c at an end cutting line formation position of the circumferential edge area 56b of the glass plate 11 (end cutting line forming means). The first bend-breaking jig 84a and the second bend-breaking jig 84b travel at the same speed.

In the end cutting line forming means, while the first support device 76a moves in synchronization with the first bend-breaking device 75a, the bend-breaking cutter wheel 93 of the first bend-breaking jig 84a forms the end cutting line K2 in the circumferential edge area 56b of the glass plate 11 in a state in which the first and second support surfaces 116a and 116b of the first and second support members 107a and 107b support the lower surface 13 of the circumferential edge area 56b of the glass plate 11 which extends outward from the outline cutting-out line K1. In the bend-breaking device, the first and second support surfaces 116a and 116b of the first and second support members 107a and 107b support the lower surface 13 of the circumferential edge area 56b of the glass plate 11, thereby enabling the circumferential edge area 56b to be prevented from being elastically deformed, and enabling the end cutting line K2 to be reliably formed in the circumferential edge area 56b in a state in which the circumferential edge area of the glass plate 11 is horizontally held.

After the end cutting line K2 is formed at the first (first-time) end cutting line formation position of the circumferential edge area 56b of the glass plate 11, the holder lifting/lowering mechanism 94 (the first lifting/lowering mechanism) operates to lift the bend-breaking cutter holder 92 from the end cutting line formation end point 135c of the circumferential edge area 56b of the glass plate 11 (holder lifting means). After the bend-breaking cutter holder 92 is lifted by the holder lifting means, the first and second bend-breaking devices 75a and 75b are moved to the first (first-time) pressing area by the actuation of the X-axial first and second actuators 86a and 86b and the Y-axial first and second actuators 88a and 88b (bend-breaking device moving means).

After the first and second bend-breaking devices 75a and 75b are moved to the first (first-time) pressing area by the bend-breaking device moving means, as illustrated in Fig. 30, the first pressing members 95a of the first and second bend-breaking devices 75a and 75b are lowered in the up-down direction by the first pressing member lifting/lowering mechanisms 96a (the second lifting/lowering mechanisms), and the first pressing surfaces 104a of the first pressing members 95a and the first and second support surfaces 116a and 116b of the first and second support members 107a and 107b sandwich the main body portion 56a and the circumferential edge area 56b of the glass plate 11 (glass plate sandwiching means).

In the glass plate sandwiching means, when the first pressing members 95a of the first and second bend-breaking devices 75a and 75b are lowered by the first pressing member lifting/lowering mechanisms 96a, the first pressing surfaces 104a of the first pressing members 95a are brought into contact with the upper surface 12 of the circumferential edge area 56b of the glass plate 11 extending astride (across) the outline cutting-out line K1 in the vicinity outside of the outline cutting-out line K1 and the upper surface 12 of the main body portion 56a of the glass plate 11 extending in the vicinity of an inner side of the outline cutting-out line K1, the first pressing surface 104a being formed in a semi-annular shape.

In the glass plate sandwiching means, when the first and second support members 107a and 107b are lifted by the second support member lifting/lowering mechanism 108 (the fourth lifting/lowering mechanism), the second support surface 116b of the second support member 107b supports the lower surface 13 of the circumferential edge area 56b of the glass plate 11 extending astride (across) the outline cutting-out line K1 in the vicinity of the outer side of the outline cutting-out line K1 and the lower surface 13 of the main body portion 56a of the glass plate 11 extending in the vicinity of the inner side of the outline cutting-out line K1, the second support surface 116b being formed in an annular shape, and the first support surface 116a of the first support member 107a supports the lower surface 13 of the main body portion 56a of the glass plate 11 extending in the vicinity of the inner side of the outline cutting-out line K1, and the vicinity of the outer circumferential edge of the first support surface 116a supports the lower surface 13 of the circumferential edge area 56b of the glass plate 11 extending in the vicinity of the outer side of the outline cutting-out line K1, the first support surface 116a being formed in a circular shape.

After the first pressing surface 104a of the first pressing member 95a and the first and second support surfaces 116a and 116b of the first and second support members 107a and 107b sandwich the main body portion 56a and the circumferential edge area 56b of the glass plate 11 by the glass plate sandwiching means, the second support member 107b is lowered in the up-down direction in the first (first-time) pressing area by the second support member lifting/lowering mechanism 108 (the fourth lifting/lowering mechanism) (second support member lowering means). When the second support member 107b is lowered, a gap (a step between the first support surface 116a and the second support surface 116b) is formed between the lower surface 13 of the glass plate 11 and the second support surface 116b. Note that sandwiching of the main body portion 56a of the glass plate 11 by the first pressing surface 104a of the first pressing member 95a and the first support surface 116a of the first support member 107a is maintained.

After the second support member 107b is lowered by the second support member lowering means, the second pressing member 95b is lowered in the up-down direction by the second pressing member lifting/lowering mechanism 96b (the third lifting/lowering mechanism) while the sandwiching of the main body portion 56a of the glass plate 11 by the first pressing surface 104a of the first pressing member 95a and the first support surface 116a of the first support member 107a is maintained, the second pressing surface 104b of the second pressing member 95b is brought into contact with the upper surface 12 of the circumferential edge area 56b of the glass plate 11 extending in the vicinity of the outer side of the outline cutting-out line K1, the second pressing surface 104b being formed in an annular shape, and the second pressing surface 104b of the second pressing member 95b presses downward the circumferential edge area 56b of the glass plate 11 extending outward from the outline cutting-out line K1. The second pressing surface 104b presses the circumferential edge area 56b downward, thereby causing the circumferential edge area 56b to be bend-broken (edge portion bend-breaking means). In the edge portion bend-breaking means, the main body portion 56a and the circumferential edge area 56b of the glass plate 11 are separated from each other. The circumferential edge area 56b of the bend-broken (separated) glass plate 11 remains on a belt conveyor 77.

After the circumferential edge area 56b is bend-broken by the edge portion bend-breaking means in the first (first-time) pressing area, the second support member 107b is lifted in the up-down direction by the second support member lifting/lowering mechanism 108 (the fourth lifting/lowering mechanism), the first pressing member 95a is lifted in the up-down direction by the first pressing member lifting/lowering mechanism 96a (the second lifting/lowering mechanism), and the second pressing member 95b is lifted in the up-down direction by the second pressing member lifting/lowering mechanism 96b (the third lifting/lowering mechanism).

After the first and second pressing members 95a, 95b and the second support member 107b are lifted, the first and second bend-breaking devices 75a and 75b are moved to a second-time (next) end cutting line formation position in the circumferential edge area 56b of the glass plate 11 (bend-breaking device moving means). The first bend-breaking jig 84a is positioned at a bend-breaking start position of the second (next) end cutting line formation position outward in the width direction of the glass plate 11, and the second bend-breaking jig 84b is positioned at a bend-breaking start position of the second (next) end cutting line formation position outward in the width direction of the glass plate 11. Note that the first and second support devices 76a and 76b move to the bend-breaking start position of the second (next) end cutting line formation position in synchronization with the first and second bend-breaking devices 75a and 75b.

After the first and second bend-breaking devices 75a and 75b move to the bend-breaking start positions at the second (next) end cutting line formation position, the holder lifting/lowering mechanism 94 (the first lifting/lowering mechanism) operates to lower the bend-breaking cutter holder 92 toward the upper surface 12 of the circumferential edge area 56b of the glass plate 11 (holder lowering means), the bend-breaking cutter wheel 93 is exposed downward from the through-hole 105 formed at the center of the second pressing member 95b, and the bend-breaking cutter wheel 93 is brought into contact with the upper surface 12 of the glass plate 11 at the second (next) end cutting line formation position by a predetermined pressing force.

After the bend-breaking cutter holder 92 is lowered onto (brought into contact with) the upper surface 12 of the circumferential edge area 56b of the glass plate 11 at the second (next) end cutting line formation position by the holder lowering means, as described above, the first and second bend-breaking jigs 84a and 84b (the bend-breaking jigs) travel in a circular shape to draw a circular track, or the first and second bend-breaking jigs 84a and 84b travel linearly toward the end cutting line formation start point 135a, and the caster effect is achieved by the bend-breaking cutter wheel 93 such that the rolling (moving) direction of the circumferential edge 101 of the bend-breaking cutter wheel 93 is directed to the traveling (moving) direction of the first and second bend-breaking jigs 84a and 84b (the extending direction of the imaginary end cutting line) (rolling direction changing means), and the rolling (moving) direction of the circumferential edge 101 of the bend-breaking cutter wheel 93 is changed to the traveling direction of the first and second bend-breaking jigs 84a and 84b (the extending direction of the imaginary end cutting line).

The rolling direction of the circumferential edge 101 of the bend-breaking cutter wheel 93 is changed to the traveling direction of the first and second bend-breaking jigs 84a and 84b (the extending direction of the imaginary end cutting line), and after the rolling direction of the bend-breaking cutter wheel 93 becomes the same as the traveling direction of the first and second bend-breaking jigs 84a and 84b, the first bend-breaking jig 84a and the second bend-breaking jig 84b travel linearly from the end cutting line formation start point 135a toward the end cutting line formation end point 135c in the vicinity of the outline cutting-out line K1, and the bend-breaking cutter wheel 93 forms a second (next) straight end cutting line K2 (scribe) extending from the end cutting line formation start point 135a toward the end cutting line formation end point 135c at the end cutting line formation position of the circumferential edge area 56b of the glass plate 11 (end cutting line forming means).

After the end cutting line K2 is formed at the second (next) end cutting line formation position in the circumferential edge area 56b of the glass plate 11, the bend-breaking cutter holder 92 is lifted from the end cutting line formation end point 135c of the circumferential edge area 56b of the glass plate 11 by the holder lifting/lowering mechanism 94 (the first lifting/lowering mechanism) (holder lifting means). After the bend-breaking cutter holder 92 is lifted, the first and second bend-breaking devices 75a and 75b move to a second (next) pressing area (bend-breaking device moving means).

After the first and second bend-breaking devices 75a and 75b move to the second (next) pressing area, the first pressing members 95a of the first and second bend-breaking devices 75a and 75b is lowered in the up-down direction by the first pressing member lifting/lowering mechanism 96a (the second lifting/lowering mechanism), and the first pressing surfaces 104a of the first pressing members 95a and the first and second support surfaces 116a and 116b of the first and second support members 107a and 107b sandwich the main body portion 56a and the circumferential edge area 56b of the glass plate 11 in the second (next) pressing area (glass plate sandwiching means). After the first pressing surface 104a of the first pressing member 95a and the first and second support surfaces 116a and 116b of the first and second support members 107a and 107b sandwich the main body portion 56a and the circumferential edge area 56b of the glass plate 11, the second support member 107b is lowered in the up-down direction in the second (next) pressing area by the second support member lifting/lowering mechanism 108 (the fourth lifting/lowering mechanism) (second support member lowering means).

After the second support member 107b is lowered, while the sandwiching of the main body portion 56a of the glass plate 11 by the first pressing surface 104a of the first pressing member 95a and the first support surface 116a of the first support member 107a is maintained, the second pressing member 95b is lowered in the up-down direction by the second pressing member lifting/lowering mechanism 96b (the third lifting/lowering mechanism), and the second pressing surface 104b of the second pressing member 95b presses downward the circumferential edge area 56b of the glass plate 11 extending outward from the outline cutting-out line K1 in the second (next) pressing area. When the second pressing surface 104b presses the circumferential edge area 56b downward, the circumferential edge area 56b is bend-broken (edge portion bend-breaking means). A circumferential edge area 56b of the bend-broken (separated) glass plate 11 remains on the belt conveyor 77.

In the glass plate processing system 10 (the bend-breaking devices 75a and 75b), after the bend-breaking cutter wheel 93 and the first and second pressing members 95a and 95b are lifted by the holder lifting/lowering mechanism 94 (first lifting/lowering mechanism) and the first and second pressing member lifting/lowering mechanisms 96a and 96b (second and third lifting/lowering mechanisms), the first and second bend-breaking devices 75a and 75b are moved in the front-rear direction (horizontal direction), the width direction (horizontal direction), and the oblique direction (horizontal direction) on the side of the upper surface of the glass plate 11 (bend-breaking device moving means). After the second support member 107b is lifted by the second support member lifting/lowering mechanism 108 (the fourth lifting/lowering mechanism), the first and second support devices 76a and 76b are moved in the front-rear direction (horizontal direction), the width direction (horizontal direction), and the oblique direction (horizontal direction) on the side of the lower surface 13 of the glass plate 11 in synchronization with the first and second bend-breaking devices 75a and 75b (support device moving means). After the first and second bend-breaking devices 75a and 75b and the first and second support devices 76a and 76b are moved in synchronization with each other by the bend-breaking device moving means and the support device moving means, the first bend-breaking device 75a and the first support device 76a are aligned, and the second bend-breaking device 75b and the second support device 76b are aligned to perform the end cutting line forming means, the glass plate sandwiching means, and the edge portion bend-breaking means. The above-described procedure is repeated, and the entire circumferential edge area 56b of the glass plate 11 on which the end cutting lines K2 are formed is bend-broken. Note that the number of end cutting lines K2 is determined depending on the size (area) and a thickness dimension of the glass plate 11 and the shape of the main body of the glass plate 11 formed by the outline cutting-out lines K1.

After the bend-breaking processing is completed, and the glass plate 11 subjected to the bend-breaking processing is lifted upward by the third glass plate holder 40c, the controller transmits a drive signal (ON signal) to a control unit of a conveyor drive motor 78. The control unit of the conveyor drive motor 78 which has received the drive signal drives the belt conveyor 77, and the belt conveyor 77 moves from one side to the other side in the width direction. The movement of the belt conveyor 77 in the width direction causes the bend-broken circumferential edge area 56b (the circumferential edge portion) of the glass plate 11 remaining on the belt conveyor 77 to be gradually moved from one side to the other side in the width direction, and the circumferential edge area 56b falls from the belt conveyor 77 and is stored (discarded) in a dust box (not illustrated).

After the bend-breaking processing of the glass plate 11 is completed, the main body portion 56a of the glass plate 11 subjected to the bend-breaking processing is conveyed from the bend-breaking processing area 21 to the grinding processing area 22 by the third glass plate holder 40c, and the main body portion 56a of the glass plate 11 is placed on the grinding processing table 117. After the main body portion 56a is placed on the grinding processing table 117, the controller transmits a drive signal (ON signal) to the control unit of the vacuum mechanism of the grinding processing table 117 and transmits a rearward movement signal (ON signal) to the control unit of the first servomotor 34. The control unit of the vacuum mechanism which has received the drive signal drives the vacuum mechanism. The main body portion 56a of the glass plate 11 is suctioned and held by the suction pad 119 (the grinding processing table 117) by driving of the vacuum mechanism.

The control unit of the first servomotor 34 which has received the rearward movement signal drives the first servomotor 34. The rotation of the shaft of the first servomotor 34 causes the first slide block to be moved in the front-rear direction from the front side toward the rear side of the first guide frame 30, thereby causing the grinding device 118 together with the first travel frame 32 to be moved rearward in the front-rear direction in the grinding processing area 22, and the grinding device 118 is positioned outward from the first corner portion (the front edge) of the main body portion 56a of the glass plate 11 in the width direction (at a grinding processing start position). Note that the grinding device 118 moves the circumferential edge portion (the side edges and the front and rear end edges) of the main body portion 56a of the glass plate 11 in synchronization with the cutting-in device 55.

After the grinding device 118 is positioned outward from the first corner portion of the main body portion 56a of the glass plate 11 in the width direction (grinding processing start position), the controller transmits a stop signal (OFF signal) to the control unit of the first servomotor 34 and transmits a drive signal (ON signal) to the control unit of the fourteenth servomotor 120. The control unit of the first servomotor 34 which has received the stop signal stops the first servomotor 34, and the control unit of the fourteenth servomotor 120 which has received the drive signal drives the fourteenth servomotor 120.

The rotation of the shaft of the fourteenth servomotor 120 causes the slide block 63b to move the feed screw 60b in the width direction from the other side edge portion 48b toward the one side edge portion 48a of the grinding processing area 22, thereby causing the grinding processing table 117 to be moved in the width direction from the other side edge portion 48b toward the one side edge portion 48a of the grinding processing area 22, and the grinding wheel 127 of the grinding device 118 is positioned at the first corner portion of the main body portion 56a of the glass plate 11. The first corner portion of the main body portion 56a of the glass plate 11 enters the slit 131 of the cover 129 of the grinding jig 121.

After the grinding wheel 127 of the grinding device 118 is positioned at the first corner portion of the glass plate 11, the controller transmits a drive signal (ON signal) and an NC control signal to the control units of the fifteenth to seventeenth servomotors 122 to 124 of the grinding device 118, transmits a rearward movement signal (ON signal) and an NC control signal to the control unit of the first servomotor 34, and transmits an NC control signal to a control unit of the fourteenth servomotor 120. Note that the spindle motor 130 is constantly driven before the glass plate 11 is placed on the grinding processing table 117. The control unit of the fifteenth to seventeenth servomotors 122 to 124 and the control unit of the spindle motor 130, the control unit of the first servomotor 34, and the control unit of the fourteenth servomotor 120 which have received the drive signals and the NC control signals drive the fifteenth to seventeenth servomotors 122 to 124, the spindle motor 130, the first servomotor 34, and the fourteenth servomotor 120, perform the contour control motion in response to the NC control on the vicinity of one side edge (one side edge portion) of the main body portion 56a of the glass plate 11, and the grinding wheel 127 performs the grinding processing on the vicinity of the one side edge of the main body portion 56a of the glass plate 11 (grinding processing means).

The control unit of the first servomotor 34 which has received the rearward movement signal (ON signal) drives the first servomotor 34 during the grinding processing (during the cutting-in processing) to move the grinding device 118 rearward in the front-rear direction in the grinding processing area 22, and the control unit of the fourteenth servomotor 120 drives the fourteenth servomotor 120 during the grinding processing (during the cutting-in processing) to cause the grinding device 118 to reciprocate in the width direction in the grinding processing area 22. The grinding wheel 127 of the grinding device 118 moves from the first corner portion toward the second corner portion of the glass plate 11 while grinding the vicinity of one side edge (the one side edge portion) of the main body portion 56a of the glass plate 11 along the edge (the outline cutting-out line K1) of the main body portion 56a of the glass plate 11.

After the grinding wheel 127 of the grinding device 118 ends the grinding processing on the vicinity of one side edge (one side edge portion) of the main body portion 56a of the glass plate 11, and the grinding wheel 127 is positioned at the second corner portion of the main body portion 56a of the glass plate 11, the grinding processing table 117 is moved in the width direction from the one side edge portion 48a toward the other side edge portion 48b of the grinding processing area 22, and the movement of the grinding processing table 117 in the width direction causes the grinding wheel 127 to perform the grinding processing in the vicinity of the rear end edge (the rear end edge portion) of the main body portion 56a of the glass plate 11.

The driving of the fourteenth servomotor 120 and the first servomotor 34 during the grinding processing (during the cutting-in processing) causes the grinding wheel 127 of the grinding device 118 to move in order of the second corner portion 18b → the third corner portion 18c → the fourth corner portion 18d → the first corner portion 18a of the main body portion 56a while the grinding wheel 127 grinds the main body portion 56a of the glass plate 11 along the edge (the outline cutting-out line K1) of the main body portion 56a of the glass plate 11. When the grinding processing performed by the grinding wheel 127 on the main body portion 56a of the glass plate 11 is completed, the grinding device 118 moves and stands by outward (the grinding processing start position) from the first corner portion (the front end edge) of the main body portion 56a of the glass plate 11 in the width direction.

After the grinding processing on the main body portion 56a of the glass plate 11 is completed, the main body portion 56a of the glass plate 11 subjected to the grinding processing is conveyed from the grinding processing area 22 to the unloading area 23 by the fourth glass plate holder 40d. In the unloading area 23, the main body portion 56a of the glass plate 11 subjected to the cutting-in processing, the bend-breaking processing, and the grinding processing is moved forward from a rear end portion toward a front end portion of the unloading area 23 by the unloading conveyor 134, and the main body portion 56a of the glass plate 11 subjected to all the processing is unloaded from the unloading area 23.

When the main body portion 56a of the glass plate 11 subjected to all the processing is positioned on the unloading conveyor 134 of the unloading area 23, the main body portion 56a of the glass plate 11 subjected to the grinding processing is positioned on the grinding processing table 117 of the grinding processing area 22, the main body portion 56a of the glass plate 11 subjected to the bend-breaking processing is positioned on the bend-breaking processing table 74 of the bend-breaking processing area 21, the glass plate 11 subjected to the cutting-in processing is positioned on the cutting-in processing table 54 of the cutting-in processing area 20, and the glass plate 11 before processing which is positioned by the first positioning means and the second positioning means is positioned on the loading conveyor 43 in the loading area 19. As described above, in the glass plate processing system 10, the plurality of glass plates 11 are sequentially conveyed from the loading area 19 toward the unloading area 23, and the processing of the plurality of glass plates 11 is continuously performed.

In the glass plate processing system 10, there is no need to install a θ-axis servomotor and a transmission member (a pulley, a belt, or the like) transmitting a rotational force of the θ-axis servomotor to the bend-breaking cutter holder, which are installed in the glass plate processing system disclosed in Patent Literature 1, and it is possible to achieve size reduction, energy saving, and cost reduction of the glass plate processing system 10. Further, in the bend-breaking processing, there is no need to rotate the θ-axis servomotor to make the rolling direction of the circumferential edge 101 of the bend-breaking cutter wheel 93 become the same as the extending direction of the imaginary end cutting line of the circumferential edge area 56b of the glass plate 11 (the traveling direction of the first and second bend-breaking jigs 84a and 84b (the bend-breaking jigs)), and there is no need to change the rolling direction of the circumferential edge 101 of the bend-breaking cutter wheel 93 by using the θ-axis servomotor whenever the end cutting line K2 is formed. Hence, it is possible to shorten the time for the bend-breaking processing and improve the efficiency thereof in the glass plate processing system 10.

### Reference Signs List

10 Glass plate processing system
11 Glass plate
12 Upper surface
13 Lower surface
14 First side edge (one side edge)
15 Second side edge (other side edge)
16 Front end edge
17 Rear end edge
18a to 18d First to fourth corner portions
19 Loading area
20 Cutting-in processing area
21 Bend-breaking processing area
22 Grinding processing area
23 Unloading area
24 Conveyance mechanism
25 Machine base
26a, 26b First and second pillars
27 Fixed frame
28 First moving unit
29 Second moving unit
30 First guide frame
31 First guide rail
32 First travel frame
33 First guide shoe
34 First servomotor
35 Second guide frame
36 Second guide rail
37 Second travel frame
38 Guide shoe
39 Second servomotor
40a to 40d First to fourth glass plate holders
41 Pad mounting plate
42 Suction pad
43 Loading conveyor
44 Stopper
45 Roller
45a Roller
46 Roller lifting/lowering mechanism
47 Moving mechanism
48a One side edge portion
48b Other side edge portion
49 Axis
50 Rod
51 Third servomotor
52 Moving arm
53 Contact member
54 Cutting-in processing table
55 Cutting-in device
56a Main body portion
56b Circumferential edge area
57a, 57b Base lane
58a First moving mechanism
58b Second moving mechanism
59a, 59b Travel guide rail
60a, 60b Feed screw
61 Fourth servomotor
62a, 62b Guide shoe
63a, 63b Slide block (housing nut)
64 Cutting-in jig
65 Air cylinder
66 Fifth servomotor
67 Cutting-in cutter wheel
68 Cutting-in cutter holder
69 Cutter lifting/lowering shaft
70 Cutter lifting/lowering guide
71 Support shaft
72 Bracket
73 Timing belt
74 Bend-breaking processing table
75 Bend-breaking device
75a First bend-breaking device
75b Second bend-breaking device
76a First support device
76b Second support device
77 Belt conveyor
78 Conveyor drive motor
79 Belt
80 Pulley
81 Carrier roller
82 Conveyor frame
83 Suspension frame
84a First bend-breaking jig
84b Second bend-breaking jig
85 Sixth servomotor (X-axis servomotor)
86a X-axial first actuator
86b X-axial second actuator
87 Seventh servomotor (Y-axis servomotor)
88a Y-axial first actuator
88b Y-axial second actuator
89a X-axial first actuator frame
89b X-axial second actuator frame
89c Y-axial first actuator frame
89d Y-axial second actuator frame
90 Eighth servomotor (X-axis servomotor)
91 Ninth servomotor (Y-axis servomotor)
92 Bend-breaking cutter holder
93 Bend-breaking cutter wheel
94 Holder lifting/lowering mechanism
95a First pressing member
95b Second pressing member
96a First pressing member lifting/lowering mechanism (second lifting/lowering mechanism)
96b Second pressing member lifting/lowering mechanism (second lifting/lowering mechanism)
97 Holder main body
98 Holder head
99 Bearing
100 Rotation shaft
101 Circumferential edge
102 Coupling portion
103 Bracket
104a First pressing surface
104b Second pressing surface
105 Through-hole
106 Guide frame
107a First support member
107b Second support member
108 Second support member lifting/lowering mechanism (fourth lifting/lowering mechanism)
109 Tenth servomotor (X-axis servomotor)
110a X-axial third actuator
110b X-axial fourth actuator
111 Eleventh servomotor (Y-axis servomotor)
112a Y-axial third actuator
112b Y-axial fourth actuator
113a X-axial third actuator frame
113b X-axial fourth actuator frame
113c Y-axial third actuator frame
113d Y-axial fourth actuator frame
114 Twelfth servomotor
115 Thirteenth servomotor
116a First support surface
116b Second support surface
117 Grinding processing table
118 Grinding device
119 Suction pad
120 Fourteenth servomotor
121 Grinding jig
122 Fifteenth servomotor
123 Sixteenth servomotor
124 Seventeenth servomotor
125 Grinding wheel lifting/lowering screw
126 Grinding wheel cutting-in screw
127 Grinding wheel
128 Grinding holder
129 Cover
130 Spindle motor
131 Slit
132 Motor housing
133 Bracket
134 Unloading conveyor
135a End cutting line formation start point
135b Rolling direction change start point
135c End cutting line formation end point
K1 Outline cutting-out line (cutting-in line)
K2 End cutting line
L1 First positioning reference (first imaginary positioning reference line)
L2 Second positioning reference (second imaginary positioning reference line) (center line)
O1 Front-rear direction center of side edge
O2 Cutter holder center axis line
O3 Cutter wheel axis line
S Separation dimension (eccentric dimension)

## Claims

1. A bend-breaking device that uses a bend-breaking jig including a bend-breaking cutter wheel that forms an end cutting line on a glass plate which is a processing target and a bend-breaking cutter holder that supports the bend-breaking cutter wheel, forms an outline cutting-out line on the glass plate, then forms, by the bend-breaking jig, an end cutting line in a circumferential edge area of the glass plate which extends outward from the outline cutting-out line, and bend-breaks the circumferential edge area of the glass plate in which the end cutting line is formed, wherein the bend-breaking device moves the bend-breaking jig from an end cutting line formation start point on an outer circumferential edge of the glass plate or in a vicinity thereof toward an end cutting line formation end point in a vicinity outside of the outline cutting-out line, and forms, at an end cutting line formation position of the circumferential edge area of the glass plate, the end cutting line extending from the end cutting line formation start point toward the end cutting line formation end point.

2. The bend-breaking device according to claim 1, wherein the end cutting line formation start point is a position on the outer circumferential edge of the glass plate, a position at a very short distance inward from the outer circumferential edge, or a position at a very short distance outward from the outer circumferential edge, and the end cutting line formation end point is a position at a very short distance outward from the outline cutting-out line.

3. The bend-breaking device according to claim 1 or 2, wherein
the bend-breaking cutter wheel has a cutter wheel axis line which extends in an up-down direction and is eccentric outward in a radial direction with respect to a cutter holder center axis line of the bend-breaking cutter holder which extends in the up-down direction,
the bend-breaking cutter wheel is rotatable by 360° in a direction around the cutter holder center axis line with respect to the bend-breaking cutter holder, and
the bend-breaking device comprises rolling direction changing means for causing the bend-breaking jig to be parallel to an upper surface of the circumferential edge area of the glass plate and travel slightly along the upper surface from the end cutting line formation start point toward the end cutting line formation end point, or causing the bend-breaking jig to be parallel to the upper surface of the circumferential edge area of the glass plate and travel slightly along the upper surface from a vicinity of the end cutting line formation start point toward the end cutting line formation start point, rotating, in the direction around the cutter holder center axis line, the bend-breaking cutter wheel which is brought into contact with the upper surface of the circumferential edge area of the glass plate, and changing a rolling direction of the bend-breaking cutter wheel to a traveling direction of the bend-breaking jig, and end cutting line forming means for causing the bend-breaking cutter wheel to form the end cutting line at the end cutting line formation position of the circumferential edge area of the glass plate in the traveling direction of the bend-breaking jig by causing the bend-breaking jig to travel toward the end cutting line formation end point after the rolling direction changing means changes the rolling direction of the bend-breaking cutter wheel to the traveling direction of the bend-breaking jig.

4. The bend-breaking device according to claim 3, comprising:
a first lifting/lowering mechanism that lifts and lowers the bend-breaking cutter holder in an up-down direction, and
holder lowering means for lowering the bend-breaking cutter holder toward the upper surface of the circumferential edge area of the glass plate and toward the end cutting line formation start point or the vicinity thereof by the first lifting/lowering mechanism when the end cutting line is formed in the circumferential edge area of the glass plate, wherein
the rolling direction changing means lowers the bend-breaking cutter holder toward the upper surface of the circumferential edge area of the glass plate by the holder lowering means, then brings the bend-breaking cutter wheel into contact with the upper surface of the circumferential edge area of the glass plate, causes the bend-breaking jig to slightly travel from the end cutting line formation start point toward the end cutting line formation end point or causes the bend-breaking jig to slightly travel from the vicinity of the end cutting line formation start point toward the end cutting line formation start point, and changes the rolling direction of the bend-breaking cutter wheel to the traveling direction of the bend-breaking jig, and the end cutting line forming means causes the bend-breaking jig to linearly travel toward the end cutting line formation end point, after the rolling direction changing means makes the rolling direction of the bend-breaking cutter wheel become the same as the traveling direction of the bend-breaking jig, so that the bend-breaking cutter wheel forms, in the traveling direction of the bend-breaking jig, the straight end cutting line at the end cutting line formation position of the circumferential edge area of the glass plate.

5. The bend-breaking device according to claim 4, comprising:
holder lifting means for lifting, at the end cutting line formation end point, the bend-breaking cutter holder from the upper surface of the glass plate by the first lifting/lowering mechanism after the end cutting line forming means forms the end cutting line at the end cutting line formation position of the circumferential edge area of the glass plate; and
jig moving means for moving the bend-breaking jig to a next end cutting line formation position of the circumferential edge area of the glass plate after the holder lifting means lifts the bend-breaking cutter holder, wherein
after the jig moving means moves the bend-breaking jig to the next end cutting line formation position, the holder lowering means lowers, at the next end cutting line formation position, the bend-breaking cutter holder toward the upper surface of the circumferential edge area of the glass plate and toward the end cutting line formation start point or the vicinity thereof by the first lifting/lowering mechanism,
after the holder lowering means lowers, at the next end cutting line formation position, the bend-breaking cutter holder toward the upper surface of the circumferential edge area of the glass plate, the rolling direction changing means brings the bend-breaking cutter wheel into contact with the upper surface of the circumferential edge area of the glass plate, causes, at the next end cutting line formation position, the bend-breaking jig to slightly travel from the end cutting line formation start point toward the end cutting line formation end point on the upper surface of the circumferential edge area of the glass plate or causes, at the next end cutting line formation position, the bend-breaking jig to slightly travel from the vicinity of the end cutting line formation start point toward the end cutting line formation start point on the upper surface of the circumferential edge area of the glass plate, and changes the rolling direction of the bend-breaking cutter wheel to the traveling direction of the bend-breaking jig, and
the end cutting line forming means causes, at the next end cutting line formation position, the bend-breaking jig to linearly travel toward the end cutting line formation end point, after the rolling direction changing means makes the rolling direction of the bend-breaking cutter wheel become the same as the traveling direction of the bend-breaking jig, so that the bend-breaking cutter wheel forms, in the traveling direction of the bend-breaking jig, the straight end cutting line at the next end cutting line formation position of the circumferential edge area of the glass plate.

6. The bend-breaking device according to any one of claims 3 to 5, wherein the rolling direction changing means changes the rolling direction of the bend-breaking cutter wheel to the traveling direction of the bend-breaking jig by causing the bend-breaking jig at the end cutting line formation start point to draw a circular track toward the end cutting line formation end point or causing the bend-breaking jig to draw a circular track from the vicinity of the end cutting line formation start point toward the end cutting line formation start point.

7. The bend-breaking device according to any one of claims 3 to 5, wherein the rolling direction changing means causes, at the end cutting line formation position, the bend-breaking jig to linearly travel from the vicinity of the end cutting line formation start point toward the end cutting line formation start point on the upper surface of the circumferential edge area of the glass plate so that an angle formed by an extending direction of an imaginary end cutting line and the traveling direction of the bend-breaking jig toward the end cutting line formation start point in the circumferential edge area of the glass plate is 90° or smaller, changes the rolling direction of the bend-breaking cutter wheel to the traveling direction of the bend-breaking jig, then performs, at the end cutting line formation start point, a direction change of the traveling direction of the bend-breaking jig to the extending direction of the imaginary end cutting line by an angle of 90° or smaller, and causes the bend-breaking jig to travel in the extending direction of the imaginary end cutting line.

8. The bend-breaking device according to any one of claims 3 to 5, wherein the rolling direction changing means causes the bend-breaking jig to travel along an imaginary end cutting line in the circumferential edge area of the glass plate at the end cutting line formation position from the vicinity of the end cutting line formation start point toward the end cutting line formation start point or causes the bend-breaking jig to travel on the imaginary end cutting line in the circumferential edge area of the glass plate from the vicinity of the end cutting line formation start point toward the end cutting line formation start point, changes the rolling direction of the bend-breaking cutter wheel to the traveling direction of the bend-breaking jig, then reverses the bend-breaking jig at the end cutting line formation start point to perform a direction change of the traveling direction of the bend-breaking jig to the extending direction of the imaginary end cutting line, and causes the bend-breaking jig to travel in the extending direction of the imaginary end cutting line from the end cutting line formation start point toward the end cutting line formation end point.

9. The bend-breaking device according to any one of claims 3 to 8, wherein
the bend-breaking jig includes a pressing member that presses the circumferential edge area of the glass plate in which the end cutting line is formed, and a second lifting/lowering mechanism that lifts and lowers the pressing member, and
the bend-breaking device comprises pressing bend-breaking means that bend-breaks the circumferential edge area of the glass plate from a main body of the glass plate by lowering the pressing member toward the circumferential edge area of the glass plate by the second lifting/lowering mechanism and pressing the circumferential edge area of the glass plate downward by the pressing member, after the bend-breaking cutter wheel forms the end cutting line at the end cutting line formation position of the circumferential edge area of the glass plate.
